(19) Europäisches Patentamt

European Patent Office

Office européen des brevets

(11) **EP 0 660 289 B1**

(12) **EUROPEAN PATENT SPECIFICATION**

(45) Date of publication and mention
of the grant of the patent:
**04.10.2001 Bulletin 2001/40**

(51) Int Cl.⁷: **G08G 1/0969**, G09B 29/10,
G01C 21/20

(21) Application number: **94119842.6**

(22) Date of filing: **15.12.1994**

(54) **Map display system**

Kartenanzeigesystem

Système de visualisation des cartes

(84) Designated Contracting States:
**DE FR GB**

(30) Priority: **27.12.1993 JP 33282293
27.12.1993 JP 33282593
29.12.1993 JP 35132293
25.01.1994 JP 614494**

(43) Date of publication of application:
**28.06.1995 Bulletin 1995/26**

(73) Proprietor: **AISIN AW CO., LTD.
Anjo-shi Aichi-ken 444-11 (JP)**

(72) Inventors:
• **Moroto, Syuzo
Nagoya-shi, Aichi-ken 458 (JP)**
• **Sumiya, Koji
Nishio-shi, Aichi-ken 445 (JP)**
• **Ito, Yasunobu
Okazaki-shi, Aichi-ken 486 (JP)**
• **Yamada, Kunihiro
Anjo-shi, Aichi-ken 446 (JP)**
• **Nimura, Mitsuhiro
Okazaki-shi, Aichi-ken 444 (JP)**
• **Yano, Takeshi
Okazaki-shi, Aichi-ken 444 (JP)**

(74) Representative: **VOSSIUS & PARTNER
Siebertstrasse 4
81675 München (DE)**

(56) References cited:
WO-A-86/02764          WO-A-92/14215
GB-A- 2 100 001          GB-A- 2 102 259
US-A- 5 117 363

• **PATENT ABSTRACTS OF JAPAN vol. 017 no.
588 (P-1634) ,27 October 1993 & JP-A-05 173477
(FUJITSU TEN LTD) 13 July 1993,**

## Description

The present invention relates to a map display system suited for setting a route from an arbitrary starting point (or present point) to a goal and for easily designing the route to the goal.

A navigation system for the map display system has a function to search the optimum route to the goal thereby to make a guidance to the goal along the searched route. For this function, there have been proposed a variety of systems for displaying the searched route on a map screen.

The navigation system of the prior art is enabled to design the course by inputting the goal, but its starting point never fails to be the information coming from the GPS, i.e., the present point.

At the time of setting the goal, those navigation systems set the point by manually scrolling the map, by referring to lists of different genres or by calling a point registered in advance. At the reception of the GPS at the vehicle, the direction and straight distance from the present point to the goal are then calculated and displayed. With reference to this display, the user intends to reach the goal by selecting the road and direction to be followed. In the VNS system having a searching function, on the other hand, if the goal is registered as above, a recommendable route from the present point is automatically searched to make a guidance to the goal with a voice and a picture.

The navigation system of this kind is disclosed in Japanese Patent Laid - Open No. 66131/1993, for example.

However, the system of the prior art has failed to make a course design while imagining an arbitrary starting point, i.e., a virtual starting point. In other words, the conventional system cannot satisfy the desire for making a course design to the goal in advance by exemplifying the starting point by a place apart from the present point. Thus, the course cannot be planned on the basis of a route by setting the route by inputting arbitrary starting point and goal, i.e., two arbitrary points freely.

In the prior art, moreover, a recommendable route can be displayed, but the screen has to be manually scrolled along a road to be observed, when it is desired to confirm the route before the start of drive. The manual scroll sequentially moves the ahead screen in the selected direction while the button or joy stick of a controller or any of (generally) eight- direction touch switches of the display is being stroked. However, the user is seriously troubled to manipulate the controller or the like at all times while noticing the movement of the map displayed on the screen.

In either case, the information is the straight distance, direction or recommendable route from the present point as detected from the GPS received information or the sensor information at the vehicle side, so that the specifications provide inconveniences for use in case the route is to be planned from an arbitrary point to another arbitrary point.

As to the calculation of required time period, on the other hand, there can be generally conceived a method of calculating the required time period by storing intrinsic average speed data according to the kinds of roads such as expressways or general national roads and by detecting the distances of the roads of the individual kinds on the set route or searched route from the map data. Since, however, the aforementioned method is provided with only the average vehicle speed data intrinsic to the individual kinds of roads, the average speed may become different under the various conditions such as the number of intersections per unit distance, the number of lanes, the days of the week, the time zones, the degree of business and the number of curves even for the same road such as an expressway or a trunk national road. This raises a disadvantage that the estimated value of the required time period is seriously different from the actual one.

DE-A1-4118603 discloses a navigation apparatus for cars. The navigation apparatus comprises a display unit for displaying map information. On the screen of the display unit the present car position is shown. Furthermore, a route to a predetermined goal is displayed in its whole length starting the route at the present car position.

WO-A-86/02 764 teaches to output guidance information in some kind of virtual run mode. However, the navigation apparatus disclosed is automatically switched to the virtual run mode as soon as the vehicle has stopped.

An object of the present invention is to provide a map display system which can easily design a route from an arbitrary starting point to a goal.

The object is achieved by the features of the claims.

According to the present invention, there is provided a map display system which comprises : point setting means for setting at least two arbitrary points ; route setting means for setting a route between the two set points ; display means for displaying the set route ; scroll instructing means for scrolling the display screen displayed on said display means along the set route ; and scroll control means for scrolling the display screen along the set route in response to the instruction of said scroll instructing means, wherein said map display system has a navigation mode, in which information necessary for the navigation of a vehicle is detected to guide the vehicle along the set route, and a virtual run mode in which a virtual run is made on the set route by scrolling the map with the vehicle position being fixed.

The route setting means sets the route between at least the two arbitrary points set by the point setting means, e.g., between the virtual present point and the goal, and displays the set route on the map screen. In the case of a virtual run along the set route, if the instruction is made by the scroll instructing means, the display screen scrolls along the set route to establish a situation as if the vehicle were running on the route.

Since, moreover, the scrolling is accomplished with the vehicle position being fixed on the route on the map display screen, the map scrolling reference point is cleared to make the display screen understandable.

In the display of the route information on the screen at the virtual running time, on the other hand, the required time period and the covered distance of the actual run can be accurately estimated to aid in selecting whether the route having toll roads in priority or the route having general roads in priority is to be used.

According to the present invention, the system can be transported between the home and the vehicle. The designed course information is stored in the recording medium, and this medium can be read for use in the system installed on the vehicle, so that the drive plan made in advance while enjoying the journey feeling at home can be easily used in the vehicle during the driving.

Fig. 1 is a system construction diagram of a map display system according to the present invention ;

Fig. 2 is a construction diagram of a hardware of the map display system according to the present invention :

Fig. 3 is an explanatory diagram of an operating procedure and a screen transition of the map display system according to the present invention ;

Fig. 4 presents explanatory diagrams of a startup screen ;

Fig. 5 is a construction diagram showing one example of an entire route display screen ;

Fig. 6 is a construction diagram showing one example of a basic screen of a virtual run ;

Fig. 7 is a construction diagram showing one example of a route information screen ;

Fig. 8 is a construction diagram showing one example of a main menu display screen ;

Fig. 9 is a construction diagram showing one example of a point set menu display screen ;

Fig. 10 is a construction diagram showing a search condition menu display screen ;

Fig. 11 is a construction diagram showing one example of a present position display screen of the entire route ;

Fig. 12 is a construction diagram showing one example of a speed setting screen ;

Fig. 13 is a flow chart showing the entire routine of an system ;

Fig. 14 is a flow chart following the entire processing flow of the system shown in Fig. 13 ;

Fig. 15 presents a flow chart showing a goal or point setting routine and a file calling routine by key strokes ;

Fig. 16 is a diagram showing a startup screen in a navigation mode ;

Fig. 17 presents diagrams showing a main menu display screen at a virtual running time ;

Fig. 18 is a diagram showing a file calling display screen when a file is selected in the main menu ;

Fig. 19 is a flow chart showing a routine from the startup of the system to the display of the searched result in the entire routine of the system ;

Fig. 20 is a flow chart showing a routine from a map screen display to a map scroll in the virtual run mode ;

Fig. 21 is a flow chart showing a routine from a decision of a map scale to a selection of an entire route screen ;

Fig. 22 is a flow chart showing a routine from a selection of a routine information screen to a memory storage of a route ;

Fig. 23 is a flow chart showing the entire routine of the system including a scroll control ;

Fig. 24 is a flow chart showing a routine of a single - action automatic scroll control ;

Fig. 25 is a flow chart showing a routine of a manual scrolling control ;

Fig. 26 is an explanatory diagram of a map data ;

Fig. 27 is a flow chart of a display routine of a virtual run present point at Step 304 of Fig. 22 ;

Fig. 28 is an explanatory diagram of a speed control display screen and a speed control key ;

Fig. 29 is an explanatory diagram tabulating a map reduced scale and a speed magnification ;

Fig. 30 is an explanatory diagram relating to a data structure of a searched route ;

Fig. 31 is an explanatory diagram tabulating one example of a set value of vehicle speed corresponding to the road kind between the nodes of a searched route ;

Fig. 32 is an explanatory diagram of the case in which a set vehicle speed value corresponding to each road kind is to be stored independently of the map data of a searched route ;

Fig. 33 is a flow chart showing a processing flow of a scroll control ;

Fig. 34 is a flow chart showing a step - scrolling flow to be started by operating a step - scrolling key or the like arranged on a controller ;

Fig. 35 is an explanatory diagram of the step scroll setting screens and a screen transition of the operating procedure ;

Fig. 36 is an explanatory diagram showing one example of a menu display screen for selecting the step scroll and the speed control ;

Fig. 37 is a flow chart showing the step - scrolling flow to be started by the menu shown in Fig. 35 and the operation of a joy stick ;

Fig. 38 is a flow chart showing the processing flow subsequent to that of Fig. 37 ;

Fig. 39 is a flow chart of displaying a distance, speed and a required time period ;

Fig. 40 is a flow chart of a speed deciding routine ;

Fig. 41 presents diagrams plotting the relations between average speeds according to functions (A) and (B) and the numbers of signal intersections per unit distance ;

Fig. 42 is a diagram tabulating specific examples of the average speed data of individual road kinds ;

Fig. 43 is a flow chart of an elapsed time period displaying routine ;

Fig. 44 is a flow chart of a virtual present point time displaying routine ;

Fig. 45 is a flow chart of a running distance and remaining distance displaying routine ;

Fig. 46 is a diagram for explaining one embodiment of a navigation system to which is applied the map display system of the present invention ;

Fig. 47 is a diagram showing a construction example of the route data stored with the information relating to an intersection array of a searched route ;

Fig. 48 is a diagram showing an example of a search area for setting a detour in the searched route ;

Fig. 49 is a diagram showing a construction example of the individual portions of the navigation system having a detour searching function ;

Fig. 50 is a diagram for explaining the entire processing flow of a route guide system ;

Fig. 51 is a diagram for explaining a detour searching flow;

Fig. 52 presents diagrams for explaining an example for setting the search area by designating an intersection on the route ;

Fig. 53 presents diagrams for explaining an ex ample for setting the search area by designating an arbitrary area ;

Fig. 54 presents diagrams for explaining an example for setting the search area automatically ;

Fig. 55 is a diagram showing an example of the subroutine for searching a detour point ;

Fig. 56 is a diagram showing an example of the subroutine for selecting a search route ;

Fig. 57 is a diagram for explaining a processing flow including the detour search in the case of a virtual running system ;

Fig. 58 is a diagram for explaining one embodiment of the navigation system to which is applied the map display system of the present invention ;

Fig. 59 presents diagrams showing a construction example of a road data and a layer No. - search distance corresponding table ;

Fig. 60 is a diagram showing an example of the layer display area which is determined from the distance relation between a starting point and a goal ;

Fig. 61 presents diagrams showing examples of the screen display to be changed according to the run from the starting point to the goal ;

Fig. 62 is a diagram for explaining a goal inputting routine ;

Fig. 63 is a diagram for explaining a processing routine at a running time ; and

Fig. 64 is a diagram showing an example of the layer display area which is determined from the distance relation among the starting point, the transit point and the goal.

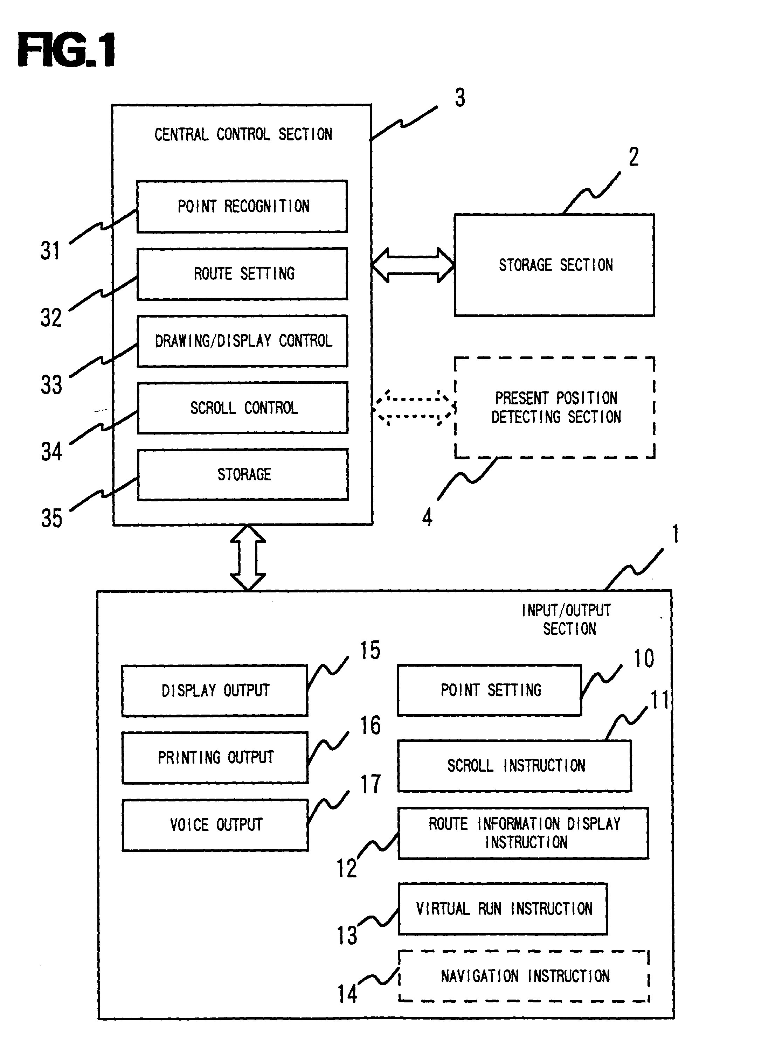

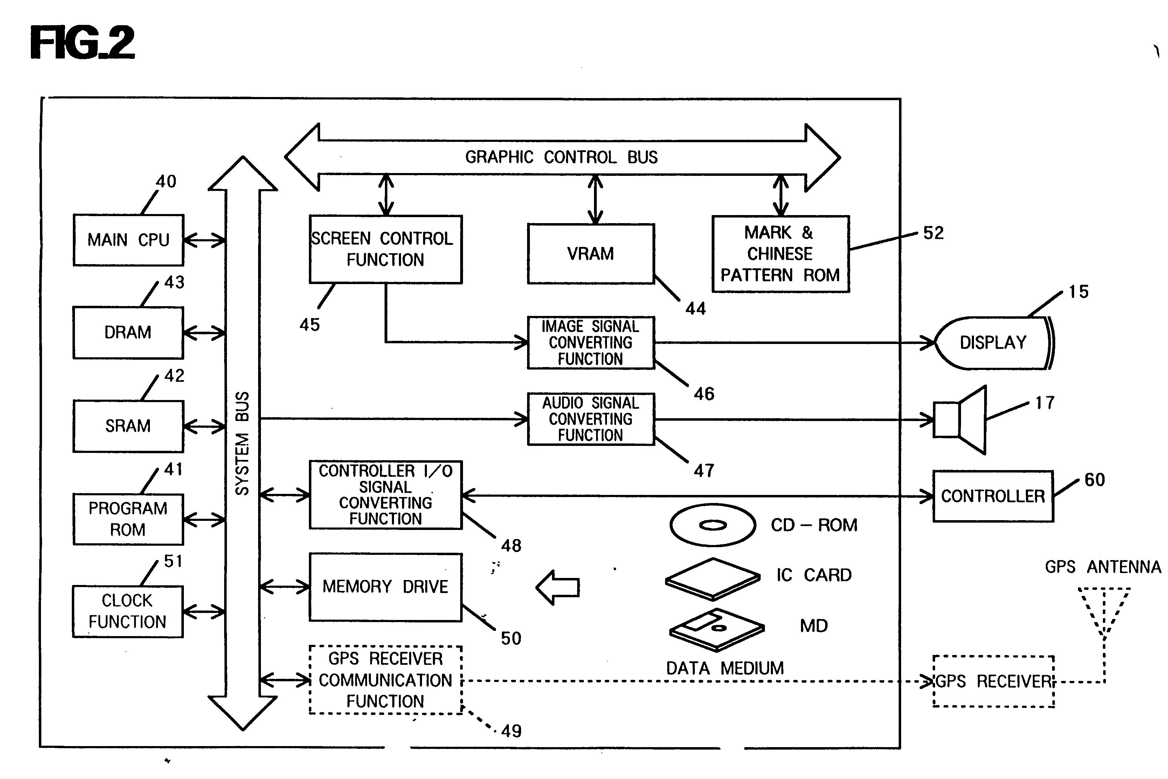

The present invention will be described in the following in connection with its embodiment with reference to the accompanying drawings. Fig. 1 shows a construction of means for realizing the functions of a map display system of the present invention. Fig. 2 shows a system construction in case the function realizing means of Fig. 1 is embodied by an EPU system. Incidentally, the means, as enclosed by dotted lines in Fig. 1, is a component necessary for the case in which the system is used as a navigation system, but can naturally be used in the home use mode (or home type).

The present embodiment is exemplified by a home type map display system for aiding in confirming the run to a goal in advance or in designing the route in a place such as the home other than in the vehicle, but can also be used as a navigation system to be mounted on the vehicle to guide the run along a searched route. Here will be described the map display system which is given a virtual running function (as will be called the "virtual run mode") for virtually running on the display screen along the searched route and a navigation function (as will be called the "navigation mode") for guiding the run on the basis of a navigation information such as the present point, speed and forward direction of the vehicle.

In Fig. 1, the map display system is constructed to include : an input/output section 1 for inputting/outputting the information necessary for the virtual run mode and the navigation mode; a data medium or media (storage section) 2 stored with map data necessary for calculating the route and data necessary for confirming the route ; and a central control section 3 for executing the route search for searching a route between at least two points and the procedure of the two modes thereby to control the entire system.

The input/output section 1 is composed of : point setting means 10 for inputting at least two points, e.g., a starting point and a goal of the starting point, the transit point and the goal ; scroll instructing means 11 for instructing the scroll of the display screen along the searched route ; route information display instructing means 12 for instructing the display of the route information ; virtual run instructing means 13 for instructing the virtual run on the basis of the searched route ; navigation instructing means 14 for instructing the navigation on the basis of the searched route ; display means 15 for displaying the searched route and the route information on the screen ; printing output means 16 for outputting the data necessary for guiding, confirming and designing the route, the route information and the map screen to a printer; and voice output means 17 made of a speaker for guiding the route in a voice.

In order that the above - enumerated means may display the route information in the voice or on the screen, when desired by the user, may instruct the scrolling the screen displayed along the searched route or may display a peripheral map of a certain point on the screen, the central control section 3 can be instructed to display the map in accordance with the will of the user, and the processed data or the like can be outputted to the printer, spoken from the speaker or outputted to the display by the printing output means 16.

Here will be described the constructions of the individual means. The point setting means 10 is composed of control switches for inputting the starting point (or present point) and the goal in terms of their addresses, telephone Nos. and coordinates and for requesting the route confirmation. The display means 15 is composed of a color CRT or a color liquid crystal display for displaying in colors all the screens that are necessary for the navigations and virtual runs such as the point setting screen, the route guiding screen, the section screen or the intersection screen on the basis of the map data and guide data processed by the central control section 3. The route guiding screen is equipped with screens for displaying at least the entire route map, the route information and the peripheral map.

The point setting or screen controlling means is composed of a display having a touch switch (or soft switch) for emitting, when a function button displayed on the screen, a signal corresponding to the function, a controller having a push button switch (or hard switch) arranged on the panel for emitting signal corresponding to the function when stroked, or a remote control for making a remote control possible.

On the other hand, the output means is composed of : a display for displaying a screen for a request of the user or for the automatic route guidance ; a printer for printing the data processed by the central control section and the data stored in the storage medium ; and a speaker for outputting the route guidance in the navigation mode, the route confirmation in the virtual run mode, the background music in the virtual run, the effect sound and the guidance of major names in the voices. The effect sound is exemplified by the running sound having its tone changed with the vehicle speed, or the winker sound at the time of turning to the left or right. Moreover, the major names are exemplified by the IC to pass, the toll road or the route number.

The global positioning system (GPS) receiver is enabled either to acquire the present point of the present system by mounting it as the navigation system on the vehicle or to effect the virtual run by registering the home position, for example, to use the home as the starting point in case it is used at home.

The medium is made of the CD - ROM, IC card or magnetooptic disc and stored with all the data necessary for the route guidance and route design such as the maps, intersections, nodes, roads, photographs, goal points, guide points, detailed goals, road names, branches, display guides, voice guides or speed limits for the roads. Moreover, the auxiliary information includes the goal information and the tariffs of the toll roads.

The central control section 3 is constructed to include : point recognizing means 31 for judging whether or not the present system can handle at least two points inputted, to recognize the two points ; route setting means 32 for setting the route on the basis of the recognized points ; drawing/display control means 33 for drawing a map to display the set route on the display and for displaying the map concerning the route information designated by the user or the processed data on the screen ; scroll control means 34 for controlling the screen to realize the virtual run designated by the user at the time of executing the virtual run mode ; and storage means 35 stored with all the data necessary for the navigation mode and the virtual run mode.

The means composing the aforementioned central control section is realized by the EPU system, as shown in Fig. 2. Specifically, the means includes : a main CPU 40 for executing the arithmetic procedure ; a program ROM 41 stored with the program for searching the route, the program for controlling the display necessary for the route guidance and the voice output control necessary for the voice guidance, and the data necessary for the programs ; a SRAM 42 for storing the information to guide the set route and the data being arithmetically processed ; a DRAM 43 stored with the display information data necessary for the route guidance and the map display ; a VRAM 44 for storing the image data to be used for the display ; an image control part 45 for writing the image data in the VRAM in response to the command from the CPU and for sending the display data from the VRAM to an image signal converting part 46 ; the image signal converting part 46 for converting the RGB digital signal to be outputted from the image control part, into an RGB analog signal or video signal in conformity to the specifications of the display ; a GPS receiver communication part 49 for converting the electric specifications of the communication data such as the positional information sent from the GPS receiver, such that they can be read out by the main CPU ; a controller input/output signal converting part 48 for converting the signal to be transferred with the controller disposed outside ; a memory driver 50 constituting the data reader of the storage ; a clock part 51 for filling the date and time in the internal diagnostic information ; and a ROM 52 stored with marks and kanji patterns to be used for displaying the route information.

The controller 60 is equipped with a variety of function button switches necessary for controlling the point setting and the screen controls from a remote place so that the functions of setting the point, selecting the reduced map scale, displaying the map and displaying the menu can be accomplishing by stroking the keys.

The present system is so constructed that the driver can select the screen display and/or the voice output for the route guidance.

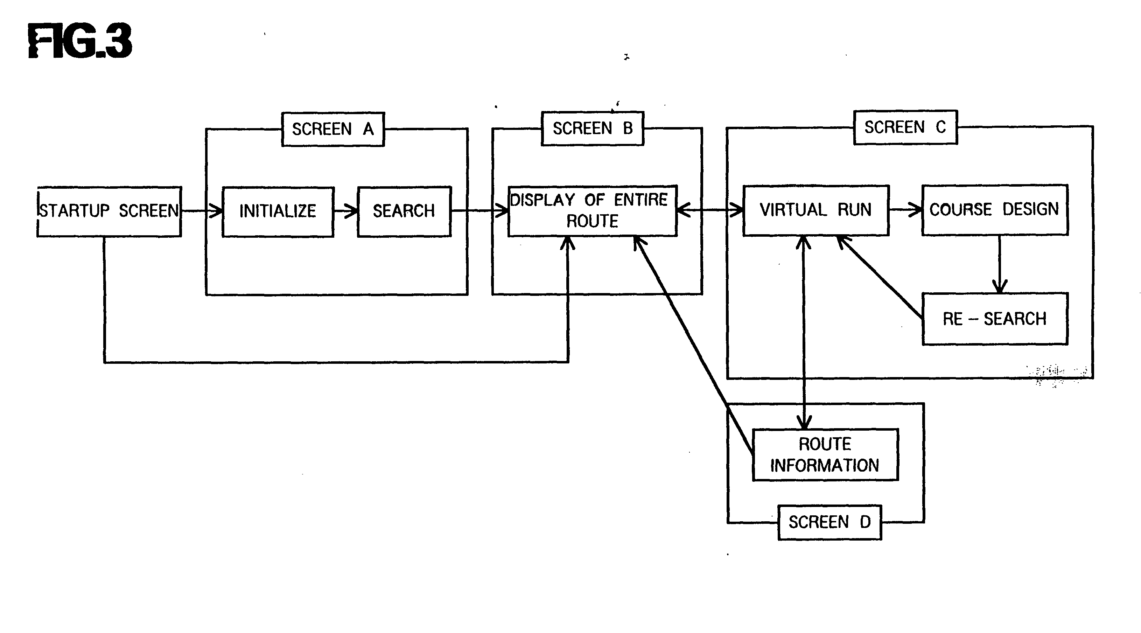

Here will be described the virtual run mode. Fig. 3 shows a routine of the virtual run mode to which is applied the map display system according to an embodiment of the present invention. When the power of the present system is turned ON, the start screen is displayed at first to display a menu for selecting how the route of the virtual run mode is to be set. In case there is prepared a file, the entire route display screen is displayed by designating the corresponding file while omitting the route search. In the absence of the corresponding file, on the other hand, the point setting screen is displayed, in which is displayed the window of a sub - menu for setting a point such as the goal or starting point, and the route search is executed by designating and (initially) setting the point in the sub - menu. When this route search is ended, the entire route is displayed in the screen.

When the execution key (or start button) is stroked from the entire route display screen, the virtual run screen is opened to display the vehicle on the route generally at the center. With the display vehicle being positioned at the center of the screen, the map display is scrolled backward of the vehicle to establish a situation in which the vehicle is running as if it ran along the route. For scrolling the map screen at the virtual running time, there can be employed a method, in which the map is scrolled with the vehicle being fixed upward of the screen or, so to speak, headed up, or a method in which the map is scrolled by turning the vehicle by 360 degrees with the azimuth such as the north N being fixed upward of the screen.

While the virtual run is being executed in the virtual run screen, the course can be designed in advance while considering a detour to a place out of the route in the course of the route, the change in the route and a rest at some place. Especially in case the route is to be changed, the search is executed again (for re - search), and the virtual run is executed again along the re - searched route. When the virtual run is to be interrupted to acquire the route information, on the other hand, the route information screen can be opened to see the route information such as major points on the route, the express highway, the name of the interchange (IC), the national route No. the inter - point distance, the time or the toll of the express highway. This route information makes it possible to confirm the detail of the course design other than the map. After this, the mode can be returned to the virtual run mode to confirm the route and design the course. In case, moreover, the present system is mounted as the navigation system on the vehicle, the navigation mode can be started on the basis of the route confirmation or course design in the virtual run mode.

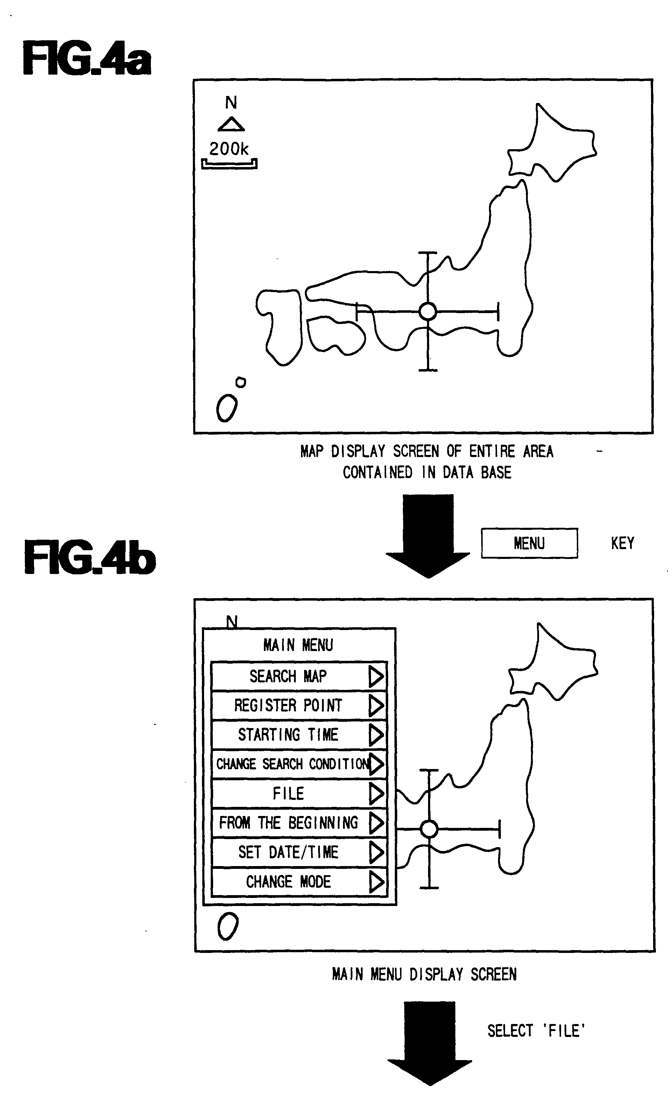

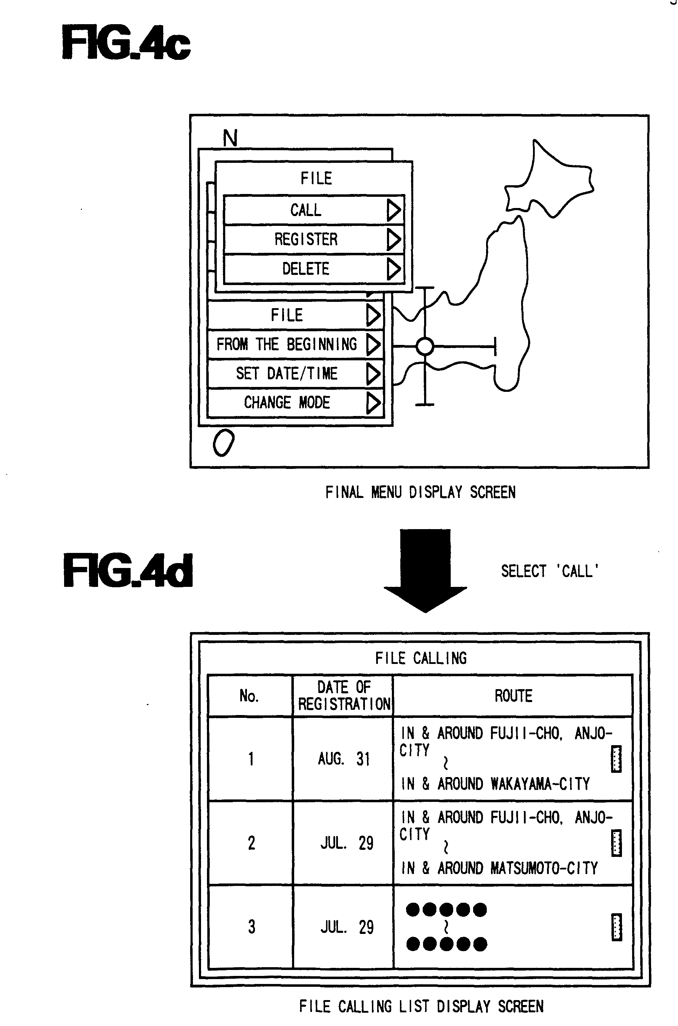

Here will be described display screens in the virtual run mode. Fig. 4 shows one example of the layout of a startup screen (i.e., screen A). The initial startup screen displays the entire area map contained in the data bus, and the second and later screens display the screen at the previous ending time. Next, the main menu is displayed, and the key "FROM THE BEGINNING" is selected. Then, the stored information relating to the virtual run is initialized, and a point on the map is set from the beginning to search the route so that the virtual run is executed along the searched route. If the key "FILE-CALL" is selected, it is possible to use the set route which has been prepared in advance in the file.

In case the key "FROM THE BEGINNING" IS SELECTED, the cursor is positioned in an arbitrary point from the wire area map containing all the regions of the data base displayed as the initial screen, and the point setting menu is displayed by stroking the set key so that the starting point (or present point), the transit point, the goal and so on are designated and set from that menu. Next, by the search condition setting menu, it is set as the search condition whether or not the oll road is preferred and whether or not the transit point is to be used.

In case the key "FILE - CALL" is selected, the file calling display screen (as located in the lower portion of the drawing) is displayed, files are listed up in terms of their Nos. for the individual routes, their dates of registration and the contents of routes. If a file No. is designated from this list, the entire route display screen (i. e., screen B) based upon that route is displayed.

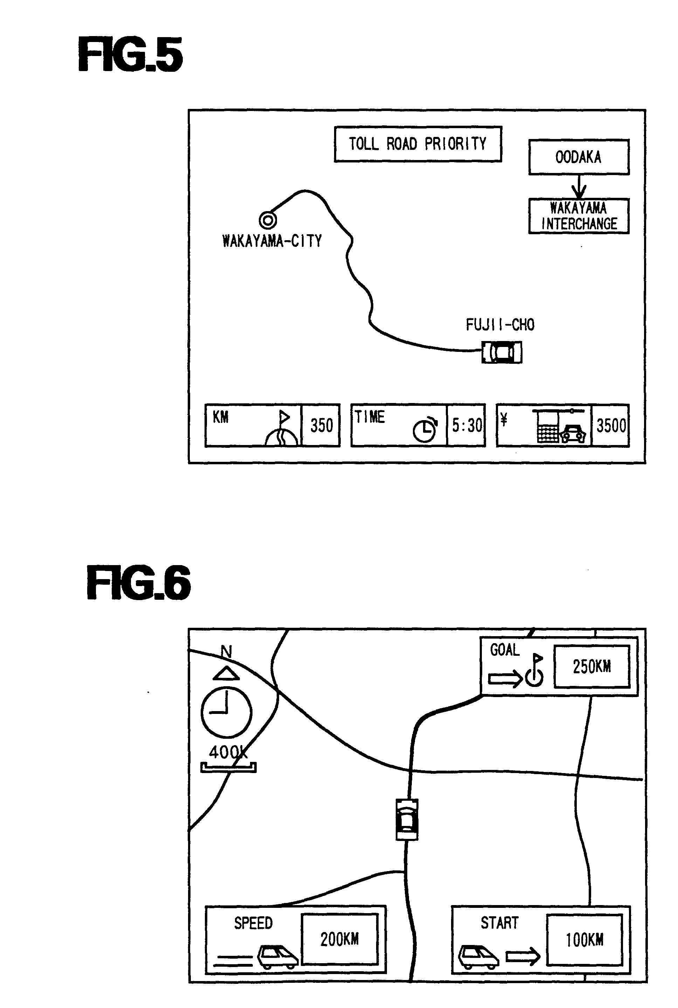

In Fig. 5 showing one example of the layout of the entire route display screen, the vehicle mark is displayed at the starting point together with the route information for confirming the route entirety such as the search condition, the toll road information to run, the distance information, the required time information or the tariff information. In the shown example, there is displayed the route in which the search is executed under the condition preferring the toll road by setting "FUJII - CHO" as the present point and "WAKAYAMA - CITY" as the goal. The "entrance" IC and the "exit" IC of the toll road on this route are set to "OODAKA" and "KOUSOKU WAKAYAMA", respectively. Moreover, this route has a distance (KM) of 350 Km, a required time (TIME) of 5 hours and thirty minutes, and a toll (¥) of 3,500 yens. If the virtual run mode is selected after the route has been confirmed on this entire route display screen, the virtual run screen (of Fig. 6) is displayed.

In Fig. 6 showing one example of the layout of the virtual run screen, the map, in which the vehicle is to run in the upward N direction, is displayed, and the controller is operated to start the vehicle. Specifically, the vehicle appears to advance as if it run along the route, by fixing the vehicle mark in that position and by scrolling the map on the screen. In the present example, the situation of the periphery of the virtual present point is easily found because the vehicle is displayed as fixed at the center of the display screen.

The route information to be displayed while the vehicle is running on the route includes the remaining distance to the goal, the covered distance from the starting point and the speed of the vehicle. In the shown example : the remaining distance (to GOAL) is 250 Km ;

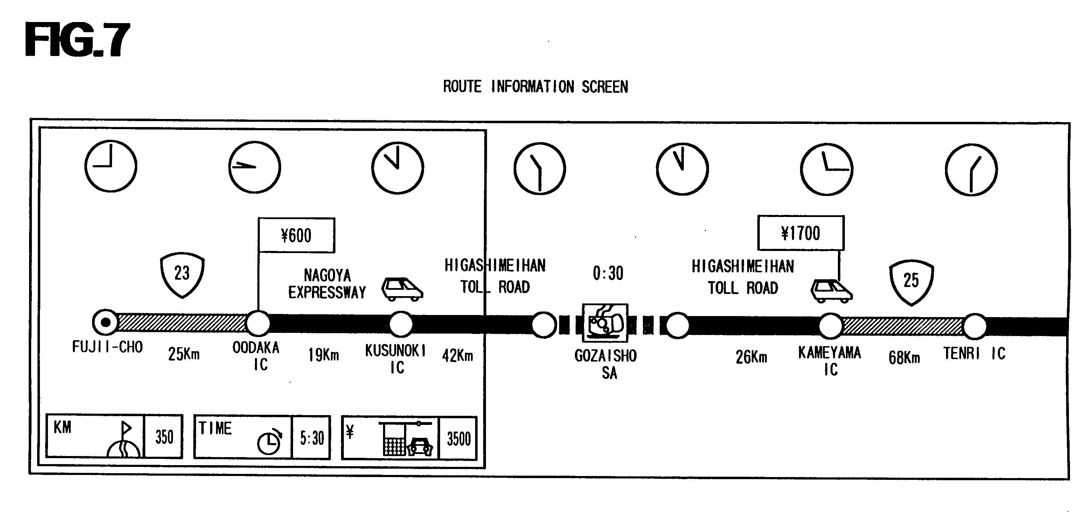

the covered distance is 100 Km ; and the present speed is 200 Km. In this virtual run mode, the vehicle speed can be selected to have a speed magnification according to the reduced scale of the map by the controller. If the detail of the route is acquired at the virtual running time, a route information screen (of Fig. 7) is opened.

In Fig. 7 showing one example of the layout of the route information screen, the route is drawn straight in the horizontal direction on the screen. On this route, there is displayed the route information such as the road name, the major point names, the distance between the major points, or the scheduled times of arrival at the major points. This display screen can be horizontally scrolled. Here, the portion as enclosed by a frame at the lefthand side of the drawing is displayed in the route information screen. In the shown example, the vehicle runs 25 Km on National Road 23 from "FUJII-CHO" to "OODAKA IC" of Nagoya Expressway and 19 Km on Nagoya Expressway from "OODAKA IC" and enters Tohmeihan Toll Road at " KUSUNOKI IC". It is displayed that the virtual present point in the virtual run is located at Kusunoki IC.

In the upper portion of the screen, there are displayed the times of arrival which are scheduled at the individual points. Specifically, the starting time is displayed at Fujii - cho, and the times of transition are displayed at Oodaka IC and Kusunoki IC. Moreover, the tariffs displayed are those to be consumed between the interchanges having toll gates. For example, the toll of "600 yens" is displayed at Oodaka IC between Oodaka IC and Kusunoki IC. If the virtual run is further executed, the screen is scrolled from the right to the left so that the similar route information is displayed.

In addition, since the information of detours or rest spots is displayed on the route information screen, the detailed route information on what point and how long a rest is to be taken and where and how long the detour is selected can be confirmed on the screen and reflected on the route design. After the designed route has been confirmed on the route information screen, the search condition can be changed again to execute the route search thereby to effect the virtual run suitably according to the route.

Here will be described the screens other than the aforementioned one but to be used in the virtual running time.

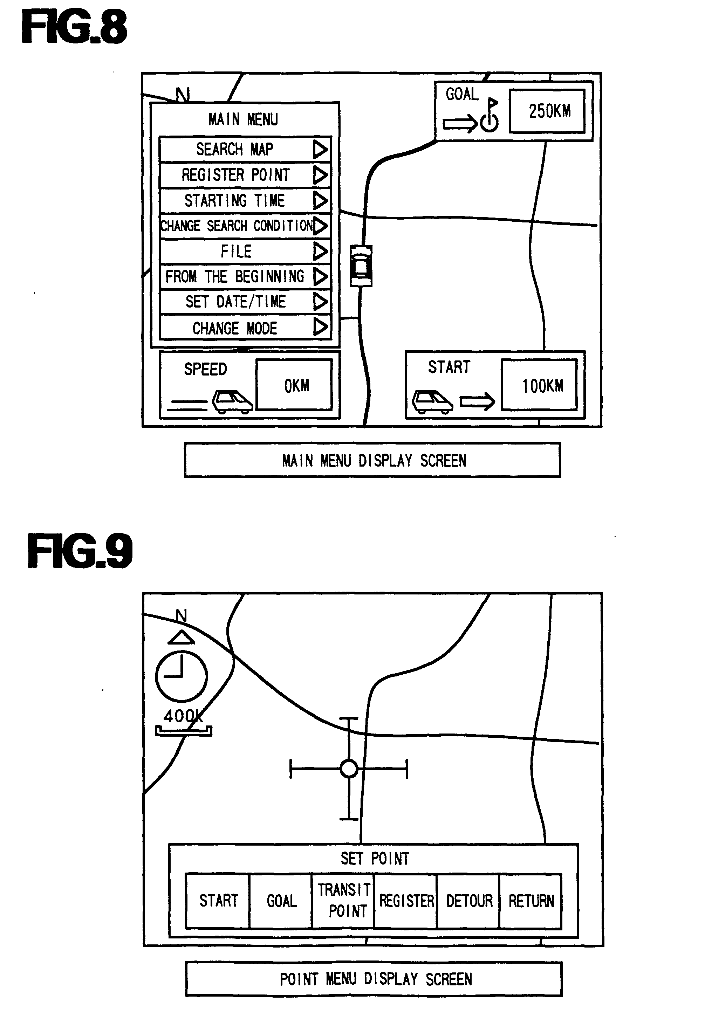

Fig. 8 shows an example of the main menu display screen disposed during the virtual run. This main menu display screen can be opened from all the screens, to select the map search, the point registration, the setting of starting time, the change in the search condition, the file procedure and the setting of date and to display their setting screen thereby to set the conditions necessary for a new route design. In the main menu, the "SEARCH MAP" key is displays an arbitrary point on the map by the method of a telephone No. or a point name reference. The "REGISTER POINT" key registers an arbitrary point as the home or the memory point. The "STARTING TIME" key sets the time at the starting point so as to calculate the arrival time on the basis of the required time period. The "CHANGE SEARCH CONDITION" key changes only the search condition (on whether or not the "toll road is preferred" or "the transit point is used") but not the starting point and the goal. The "FILE" KEY calls the virtual run route from the memory and registers and deletes it. The "FROM THE BEGINNING" key initializes all the set items and starts a new virtual run from the setting. The "SET DATE/TIME" key sets the date and the time. The "CHANGE MODE" key can switch, when the GPS receiver is connected, the mode from the virtual run mode to the navigation mode or vice versa.

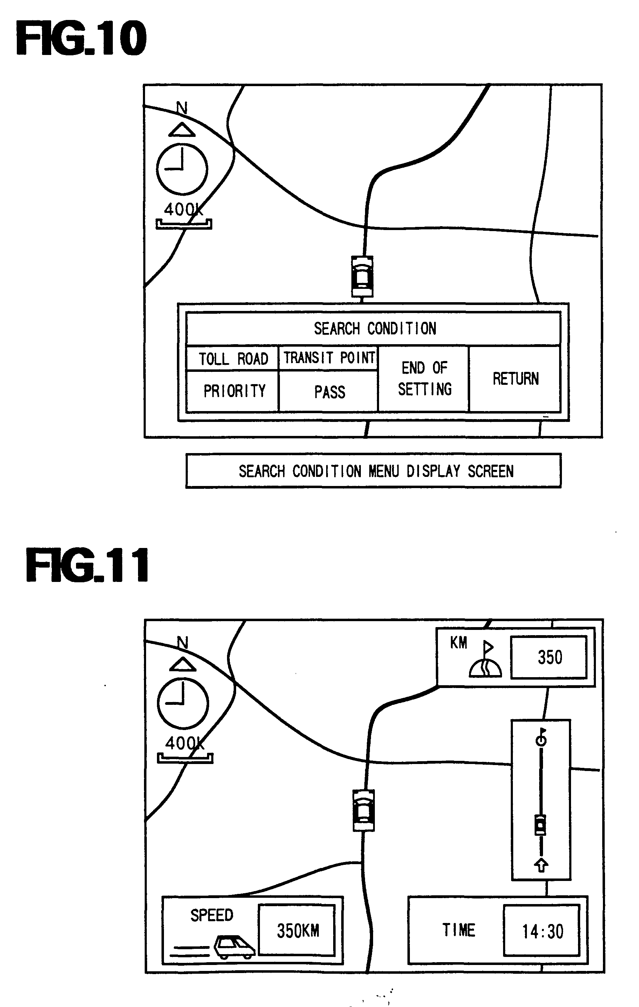

Fig. 9 shows an example of the point setting menu display screen. This point setting menu display screen is automatically displayed, when a point is set, with the goal, the present point and the transit point as the selective points. According to this function, it is easy to select what point the set point is to be handled as.

Fig. 10 shows an example of the search condition menu display screen. This search condition menu display screen is automatically displayed, when a necessary point is set, and can select the "PRIORITY/NOT" as to the toll road as the search condition of a point and the "PASS/NOT" as to the transit point each time the point is set. According to the present function, it is easy to select the search condition.

Fig. 11 shows an example of the screen to be dis played by stroking the present point key on the controller during the virtual run. From this display screen, how long the vehicle has run or the distance is left can be grasped at a glance by locating the present point in the entire route. In the present example, the entire route is displayed in the straight bar, on which is displayed the virtual present point mark. Since, according to this function, the position of the virtual present point in the entire route is analoguely displayed, it is possible to easily confirm where the vehicle is running.

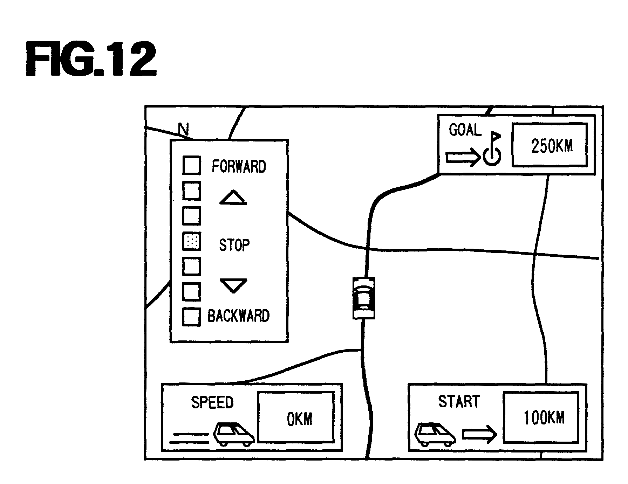

Fig. 12 shows an example of the speed setting screen. This speed setting screen is displayed, when the set key on the controller is stroke during the virtual run, so that the virtual running speed can be arbitrarily set by manipulating the joy stick. According to the present function, the set present speed can be found at a glance, when desired, by stroking the set key.

In addition to the display screens described above, there are a peripheral list display screen and a re - search display screen, although not shown. The peripheral list can display the situations of the periphery of the goal such as roads or buildings in the sub - menu, when their details are desired. In the guide of a registered point, detailed information according to the object of the drive can be provided by preparing for each of goals such as date spots, camping sites or recreation grounds. When the searched route is to be wholly or partially changed after the virtual run of the route, it can be set again if a new point is set and re - searched, to confirm again the portion which has been changed by the virtual run.

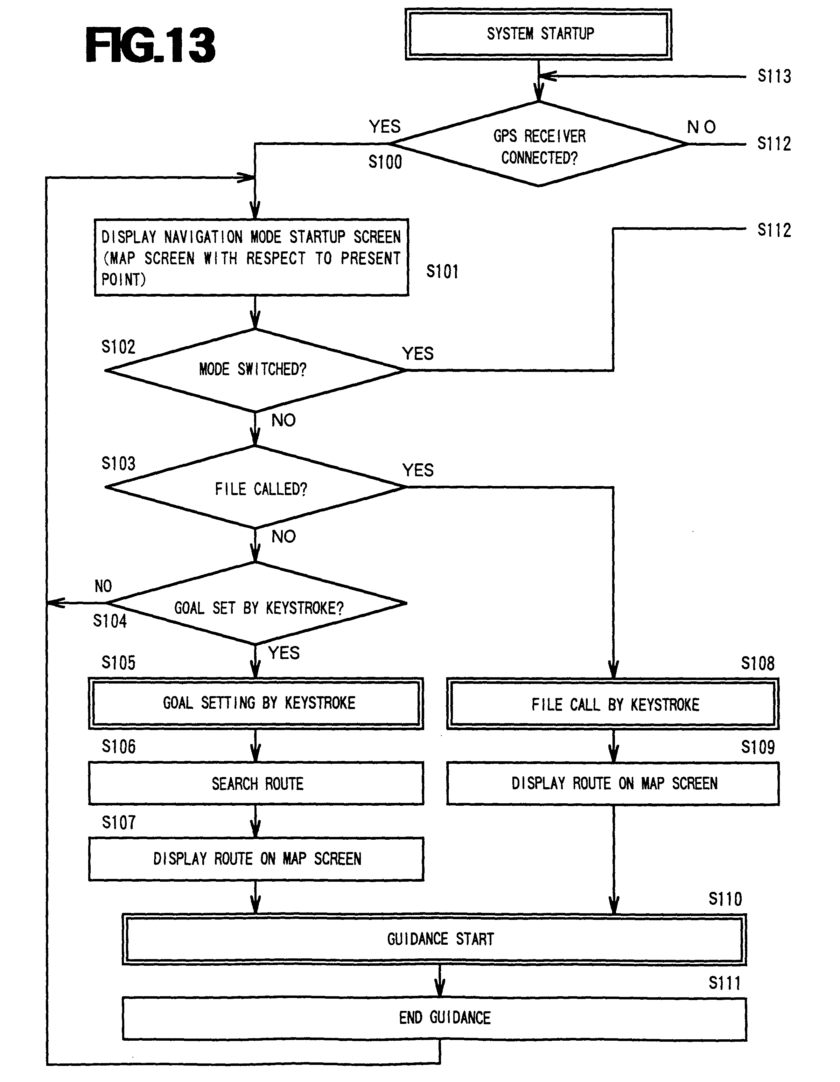

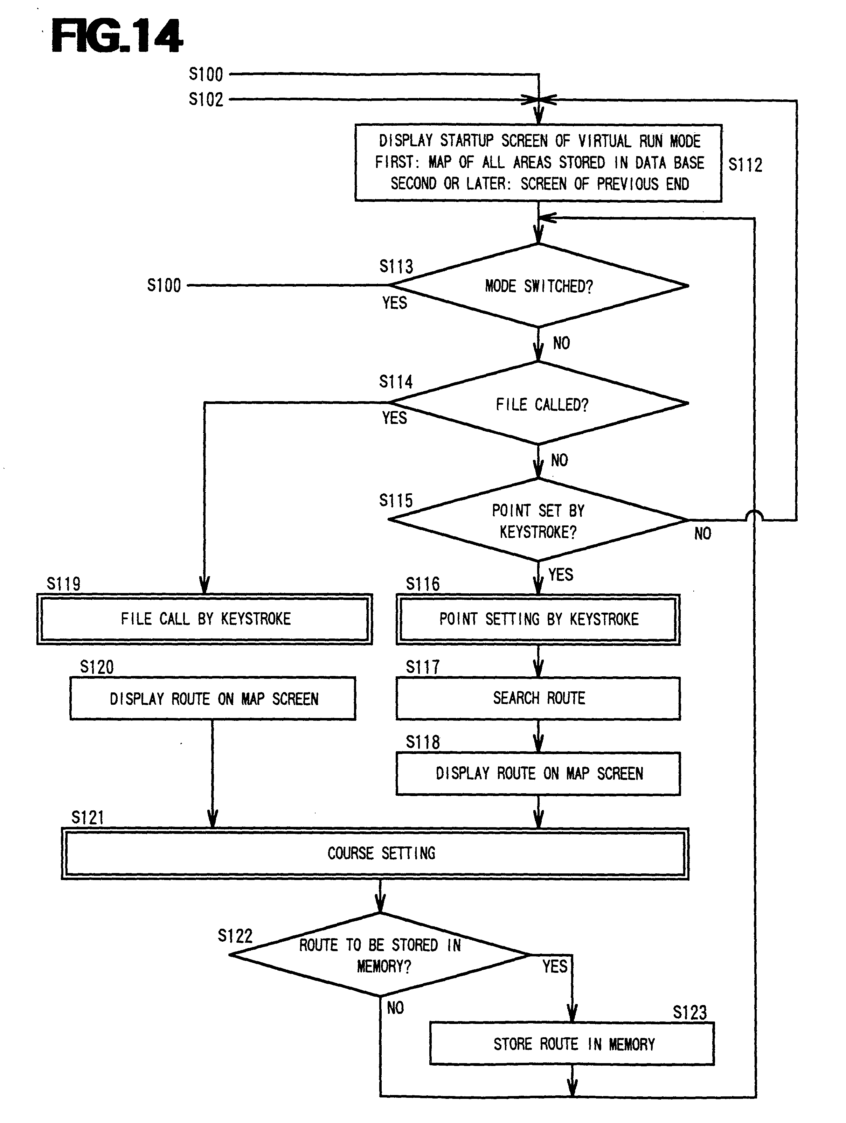

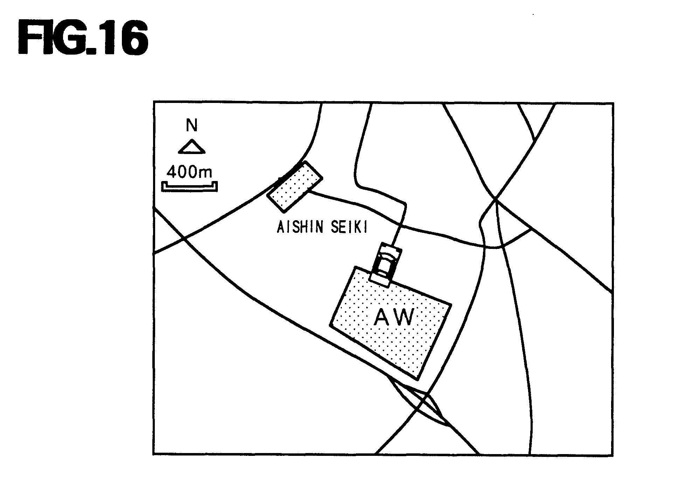

Here will be described the entire procedure of the present system. Figs. 13 and 14 are flow charts of the embodiment of the present invention. First of all, when the power of the present system is turned ON to start the system, the connection of the GPS is decided (at S100). In the connected state, the routine comes into the navigation mode to display the startup screen of the navigation mode (at S101), as shown in Fig. 16. Fig. 16 shows the map display screen referring to the present point. If the GPS is not connected but used as the so - called "home type", the routine comes into the virtual run mode so that the virtual run mode startup screen shown in Fig. 14 is displayed (at S112).

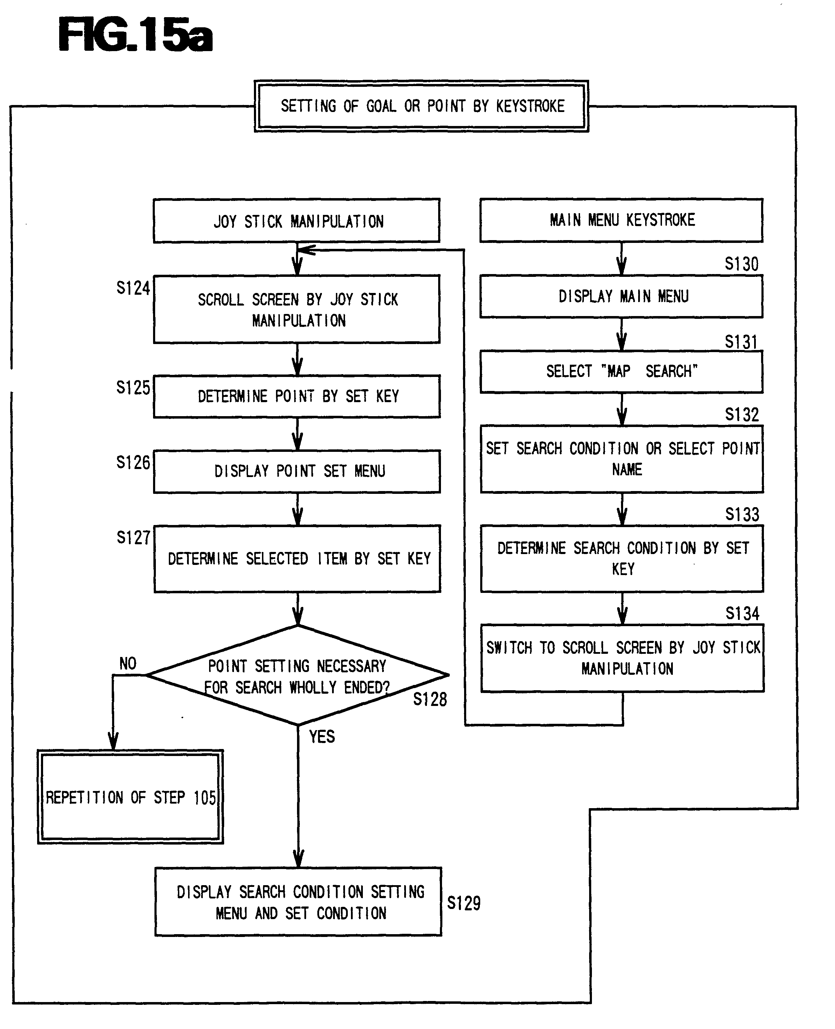

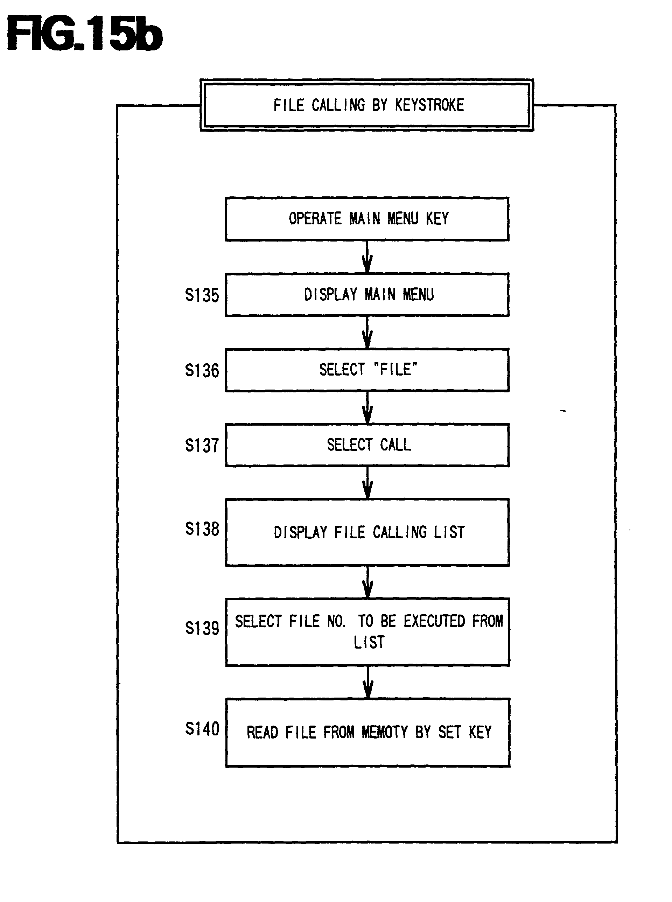

In case the navigation mode is entered, it is decided (at S102) whether or not the mode is switched in the screen of Fig. 16. If the answer is NO, it is decided (at S103) whether or not the file is called. If here is the file call, the routine enters the "FILE CALL BY KEYSTROKE" (at S108), as shown in Fig. 15. Then, the route of the called file is displayed (at S109) on the map screen. Without the file call, on the other hand, it is decided (at S104) whether or not the goal is set by the key stroke. If this answer is YES, the routine enters the "GOAL SETTING BY KEYSTROKE" (at S105), as shown in Fig. 15. Then, the route is searched (at S106), and the searched route is displayed (at S107) on the map screen. Through Step 107 or 109, the guidance is started (at S110). The routine is returned to Step 101 if it is decided that the operation of Step 104 is not executed or if the guidance is ended (at S111).

In case it is decided at Step 100 that the GPS is not connected and it is decided at Step 102 that the mode is switched, the routine enters the virtual run mode to display the startup screen of the virtual run mode (at S122). From now on, the procedures similar to those of Steps 102 to 109 are executed (at S113 to S120). In case. however, it is decided at SteD 113 that the mode is switched, the routine is returned to Step 100. The course design is entered (at S121) through Step 118 or 120. It is decided (at S122) whether or not the route is to be stored in the memory. If this answer is YES, the storing operation is executed (at S123). After the end of the storing operation or in case no storage is decided at Step 122, the routine is returned to Step 113.

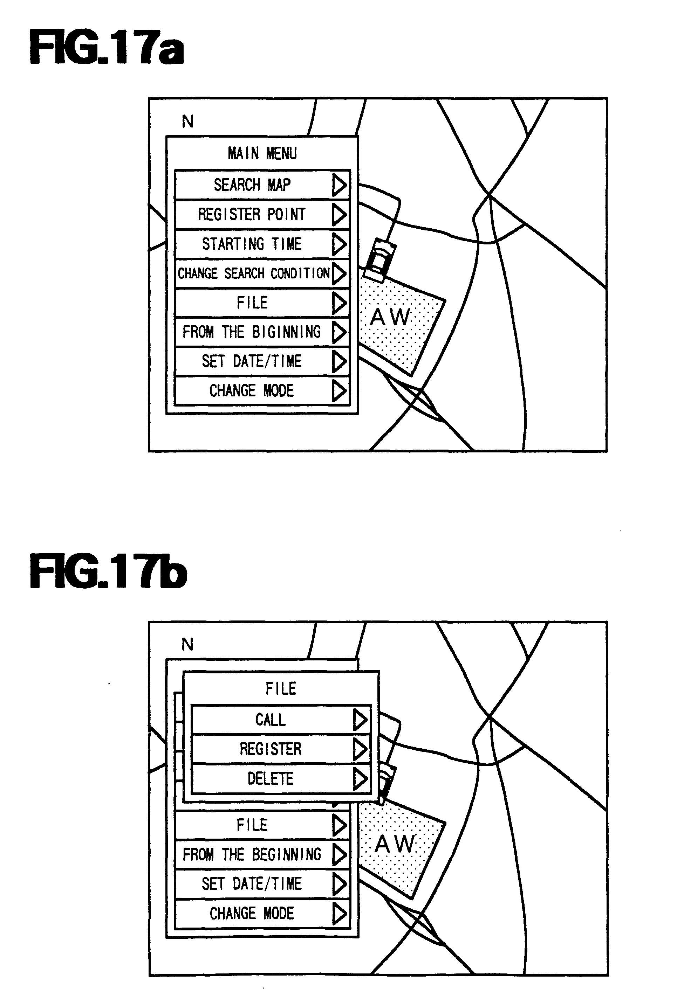

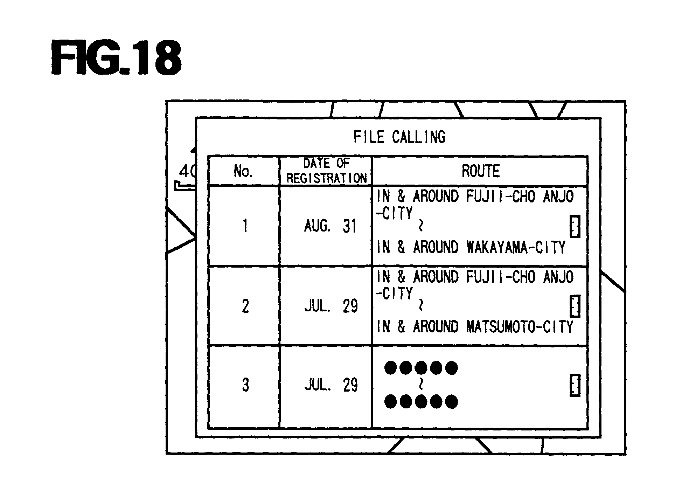

Here, the "FILE CALLING BY KEYSTROKE", as shown in Fig. 15, is started by manipulating the main menu key. First of all, the main menu shown in Fig. 4b or 17a is displayed (at S135) by manipulating the main menu key to select the "FILE" key (at S136). When the file menu is displayed (as shown in Fig. 4c or 17b), the "CALL" key is selected (at S137) to display the file calling list (at S138), as shown in Fig. 4d or 18. The file to be executed is selected (at S139) from the list and is read (at S140) from the memory by the set key. Thus, the operations of Steps 108 to 119 are ended to go the next routine.

On the other hand, the "SETTING OF GOAL OR POINT BY KEYSTROKE" is started at first by manipulating the joy stick or the main menu key. By manipulating the joy stick, the routine enters the screen scrolling (at S124). After the cursor has been set to an arbitrary point at Step 124, the point is set by the set key (at S125). Subsequently, the point set menu (of Fig. 9) is displayed (at S126), and the attributes of the point are selected from the starting point, the goal and the transit point by the joy stick and determined by the set key (at S127).

Here, it is decided (at S128) whether or not the point setting necessary for the search has been wholly ended. The minimum point necessary for the search indicates the starting point and the goal in the virtual run mode and the goal in the navigation mode. Unless ended, the operation of Step 105 of Fig. 13 is repeated. If ended, the search condition setting menu (of Fig. 10) is displayed, and the condition is selected by the joy stick and determined by the set key (at S129). After the end of the search condition setting, Steps 105 or 116 is ended to the subsequent routine.

Here is a method in which the map screen including an arbitrary point is displayed by making use of the map searching function in the main menu before the manipulation by the joy stick is entered. In this case, the main menu key is manipulated to display the main menu (at S130), and the "MAP SEARCH" is selected (at S131). Subsequently, the search condition is set, or the point name is selected (at S132). Here, the search condition is exemplified by the telephone No. and the memory point. Moreover, the point name indicates the method to be executed by displaying the list which is owned by the data base and divided into the genre such as the address, the hotel and the station. If the search condition is decided by the set key (at S133), the map screen around the center is displayed to go into the scroll screen (at S134) by the joy stick manipulation.

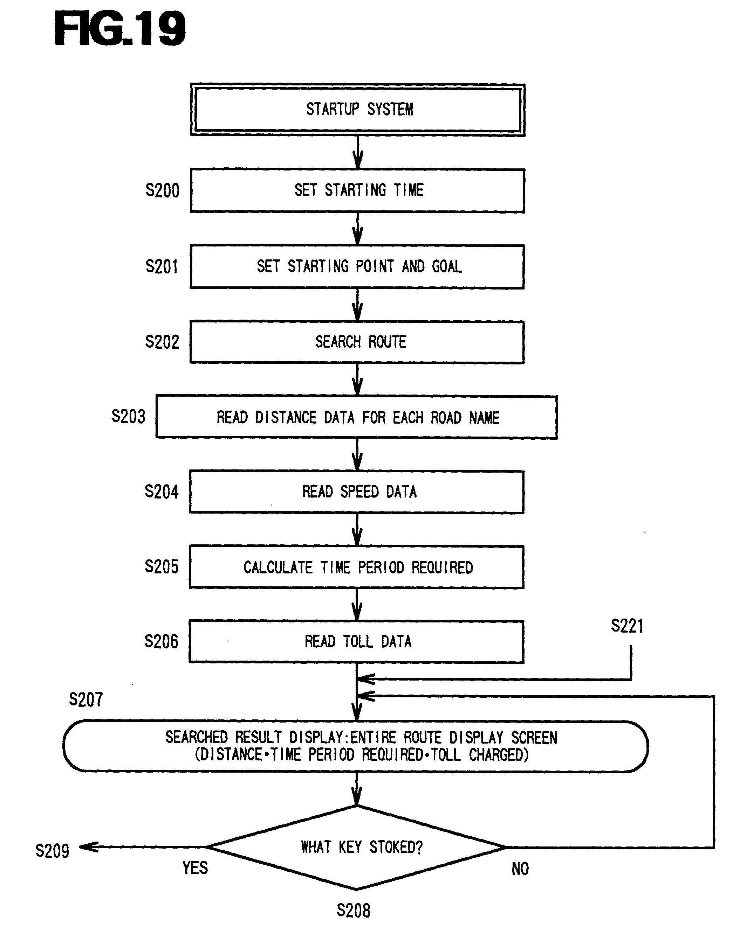

Here will be described the routine of the virtual run mode. Fig. 19 shows the processing flow from the system startup to the display of the searched result. After the system has been started up, the starting time is set (at S200) in the route setting screen, and the starting point and the goal are set (at S201) to execute the route search (at S202). In this route searching routine, the distance data (at S203) and the speed data (at S204) of each road name are read to calculate the required time period (at S205). Then, the toll data of a toll road such as an expressway is read (at S206) to calculate the toll of the toll road on the searched route, and the searched result containing the route information such as the distance, the required time period and the required toll is displayed (at S207) in the entire route display screen (as shown in Fig. 6). It is decided (at S208) whether or not some key has been stroked in the entire route display screen. If this answer is YES, the routine goes into the virtual run mode.

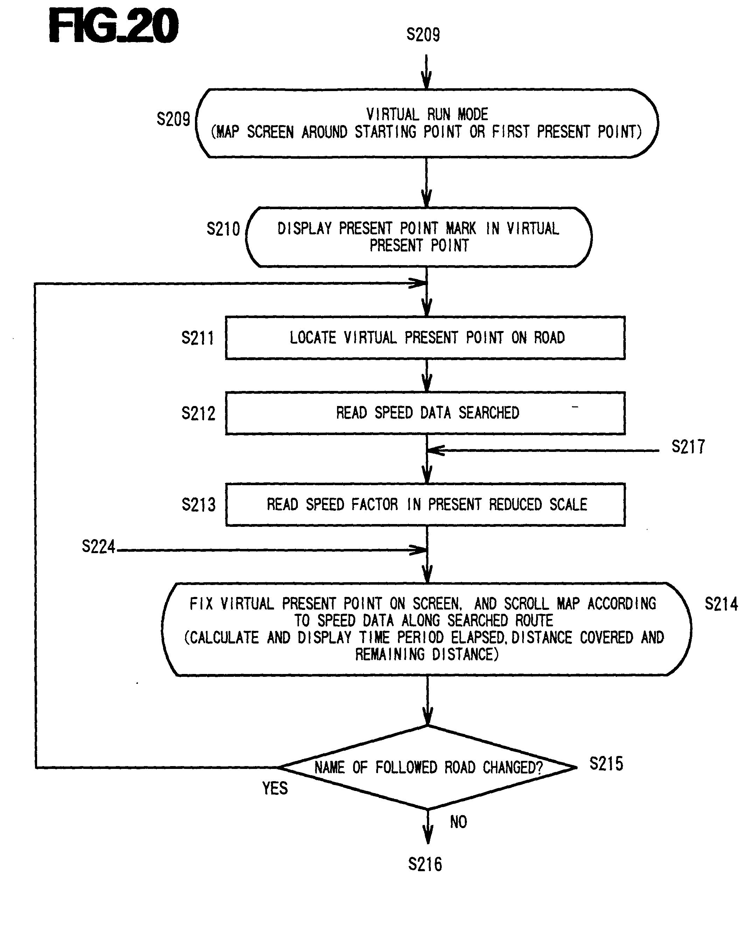

When the virtual run mode is entered, as shown in Fig. 20, there is displayed the map screen around the starting point or the first present point (at S209). The present point mark (or the vehicle mark) is displayed at the virtual present point in this map (at S210). The virtual run screen shown in Fig. 16 is displayed by the procedures of Steps 209 and 210. After it has been recognized (at S211) what road the virtual present point is present on, the speed data searched is read (at S212). Next, the speed factor in the present reduced scale is read (at S213), and the virtual present point is fixed on the screen so that the map is scrolled (at S214) along the searched route and according to the speed of the speed data. During the virtual run, the elapsed time period, the covered distance and the remaining distance are individually calculated and displayed on the screen. It is decided (at S215) whether or not the kind and name of the road being followed has been changed. If this answer is YES, the routine is returned to Step 211 to discriminate the kind and name of the road. Otherwise, it is decided (at S216) whether or not the scale of the map shown in Fig. 15 has been changed.

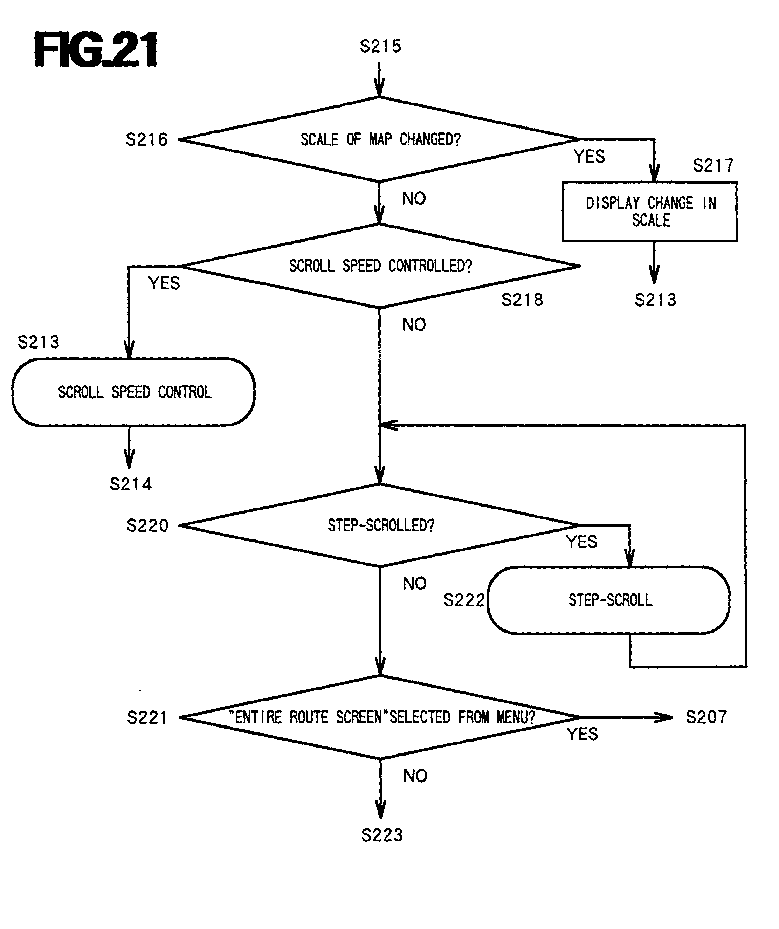

If the change in the map scale is indicated in Fig. 21, it is displayed (at S217), and the routine is returned to Step 213 to determine the present speed factor. The speed can be controlled such that it is decelerated so as to make a detailed course design of a certain area or such that it is accelerated in case the course is merely passed without any detailed design or in case the vehicle is running through the area of no other deed such as an expressway between interchanges. It is decided (at S218) whether or not such speed control has been carried out. If this answer is YES, the routine is returned to Step 214 to scroll the map according to the controlled speed. Otherwise, the step - scrolling is decided (at S220). Without any step - scrolling, it is decided (at S221) whether or not the " ENTIRE ROUTE SCREEN" has been selected from the menu. With the step - scrolling, the step - scrolling is executed (at S222), and the routine is returned to Step 220.

Here, the step - scrolling implies that the area around the starting point, which is well known to the driver, is stepwise scrolled at each intersection or service area or at a constant time interval so that the virtual run can be slowly examined and confirmed in detail after the point such as the interchange near the goal.

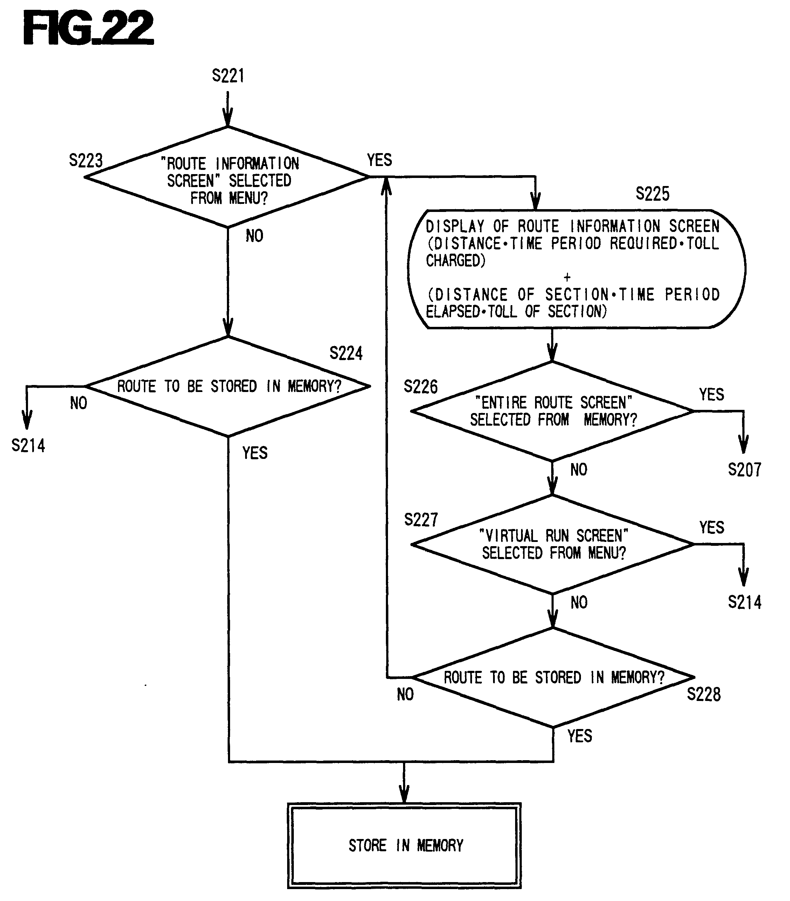

If the entire route screen is not selected at Step 221, the routine shifts to that shown in Fig. 22. Specifically, it is decided (at S223) whether or not the "ROUTE INFORMATION SCREEN" has been selected from the menu. If NOT, it is decided (at S224) whether or not the route is to be stored in the memory. This route, if necessary, is stored in the memory. If the route is unnecessary, the routine is returned to Step 214 to advance the virtual run continuously. If the route information screen is selected at the decision of Step 223, the route information such as the section distance, the elapsed time period and the section toll in addition to the distance, the required time period and the required toll is displayed as the route information screen, as shown in Fig. 8. The detail of the route information is confirmed in this route information screen.

It is decided at S226 from the route information screen whether or not the "ENTIRE ROUTE SCREEN" has been selected from the menu. If this answer is YES, the entire route display screen is displayed at Step 207. If the entire route screen is not selected, it is decided at (S227) whether or not the "VIRTUAL RUN SCREEN" has been selected. If this answer is YES, the virtual run screen is displayed at Step 214. If this virtual run screen is not selected, it is decided (at S228) whether or not the route is to be stored in the memory. This route, if necessary, is stored in the memory, but otherwise the routine is returned to Step 225.

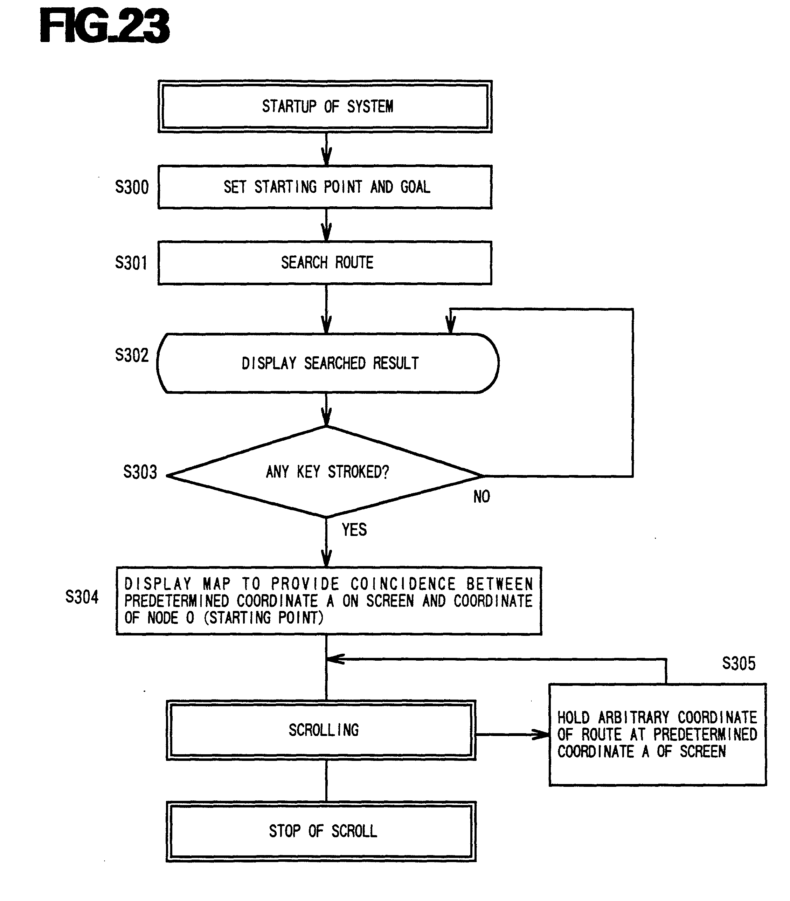

Here will be described a specific mode of embodiment of the present invention. Figs. 23 to 25 show a processing flow for the virtual run by scrolling the screen displayed with the searched route. In the present example, the route is searched by setting at least two arbitrary points (i.e., the starting point and the goal) and is displayed, and the display screen is scrolled along the searched route by instructing the scrolling.

In Fig. 23, the system is started up, and the starting point and the goal are set (at S300) in the route setting screen to execute the route search (at S301). In this route search, the data necessary for the virtual run is processed, and the searched result is displayed in the entire route display screen (at S302). It is decided (at S303) whether or not some key is stroked. If this answer is YES, the map is displayed (at S304) to provide a coincidence between a predetermined coordinates A on the screen and the coordinates of node 0 (i.e., the starting point). Next, the scrolling is executed by a scroll starting key. If the scroll starting key and the backward scroll starting key are not stroked, arbitrary coordinates on the route are held at the predetermined coordinates A on the screen (at S305).

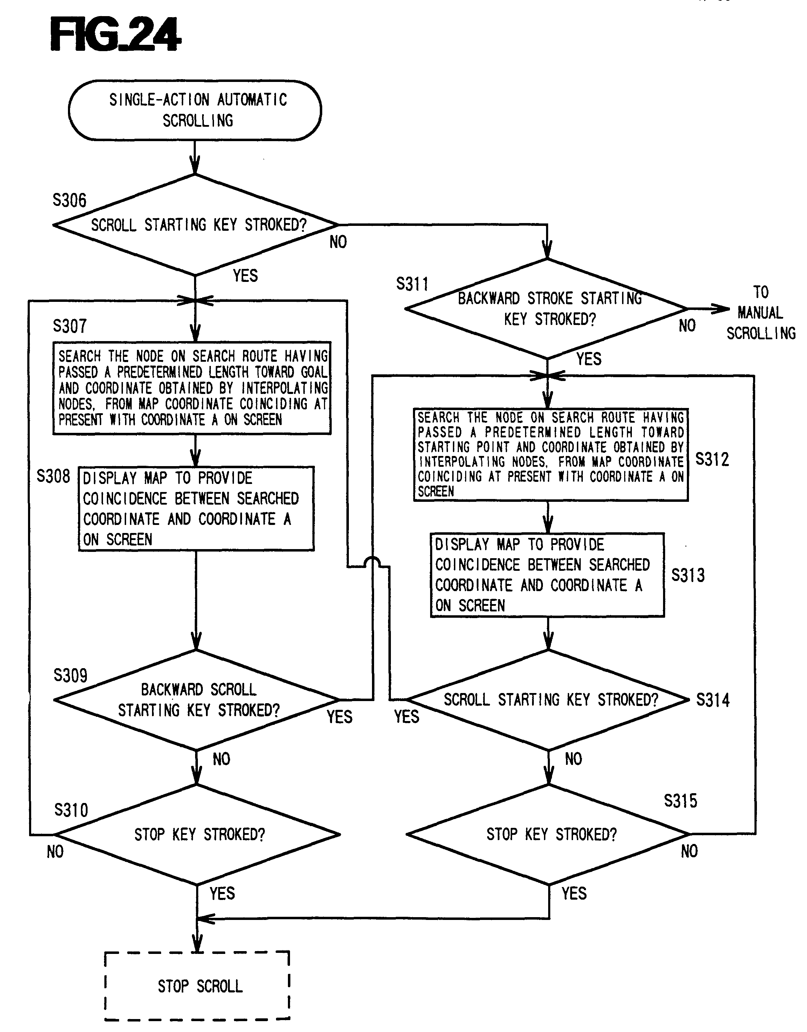

Fig. 24 shows a single - action automatic scrolling flow. First of all, it is decided (at S306) whether or not the scroll starting key has been stroked. If this answer is YES, there are searched (at S307) the node on the search route having passed a predetermined length toward the goal and coordinates obtained by interpolating the nodes, from the map coordinates coinciding at present with the coordinates A on the screen. The map is displayed (at S308) to provide a coincidence between the searched coordinates and the coordinates A on the screen. By the operations of these Steps 307 and 308, the screen is scrolled as if the vehicle were running along the searched route. In this running situation, it is decided (at S309) whether or not the backward scroll starting key has been stroked. The operation of the stop key is decided (at S310) if the answer is NO, and the strolling is stopped if the answer is YES. If the backward scroll starting key is stroked, on the other hand, the backward scrolling at and after Step 312 is executed. If neither the backward scrolling key nor the stop key is stroked, the routine is returned to Step 307 to execute the scrolling continuously.

If the scroll starting key is not stroked at Step 306, it is decided (at S311) whether or not the backward scroll starting key has been stroked. If this answer is YES, the operations similar to those of Steps 307 and 308 are executed to scroll the screen backward (at S312 and S313). If the scroll starting key is stroked (at S314) during the backward scrolling, the routine is returned to Step 307, at which the scrolling is executed. If an arbitrary point is returned to stroke the stop key (at S315), the scrolling is stopped. By thus switching the scrolling directions forward and backward, an arbitrary point in the virtual run can be restored many times, and the virtual run can be repeated for the detailed examination.

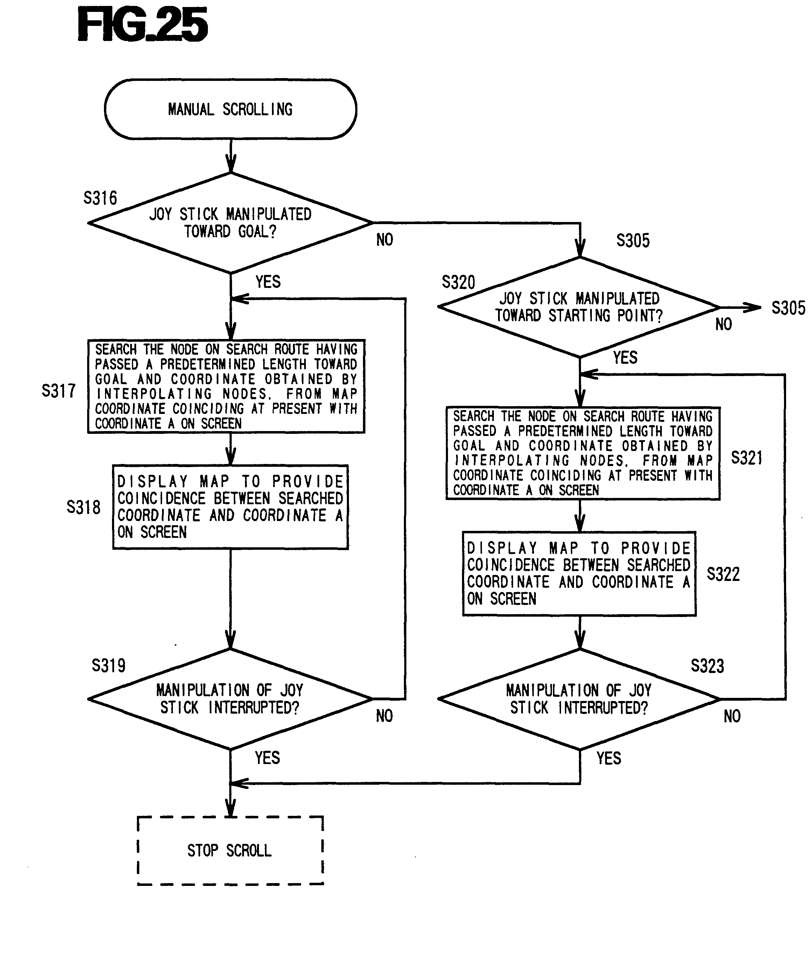

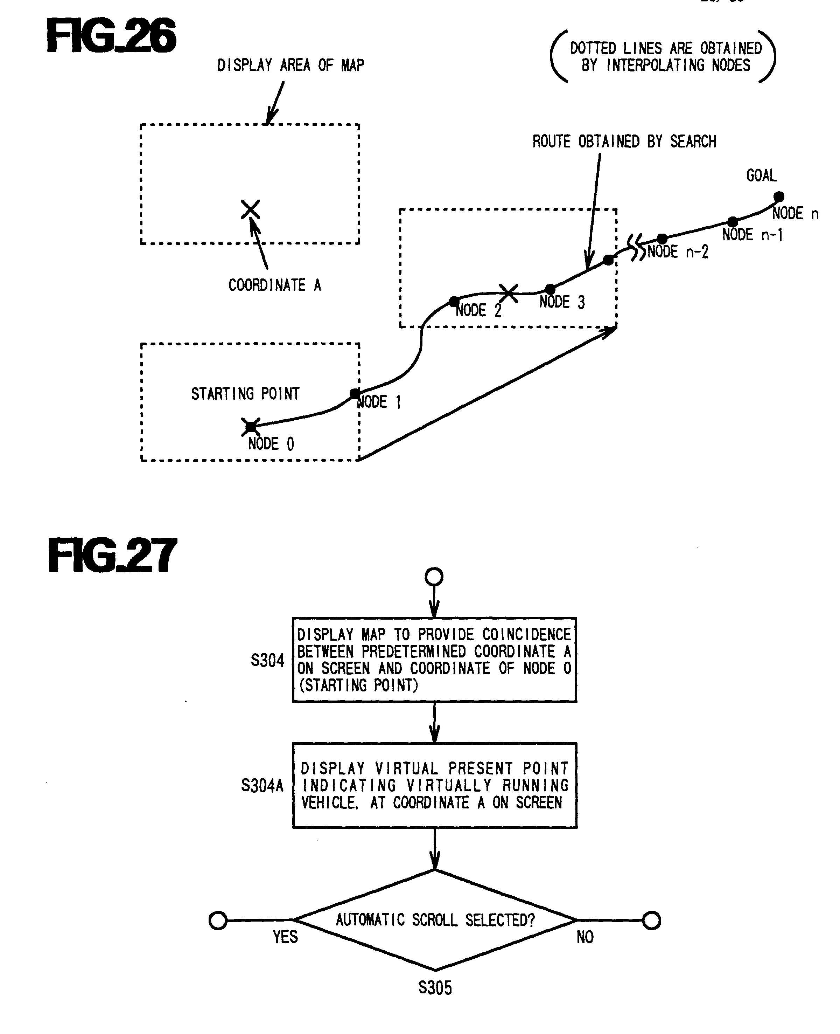

If neither the scroll starting key or the backward scroll starting key is stroked in the single - action automatic scrolling, the manual scrolling is executed. This manual scrolling flow is shown in Fig. 25. First of all, it is decided (at S316) whether or not the joy stick is manipulated toward the goal. If this answer is YES, the node on the search route having passed a predetermined length toward the goal and the coordinates obtained by interpolating the nodes are searched (at S317) from the map coordinates coinciding at present with the coordinates A on the screen, as shown in Fig. 26. The map is so displayed (at S318) as to provide a coincidence between the searched coordinates and the coordinates A on the screen. As a result of the operations of these Steps 317 and 318, the screen is scrolled toward the goal as if the vehicle were running along the searched route. In this running situation, the manipulation of the joy stick is decided (at S319), and the scrolling is stopped if the manipulation is interrupted.

If it is decided at Step 316 that the joy stick is not manipulated toward the goal, it is decided (at S320) whether or not the joy stick is manipulated toward the starting point. If this answer is YES, the operations similar to those of Steps 317 and 318 are executed to scroll the screen backward (at S321 and S322). This scrolling toward the starting point can accomplish the operations similar to those of the backward scrolling of the aforementioned automatic scrolling. If an arbitrary point toward the starting point is restored to stop the manipulation of the joy stick (at S323), the scrolling is stopped.

Here will be described the map scrolling. According to the present embodiment, in the system in which at least two arbitrary points (i.e., the starting point and the goal) are set to search the route so that the virtual present point is displayed on the searched route, the virtual present point is fixed on the display screen by instructing the scrolling along the searched route. In the example shown in Fig. 16, a line drawing designing the vehicle is displayed as the virtual present point mark, which is fixed at the center of the display screen. Especially in the display having the vehicle position fixed at the center of the display screen, the situation of the periphery of the virtual present point is easy to understand.

The means for displaying the virtual present point mark is exemplified, in the processing flow shown in Fig. 23, by interposing the vehicle position displaying means between Steps 305 and 306. Specifically, after the virtual run mode has been entered to display the map according to the searched route (at S304), the virtual present point mark indicating the virtually running vehicle such as the vehicle mark is displayed (at S304A) at the coordinates A on the screen, as shown in Fig. 27. The display position of that coordinates A on the screen are specifically set to the optimum position for widening the periphery of the virtual present point and the screen of the forward direction of the virtual run. Preferably, the coordinates are set at the center of the screen so that the situation of the periphery of the virtual present point may be easily observed, and is set with a backward shift from the center of the screen so that the forward situation may be easily observed by displaying the forward direction of the virtual run widely on the screen. The subsequent routine is similar to that of Fig. 23.

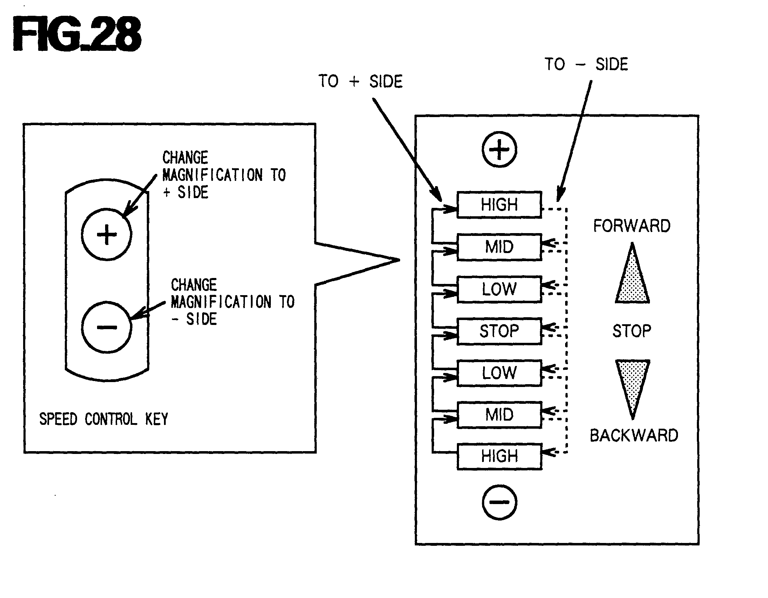

Here will be described the scroll controlling operation. Fig. 28 shows the relation between the speed control selecting screen to be displayed by stroking the set key during the virtual run and the speed control key disposed in the controller. This scroll setting screen sets the function to switch the virtual running speed at three stages and the function to switch the virtual run between the forward and backward directions.

The setting means is enabled in the present example to control the [forward run $\leftarrow \rightarrow$ stop $\leftarrow \rightarrow$ backward run] by using the joy stick. The control of [backward run $\rightarrow$ stop $\rightarrow$ forward run] is achieved by bringing the joy stick down to the " +" side, and the control of [forward run $\rightarrow$ stop $\rightarrow$ backward run] is achieved by bringing the same down to the "-" side. Moreover, the forward run and the backward run are individually divided into three stage speeds (LOW, MID and HIGH). In the case of the forward run, the speed is accelerated in the order of [(STOP) $\rightarrow$ LOW $\rightarrow$ MID $\rightarrow$ HIGH] by bringing the joy stick down to the " +" side and is decelerated in the order of [HIGH $\rightarrow$ MID $\rightarrow$ LOW $\rightarrow$ (STOP)] by bring the same down to the "-" side. These orders are inverted in the case of the backward run.

The present example is embodied by using the joy stick as the speed changing means but can be modified by equipping the controller with forward/backward keys and speed changing push keys to switch the running directions and the speeds.

Thanks to the aforementioned scrolling speed control function, the speed can be easily dropped for an area requiring a detailed course design and a course confirmation or raised at an area to pass, to improve the operability. Especially thanks to the forward and backward switching function, in case the periphery of a point having already been passed is to be examined again, the virtual run need be neither stopped midway nor repeated from the start but can be switched backward to restore that point, so that the route can be examined again from the point.

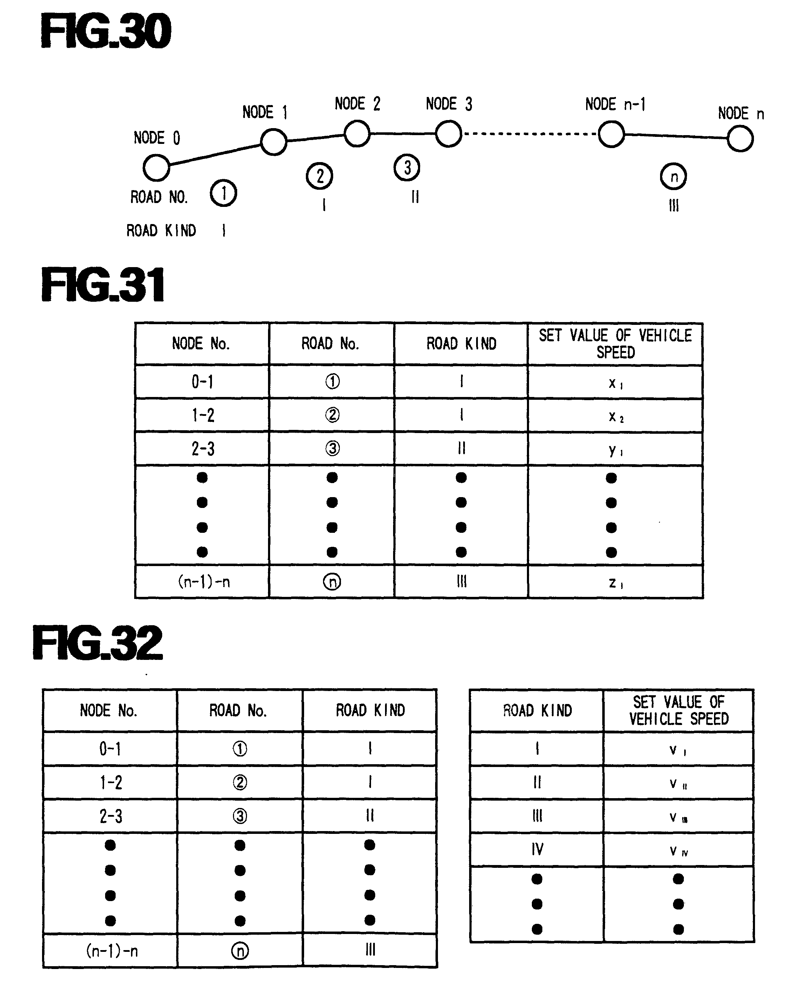

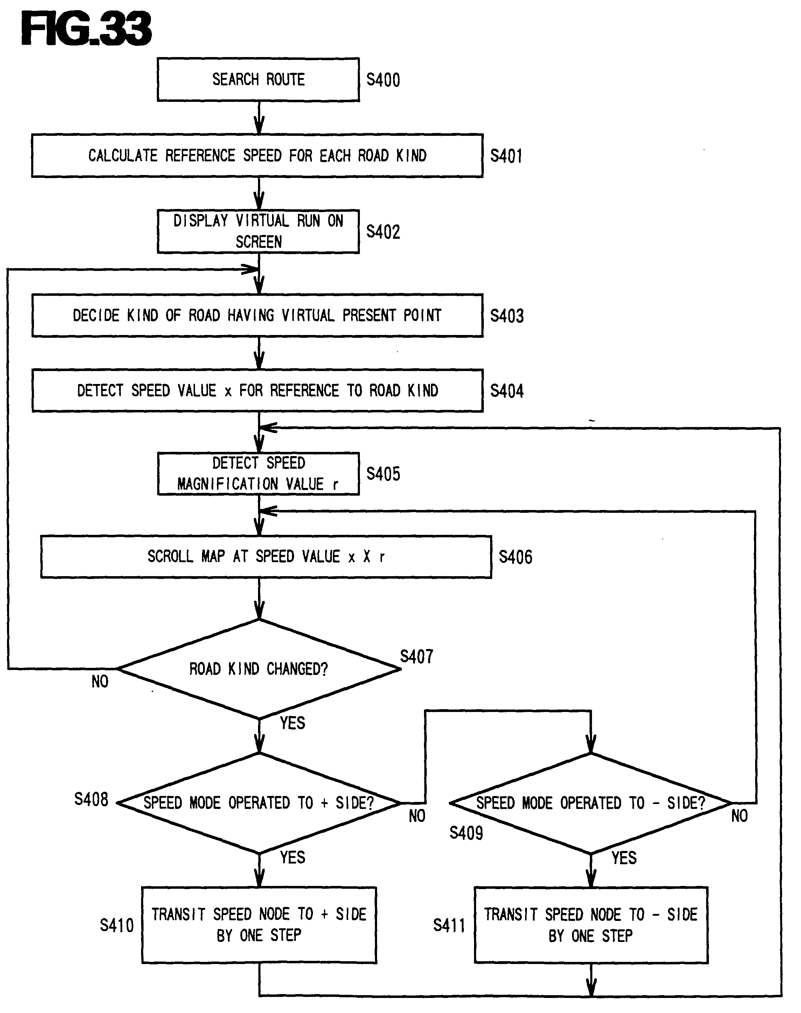

Here will be described the calculation of the running vehicle speed on the route. The route obtained by the search is divided at nodes n from the starting point to the goal, as shown in Fig. 30, and has a data structure in which the road No. and kind are made to correspond at each node. In case the running vehicle speed value is to be calculated, the node No., the road No., the road kind and the set vehicle speed value, as shown in Fig. 31, are tabulated and stored in the storage means, and the set vehicle speed value corresponding to the road No. being virtually run is read. According to another method, as shown in Fig. 32, the searched route information may be utilized to store the road kind and the vehicle speed value in the storage means, to read the vehicle speed value corresponding to the road kind during the virtual run.

Fig. 33 shows a processing flow of the scroll control means. When the route search is ended (at S400), a reference speed for each road kind is calculated at (S401), and a virtual run screen corresponding to the speed is displayed (at S402). The kind of the road having the virtual present point is decided (at S403), and the speed value x for reference to the road kind is detected from the decision result (at S404). A speed magnification value r is detected from the reduced scale of the map (at S405). Here, the "DETECTION" at Steps 404 and 405 are to read the speed data obtained by the aforementioned calculation, as to the vehicle speed, and to read the data stored to correspond to the reduced scale of the map selected and the speed range set by the speed control, as to the magnification value of the speed.

The map is scrolled at the product (x X r) of the detected speed value and the speed magnification value r. It is then decided (at S407) whether or not the kind (or name) of the road being followed has changed. If this answer is YES, the routine is returned to Step 403, at which the kind of the road having the virtual present position is decided. If the road kind has not changed, it is decided (at S408) whether or the scroll speed control has been executed, that is, whether or not the speed mode has been operated to the " +" side. If this answer is NO, it is decided (at S409) whether or not the speed mode has been operated to the "-" side. If the speed mode has not been changed, the routine is returned to Step 406, at which the scrolling is continued at the speed value (x X r). If the speed mode is operated at Step 408 or 409, the scroll speed control is executed. Specifically, if the speed mode is operated to the " +" side, it is transited by one step to the " +" side, e.g., from LOW to MID (at S410). After this, it is decided (at S409) whether or not the speed mode is operated to the " -" side. If the speed mode is operated to the " -" side, moreover, it is transmitted by one step to the " -" side (at Step 411), and the routine is returned to Step 405, at which the speed magnification value 4 is detected.

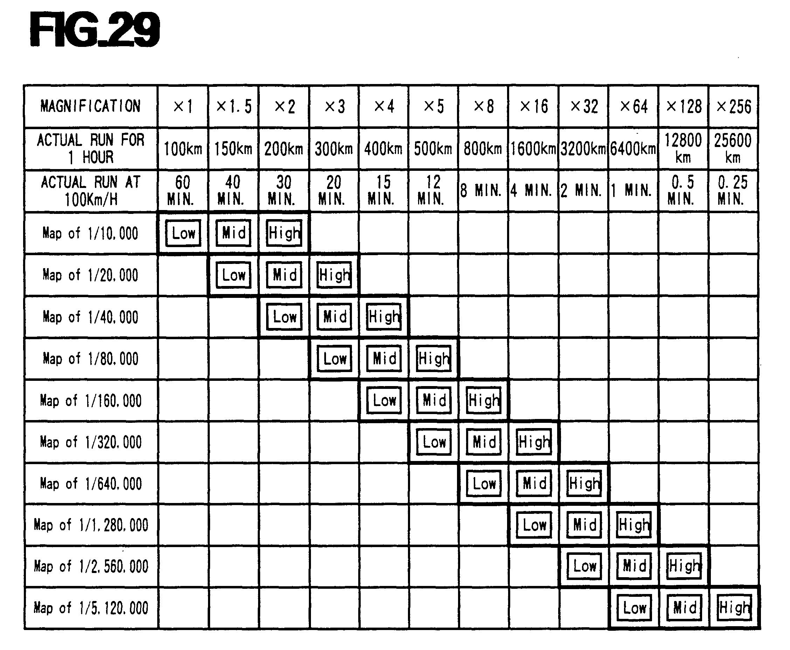

Here will be described the speed magnifications of the individual reduced scales of the map. The present example will be described in case three steps of speed magnifications can be set for each of reduced scales of the map. Fig. 29 presents an example of the speed magnification values in the scale reduction of the map. Here, the controller is equipped with a speed control key for changing the speed magnification. This speed control key is provided with a " +" button for changing the magnification to the " +" side and a " -" button for changing the magnification to the " -" side to shift the speed range by range each time the +" button or " -" button is stroked, so that the speed range thus set is inversely displayed in the scroll selecting screen.

For setting a speed magnification, the " +" button of the speed control key, as shown in Fig. 28, is manipulated to switch the speed range, and the joy stick is brought down to the "+" side for the forward run. In this case, in the map of 1/10,000, the speed magnification value is set to a scale of 1 time in the Low range so that the distance of 100 Km is taken for an actual run of 1 hour at 100 Km/h. If the range is switched to the Mid range, the speed magnification value is magnified by 1.5 times so that the same distance as that of the Low range can be covered for 40 minutes by the virtual run. In the High range, moreover, the speed magnification value is magnified by two times so that the virtual run is executed at the speed twice as high as that of the Low range. As a result, the same distance can be covered at the same speed for one half hour by the virtual run.

By thus setting the speed magnification values by the scale reductions of the map, the running time period can be shortened for the virtual run in accordance with the map scale reductions. In short, for a constant scrolling of the map, the speed of the virtual run can be changed according to the map reduction ratio by changing the map reductions. When the route information for each necessary point is to be roughly confirmed, the wire map screen is displayed for the virtual run. If the wide map has a scale reduction of 1/640,000 at this time, the virtual run can be achieved at eight times in the Low range, at sixteen times in the Mid range and thirty two times in the High range for the low range (of one time) of the map of 1/10,000.

The present function can improve the operability of course design and confirmation by lowering the speed magnification, for the detailed course design and confirmation, to effect the virtual run at a relatively low speed and by raising the speed magnification, for the area requiring no course confirmation or the area such as a detour requiring no course design change, to accelerate the speed. In short, in case the detailed map is selected, it is expected that the user intends to observe the situation of the periphery of the virtual present point in detail. Thus, the speed magnification value for the detailed map is set to a low magnification so that the virtual run of a low magnification may be started simultaneously with the change in the scale reduction. In case the wide map is selected, on the other hand, it is expected that the user intends to observe the route roughly (or to pass without any observation). Thus, the speed magnification value for the wide area is set to a high value so that the virtual run of a high magnification may be started simultaneously with the change in the scale reduction.

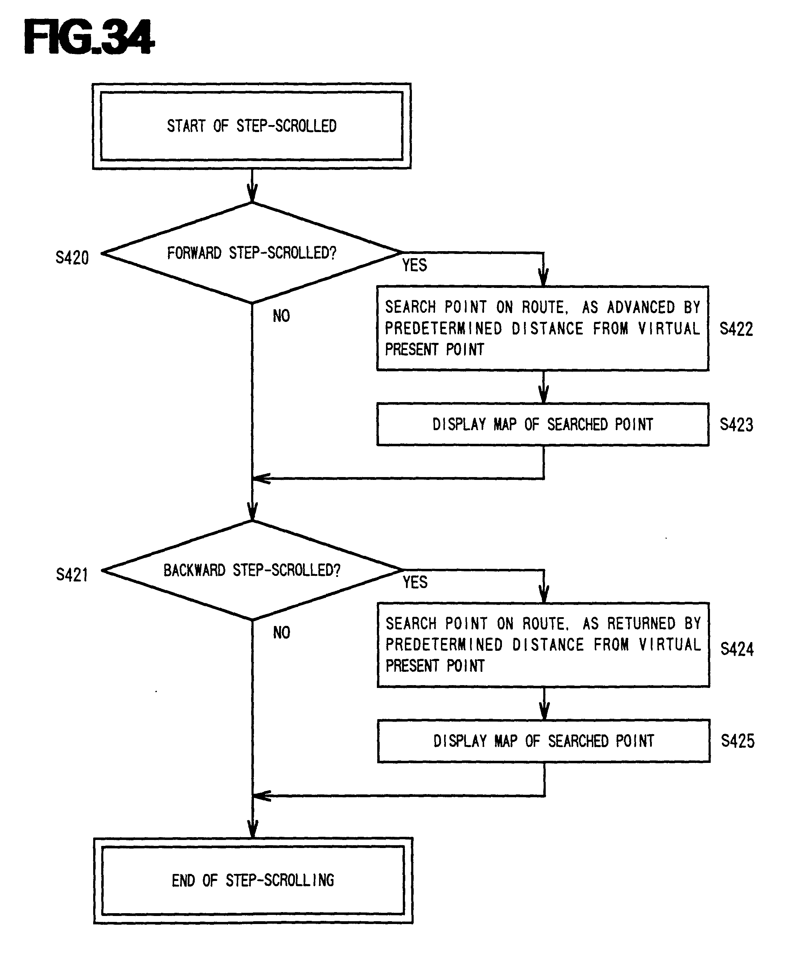

Here will be described step - scroll control in which the route is divided for the virtual run so that it may be skipped for each unit. Fig. 34 shows a step - scrolling flow. In the present example, the control is equipped thereon with a step - scrolling key or the like for starting the step - scrolling. Here will be described the case of stepping at a predetermined distance.

When the step - scrolling is started, it is decided (at S420) whether or not the step - scrolling has been executed forward. If this answer is NO, it is decided (at S421) whether or not the step-controlling has been executed backward. If neither of the scrollings is executed, the step - scrolling is ended. If it is decided at Step 420 that the forward step - scrolling has been executed, there is searched (at S422) such a point on the route as has been advanced by a predetermined distance from the virtual present point. The map of the searched point is displayed (at S423). If a backward step - scrolling has been executed, on the other hand, operations similar to the aforementioned ones are executed (at S424 and S425).

According to the present invention function, the operability for the course design and confirmation can be improved by step - scrolling such an area between the points as is geographically well known as the periphery of the starting point or an area requiring no detailed route examination, at every intersections or at every predetermined distances.

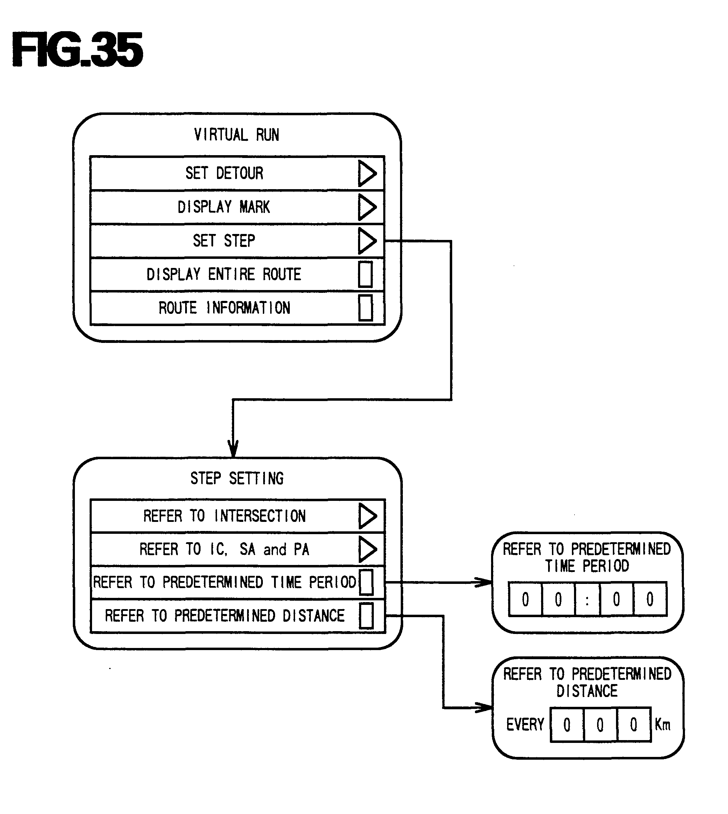

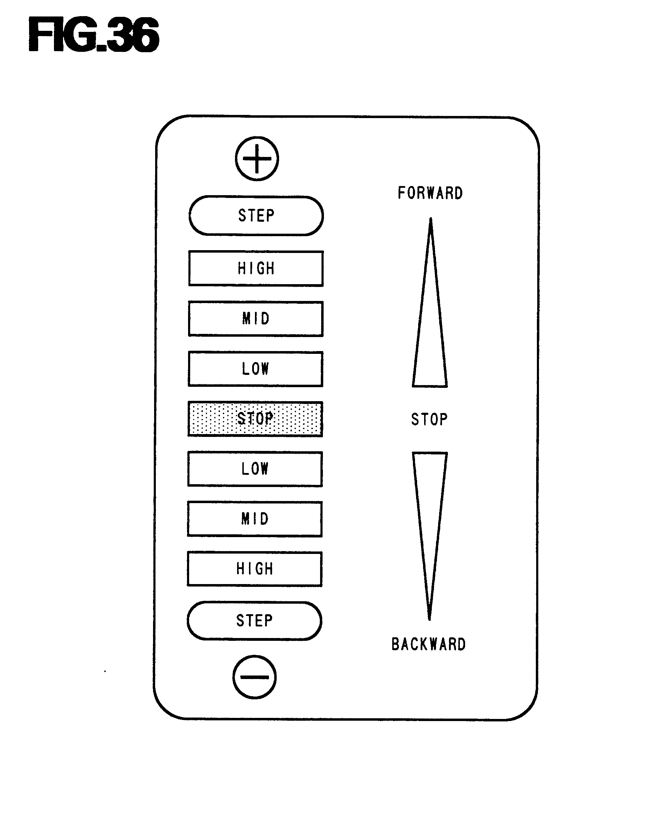

Fig. 35 shows an example of the step - scrolling setting operation by the menu and the joy stick. In the virtual run screen, there is displayed the sub - menu, from which the "SET STEP" key is selected. Then, the step setting window is displayed to select a step - scrolling reference. In the present example, there can be selected the intersection, the interchange (IC) / service area (SA) / parking area (PA), a predetermined time period and a predetermined distance. In case the step - scroll of each predetermined point such as the intersection, the interchange, the service area or the parking area is selected, the forward nodes of the specified point are searched to display the map of the searched point. In case the predetermined time period and the predetermined distance are referred to, there is displayed a window for inputting those values. Fig. 36 shows one example of the step - scrolling, in which the speed control to be displayed in the screen in the speed control is arranged with "STEP" keys for selecting the step - scroll. When this "STEP" key is selected, there is started the STEP - SCROLLING", in which the virtual present point is moved at every predetermined time periods in accordance with the reference set in the menu.

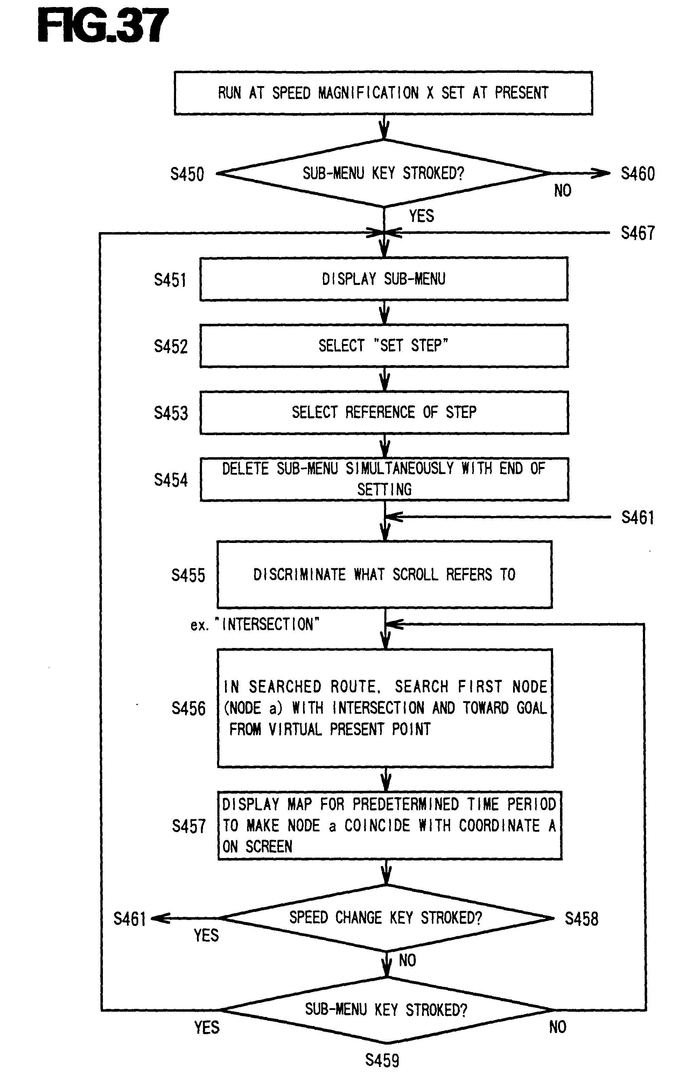

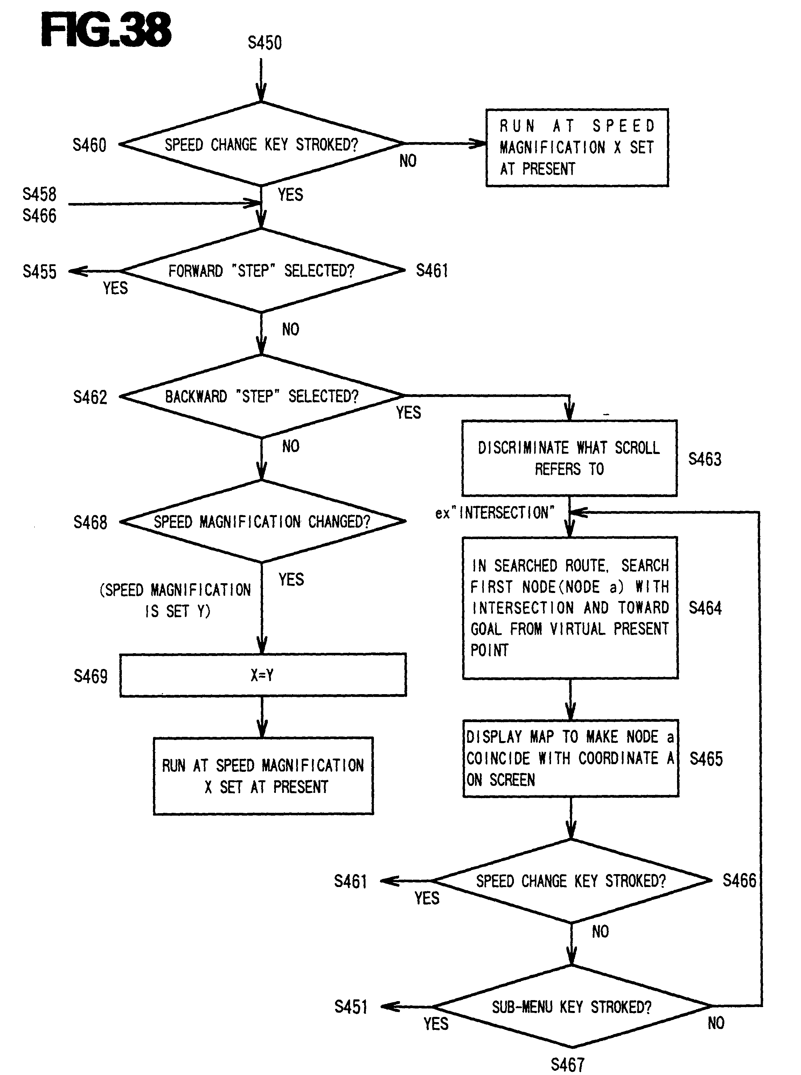

Figs. 37 and 38 show a processing flow of the step - scrolling by the menu and the joy stick. During the virtual run at present at the speed magnification x, it is decided (at S450) whether or not the sub - menu has been operated. If this answer is YES, a sub - menu, as shown in Fig. 35, is displayed (at S451). The "SET STEP" key is selected (at S452) from that sub - menu, and the step - scrolling reference is set (at S453). Simultaneously as the selected reference is set up, the sub - menu is deleted (at S454). Then, it is discriminated (at S455) what is the scrolling reference set by the " SET STEP" key. In the route obtained by the search from that discriminated result, the set reference point such as the first node of intersection is searched at the side toward the goal from the virtual present point and will be designated at node a (at S456). The map is displayed for a predetermined time period to make the node a coincide with the coordinates A on the screen (at S457).

It is decided (at S458) whether or not the speed change key has been stroked, and it is otherwise decided (at S459) whether or not the sub - menu key has been stroked. If neither key is stroked, the routine is returned to Step 456, at which the next reference is prepared. If the sub - menu key is stroked, the routine is returned to Step 451, at which the selection is made by the sub - menu.

If it is decided at Step 450 of Fig. 37 that the operation of the sub - menu key has not been executed, the routine advances to the processing flow of Fig. 38. Specifically, if the sub - menu key is not stroked, it is decided (at S460) whether or not the speed change key has been stroked. If neither key has been stroked, the run is continued at the speed magnification set at present. If the speed change key has been stroked, the step selection and its direction are decided (at S461). If the forward step has been selected, the scroll reference is discriminated at Step 455 of Fig. 37 so that the step processing is executed from the result of decision. If the backward step has been selected, on the other hand, operations similar to those of Steps 455 to 457 are executed (at S463 to 467).

When the speed change key is depressed, the rout ine is returned to Step 451, at which the sub - menu is displayed. If no scroll in either direction is selected, it is decided whether or not the speed magnification has been changed. Without any change, the run is continued at the speed magnification x set at present. If the speed magnification is changed to "y", on the other hand, a relation of x = y is set (at S469) to execute the virtual run with the speed magnification y.

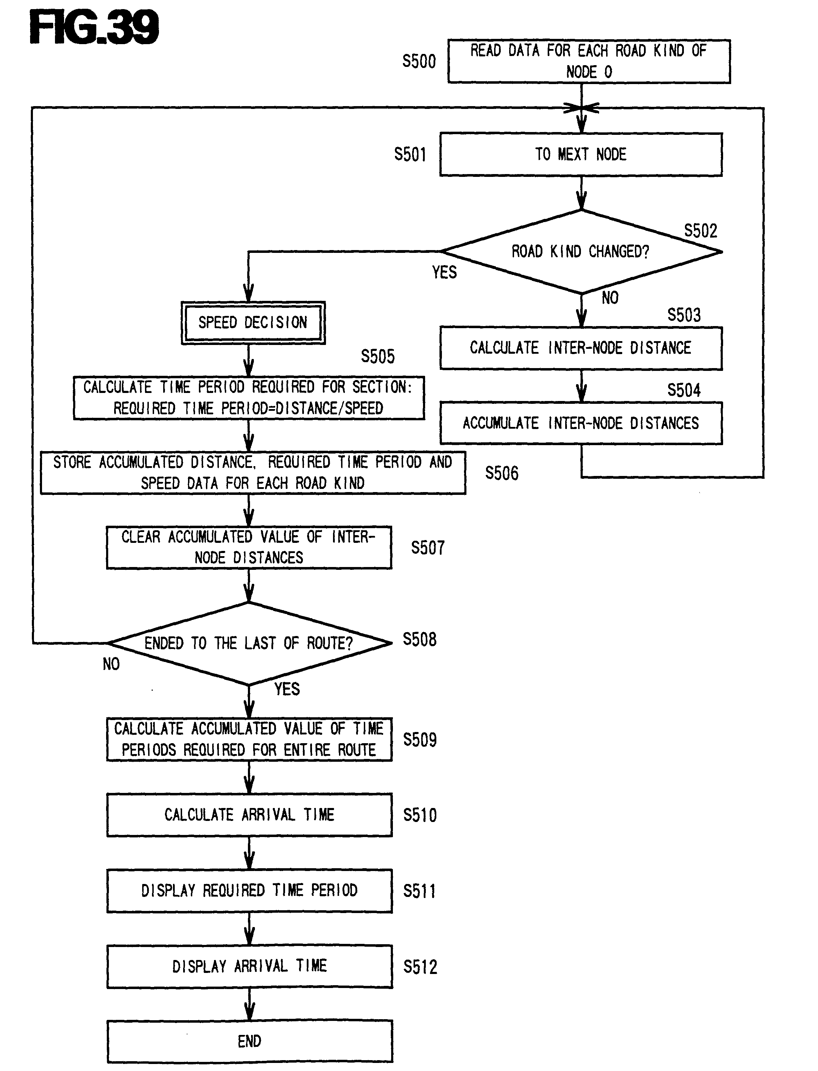

Here will be described the operations for processing the distance, the speed and the required time period. Fig. 39 shows a flow of processing the distance, the speed and the required time period. The present function is to execute the virtual run by scrolling the display screen along the searched route and to calculate and display the desired time period for two points inputted.

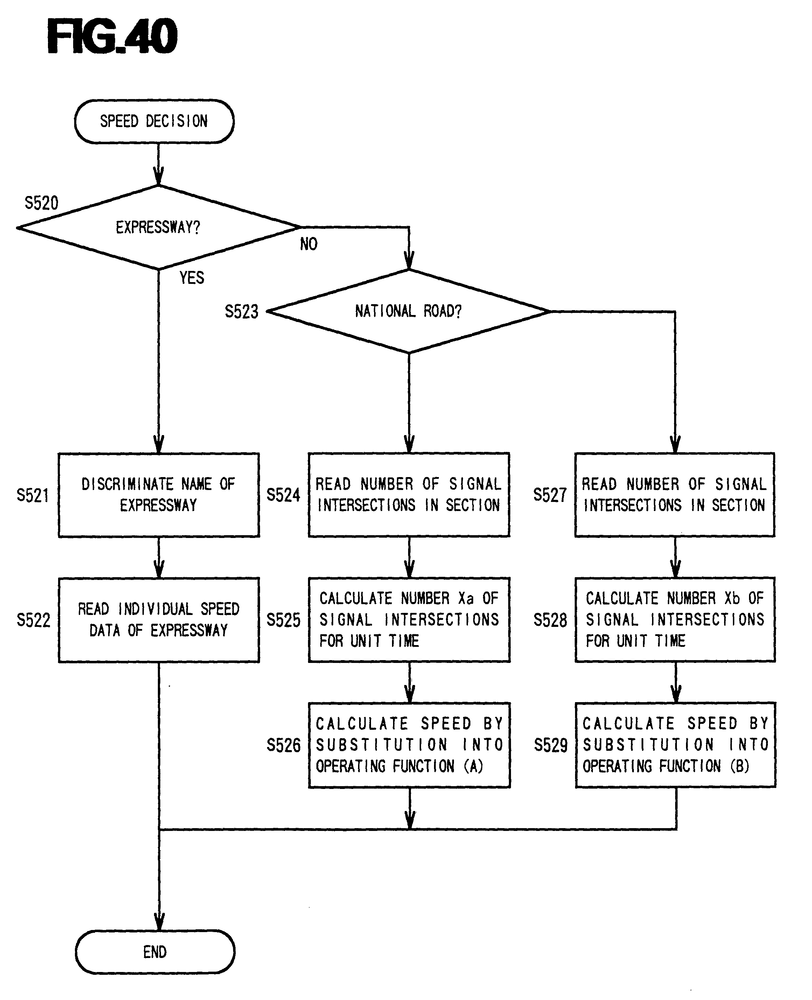

In Fig. 39, when the virtual run is started, the road kind data of node 0 is read (at S500), and the road kind data of next node is read (at S501). It is then decided (at S502) from the road kind data of the individual nodes whether or not the road kind has been changed. If these answers are NO, the distance between the nodes on that road is calculated (at S503), and the calculated values are accumulated (at S504). By repeating these Steps 501 to 504, the distance of the same road kind is calculated. If the road kind has been changed at a certain node, the speed deciding routine shown in Fig. 40 is started to calculate the speed of the road kind at that section. When the speed decision is ended, the time period (distance / speed) of that section is calculated (at S505) on the basis of the calculated speed. After the accumulated distance, the required time period and the speed data have been stored for each road kind (at S506), the accumulated distance value between the nodes is cleared (at S507). It is then decided (at S508) whether or not a series of those operations have been accomplished to the last. If this answer is NO, the routine is returned to Step 501, at which the data of the subsequent node is processed. When all the operations between the individual nodes on the route are ended, the accumulated distance value (at S509) and the arrival time (at S510) of all the routes are individually calculated to display the result (at S512).

Here will be described a specific example for deciding the speeds to be assigned to the aforementioned classified roads. In this specific example, an average vehicle speed data is set for each of expressways. For national roads (having different route Nos.), on the other hand, the speed is calculated from a function (A) by exemplifying a variable by the number Xa of signal intersections within a predetermined distance. For other general roads, on the other hand, the speed is calculated from a function (B) by exemplifying a variable by the number Xb of signal intersections within a predetermined distance :

Speed Calculating Function (A) :

$$f(X_a) = AX_a + B ;$$

and
Speed Calculating Function (B) :

$$f(X_b) = CX_b + D.$$

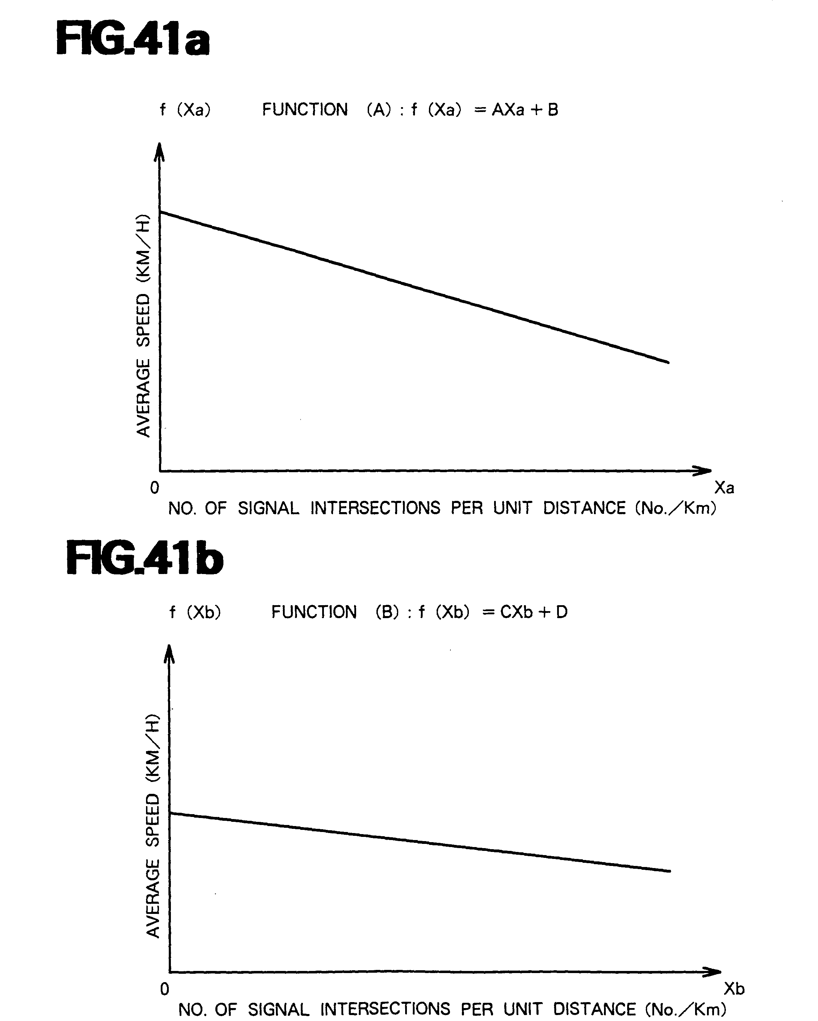

Incidentally, these functions have their constants set according to the various conditions such as the number of lanes or the days of the week. Fig. 41 presents relations expressing the function (A) and the function (B) between the average speed and the number of the signal intersections per unit distance.

Fig. 40 shows one example of the speed deciding method. The road kind, if changed, is decided (at S520), and this routine is ended by discriminating the name of an expressway, if so, (at S521) and by reading the individual speed data of the expressway (at S522). If the road is not an expressway, it is decided (at S523) whether or not the road is a national road. If this answer is YES, the number of signal intersections in the section is read (at S524), and the number Xa of signal intersections per unit distance within that section is calculated (at S525) and is substituted into the speed calculating function (A) to calculate the speed (at S526).

In the case other than the expressway and the national road, a road is subjected to operations similar to those of the national road. Specifically, the number of signal intersections within the section is read (at S527), and the number Xb of signal intersections per unit distance within that section is calculated (at S528) and is substituted into the speed calculating function (B) to calculate the speed (at S529).

According to the method described above, the required time period for the actual run can be accurately estimated to provide a reference for selecting whether a route having a priority in the toll road or a route having a priority in the general road is to be used. Moreover, the desired time period can be more accurately calculated by changing the vehicle speed data of each of the aforementioned expressways and the individual coefficients A, B, C and D in the functions (A) and (B) on the basis of the various conditions such as the number of lanes, the days of the week, the time zone and the degree of business of traffic.

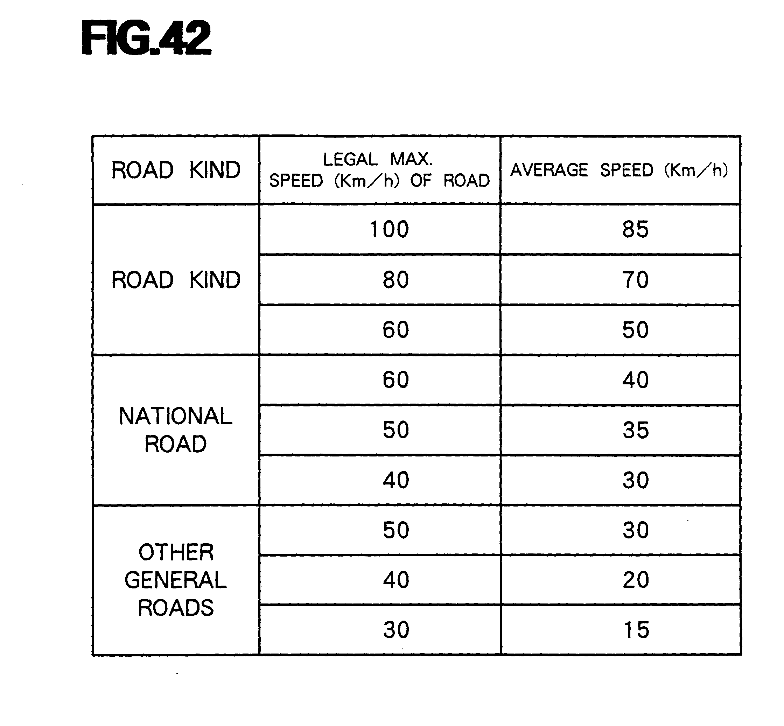

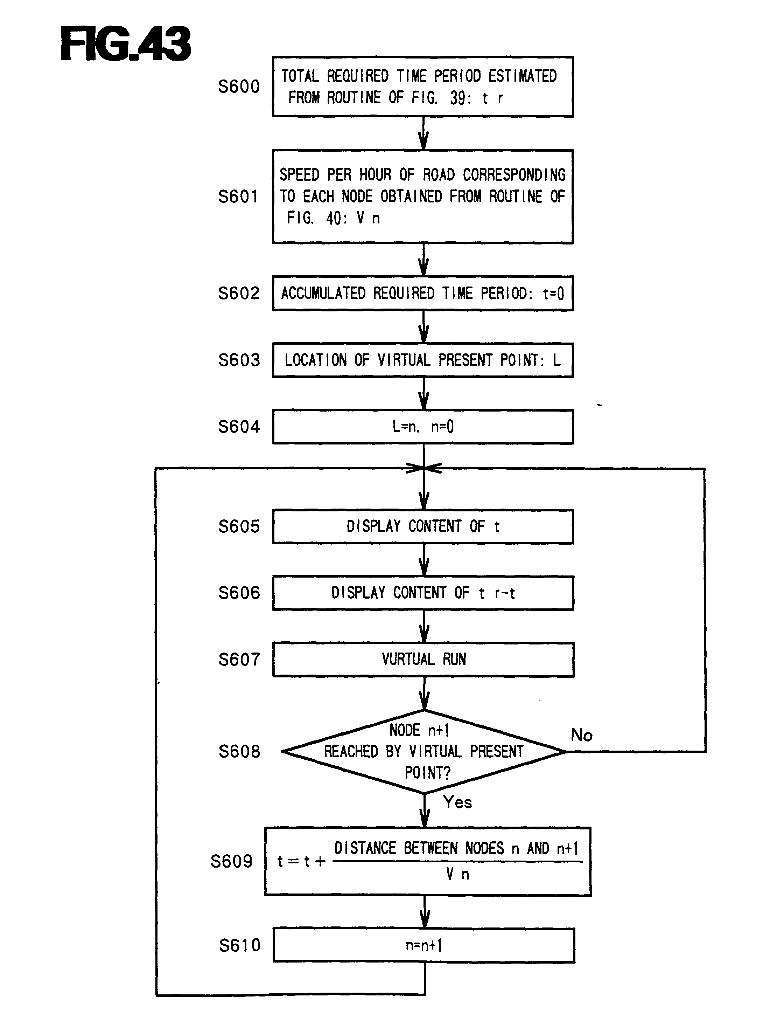

Moreover, the average vehicle speed data for each of the aforementioned road kinds may be set in advance as a table, as shown in Fig. 42. Still moreover, the table shown in Fig. 43 may be given the conditions such as the number of lanes and the days of the week. In addition, the aforementioned two means can be suitably combined to calculate the average speed.

Fig. 43 shows an elapsed time period displaying flow. The present function is to determine and display the elapsed time period from the time period required from the starting point to the present point when the virtual run is executed by scrolling the map with the vehicle position being fixed on the map display screen.

Before the start of the virtual run, the total required time period tr (i.e., the time period required for the entire route) estimated by the routine of Fig. 39 and the speed Vn per hour of the road kind corresponding to each node section are set (at S600 and S601), and the accumulated required time period is set as t = 0 (at S602). The location of the virtual present point is defined as L and is set as L = node n, and the stating point (of node 0) is set as n = 0 (at S604). The elapsed time period t from the starting point and the remaining time period tr - t t required for the goal are individually displayed (at S605 and S606), to start the virtual run (at S607).

It is decided (at S608) whether or not the virtual present point has reached the node n + 1. If this answer is NO, the elapsed time period and the remaining required time period of the same content are continuously displayed. In short, the display content is not changed till the next node. When this next node is reached, the elapsed time period t is calculated by the following Equation (at S609) :

$$t = t + \text{(distance between nodes n and n + 1) } /Vn.$$

Then, the increment of n = n + 1 is set (at S610). The routine is returned to Step 605 to display the changed contents of the elapsed time period t and the remaining required time period tr-t. In this virtual run, the nodes will change at Step 610 as node 0 node 1 → node 2 → - - - → node n so that the contents of t and tr - t are accordingly displayed.

The flow of Fig. 43 holds under the condition that the routine transits to Step 609 only when the virtual present point comes over a node. However, the route on the map is composed of those individual nodes and the lines joining the nodes. As a matter of fact, therefore, the virtual present point may appear not at a node but on a line between nodes. In this case, too, a more detailed time change can be given to the user by calculating the required time period by an interpolation of L between the node n and n + 1 at Step 608.

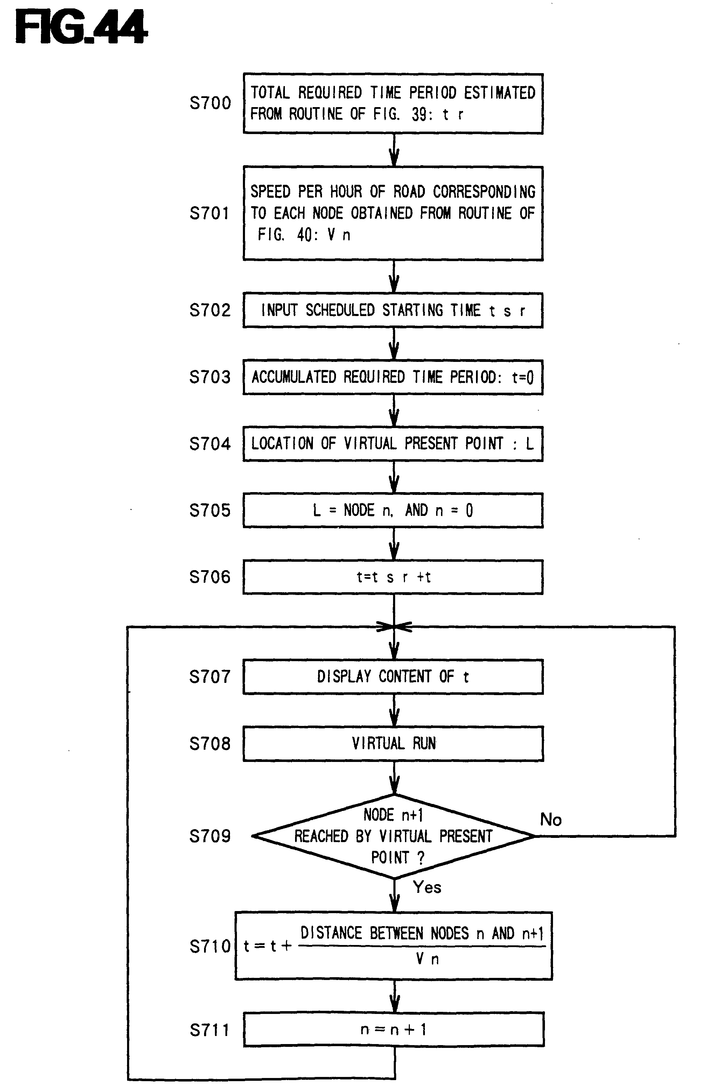

Fig. 44 shows a time displaying flow at a virtual present point. The present function is to display the elapsed time period calculated on the basis of the starting time by determining the required time period from the starting point to the vehicle location on the route when the virtual run is executed by scrolling the map with the vehicle position being fixed on the map display screen.

First of all, at Steps 700 and 701, the total required time period tr estimated by the routine of Fig. 39 and the speed Vn per hour of each road corresponding to each node are set, and a scheduled starting time tsr at the starting point is inputted (at S702). Then, the accumulated required time period t = 0 and the location L of the virtual present point are set (at S703 and S704) to determine the distance (L = node n, n = 0) to the virtual present point and the virtual time (t = tsr + t) at that point (at S705 and S706). The content of the virtual time t determined is displayed (at S707) to continue the virtual run (at S708). It is then decided (at S709) whether or not the virtual present point has reached the node n + 1. If the virtual present point is midway between the node n and the node n + 1, the routine is returned to Step 707, at which the time determined at the previous time is displayed. If the node n + 1 is reached, the time is determined (at S710) for updating the time by the following Equation :

$$t = t + \text{(distance between nodes n and n + 1) } /Vn.$$

Then, the node is updated to the next node (i.

e., n = n + 1), and the routine is returned to Step 707, at which the time t determined at Step 710 is displayed.

In case the present system is installed for use on the vehicle after its schedule has been made at home, the route of the past actual run, and the day and time of the run, and the required time period are stored in the memory means on the basis of the scheduled route planed in advance, so that the file can be called and displayed for each goal. As a result, the comparison between the required time period calculated by the system and the time period actually required in the past can be made to help a next plan. Moreover, the day and time and the required time period of the past run are stored as the data so that the past average value can be calculated to deduce the required time period.

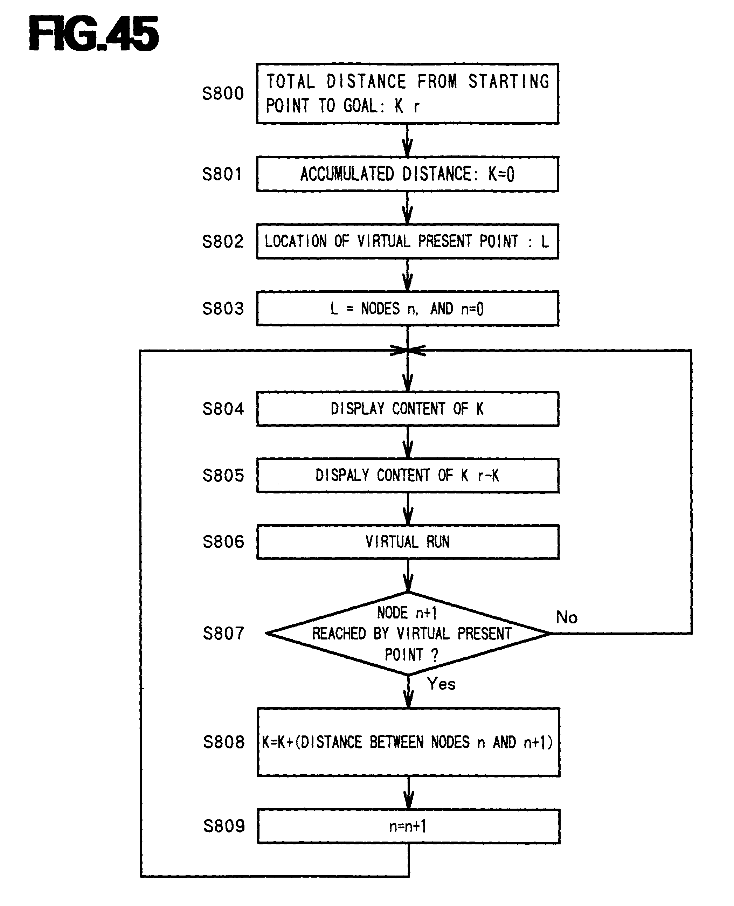

Fig. 45 shows a covered distance and remaining distance displaying flow. The present function is to display the covered distance from the starting point to the vehicle position on the route and the remaining distance from the virtual present point to the goal when the virtual run is executed by scrolling the map with the vehicle position being fixed on the map display screen.

In Fig. 45, the total distance KT from the starting point to the goal, the accumulated distance K = 0 and the location L of the virtual present position are set (at S800, S801 and S802). Then, the internode accumulated distance obtained by the operations of Fig. 38, that is, the content of the covered distance K from the starting point is displayed (at S804), and the remaining distance (KT - K), i.e., the difference between the total distance and the covered distance is determined and displayed (at S805) to continue the virtual run (at S806). It is then decided (at S807) whether or not the virtual present point has reached the node n + 1. If this answer is NO, the routine is returned to Step 804, at which the various information including the covered distance and the remaining distance is continuously displayed.

When the virtual present point reaches the node n + 1, the covered distance K is determined by the following Equation (at S808) :

$$K = K + \text{(distance between the nodes n and n + 1).}$$

Then, the node is updated (n = n + 1) (at S809), and the routine is returned to Step 804, at which the covered distance and the remaining distance are updated.

The present invention includes the following modes of embodiment.

(1) In the present embodiment, the means for setting the route between two set points is constructed such that the route between the two points is searched by the system so that the virtual running function may be realized along the searched route. However, the setting of the route between the two points could be determined by designating the points or roads in advance by the user. Moreover, the route can be determined by following the road displaying portion on the displayed map screen.

(2) The present embodiment is constructed to scroll the virtual run screen downward from the top but can be modified to scroll the same upward from the bottom. Moreover, there can be given an inverting function to switch the scrolling direction from the downward direction to the upward direction so that the scrolling directions may be switched by the section of the user.

(3) The present embodiment is constructed in the mode in which the map display device can be utilized as the navigation system, but the present invention should not be limited to that embodiment but can be embodied as the system which is given only the virtual run mode while separating the navigation function. In this modification, the route information designed by the map display means is stored in the media such as the IC card or the floppy disk and is read by the navigation system installed on the vehicle so that it may be used for the route guidance.

(4) The present embodiment can also be used as if the user went on a journey on the home TV set, by combining it with a picture data such as a computer graphic screen or a photograph.

Here will be described one embodiment of the navigation system in which a detour point is set for a set route thereby to search the route passing the detour point on the set route and returning to the set original route from the detour point.

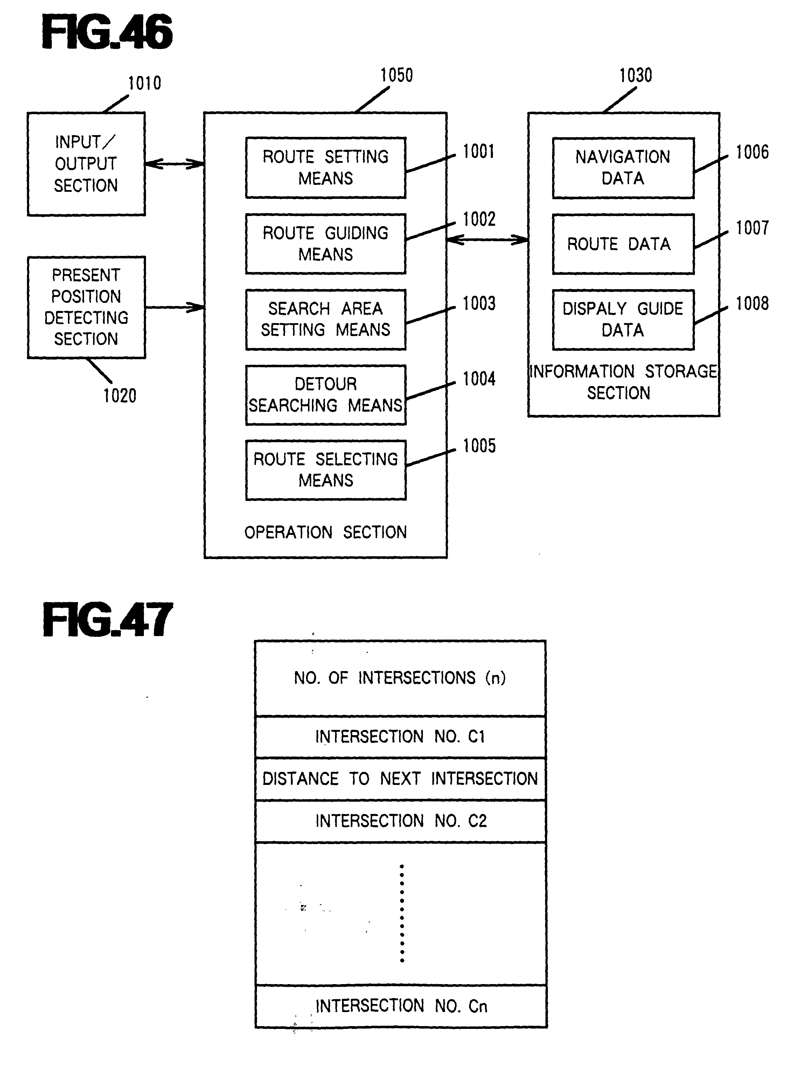

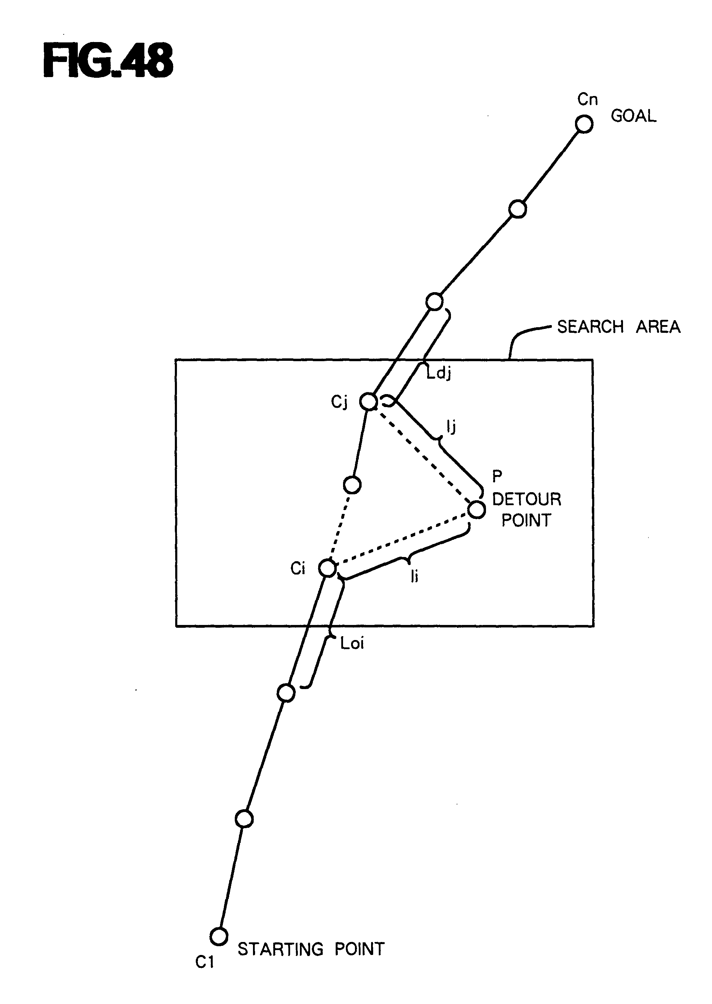

Fig. 46 is a diagram for explaining one embodiment of a navigation system to which is applied the map display system of the present invention ; Fig. 47 is a diagram showing a construction example of the route data stored with the information relating to an intersection array of a searched route ; and Fig. 48 is a diagram showing an example of a search area for setting a detour in the searched route.

In Fig. 46, an input/output section 1010 is equipped with a display, a speaker, a touch panel and a button switch for inputting / outputting the information concerning the route guidance. A present position detecting section 1020 detects the information concerning the present position of the user's vehicle by using the various sensors and the GPS receiver. An information storage section 1030 stores a navigation data 1006 containing the map data necessary for calculating the route, a calculated route data 1007 and a display guide data 1008 necessary for the guidance. An operation section 1050 includes route setting means 1001, route guiding means 1002, search area setting means 1003, detour searching means 1004 and route selecting means 1005, and executes a route setting operation, a display guiding operation necessary for the route guidance and controls the entire system. By inputting the present point or the staring point and the goal from the touch panel or the button switch of the input/output section 1010, moreover, the route is set by the route setting means 1001 of the operation section 1050 to produce the route data 1007, and the guidance of the route is performed from the display or speaker of the input/output section 101 by displaying the route by the route guide means 1002. The route data 1007 obtained by setting the route is stored as the information concerning the number of intersections from the starting point to the goal, the Nos. of the individual intersections, and the intersection array of the route having its distance searched till the next intersection, for example, as shown in Fig. 47. The navigation system of the present embodiment is enabled to partially correct the route around the once - set route by designating a detour point P, as shown in Fig. 48, for the once - set route. For this operation, there are provided the search area setting means, the detour searching means 1004 and the route selecting means 1005. The search area setting means 1003 sets the search area from the detour point P, as shown in Fig. 48, when the detour point P is designated by the input/output section 1010 ; the detour searching means 1004 executes the route search to the detour point for each of intersections Ci to Cj in the search area set by the search area setting means 1003; and the route selecting means 1005 selects such as route as passes through the detour point P to have the shortest distance (Loi + Ii + Ij + Ldj) in the search area. Moreover, the route selecting means 1005 selects the route which has selected only the intersections ahead of the present point, in case the present point is in the area.

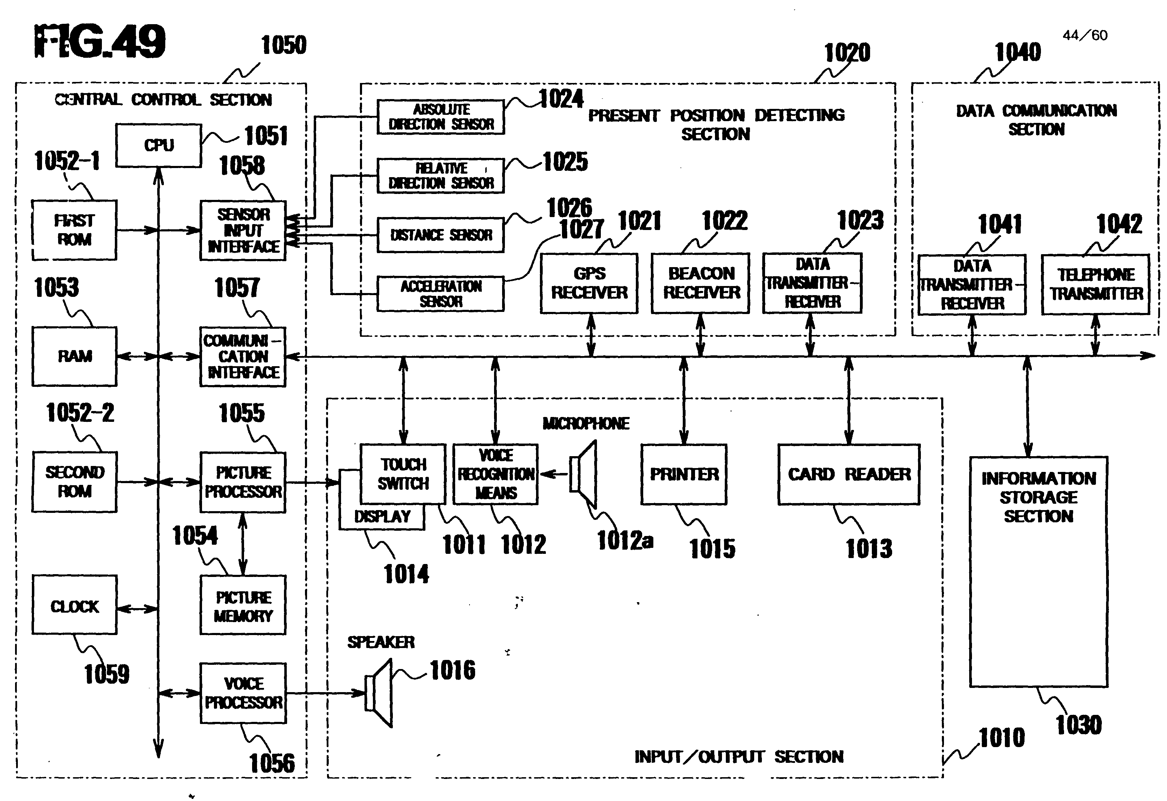

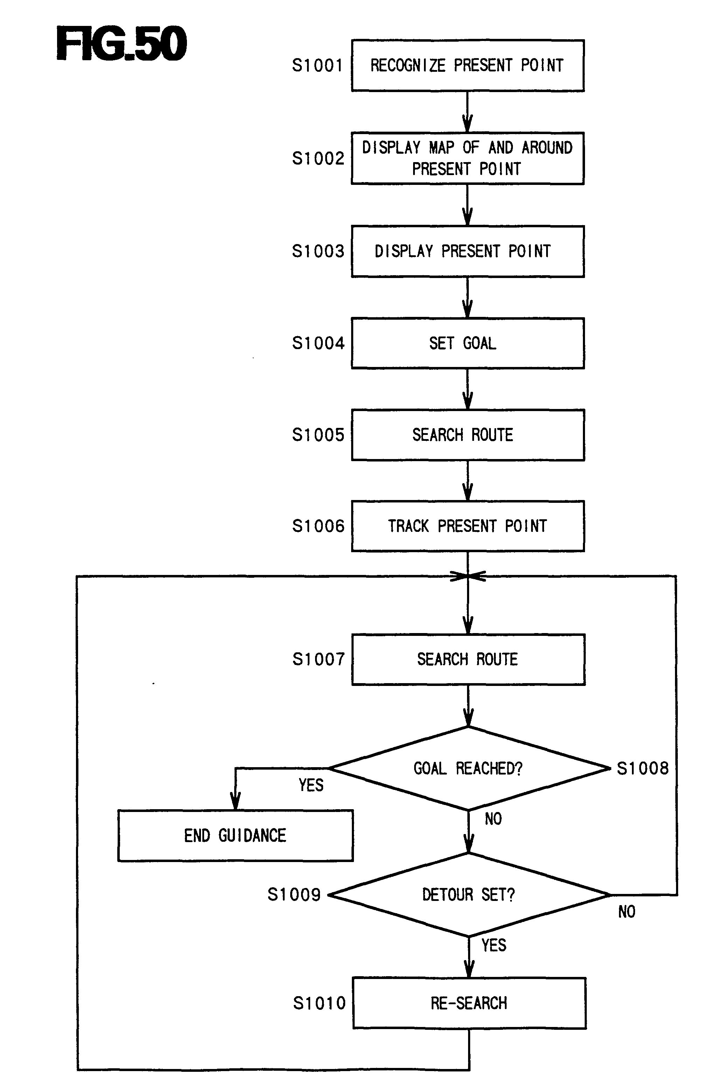

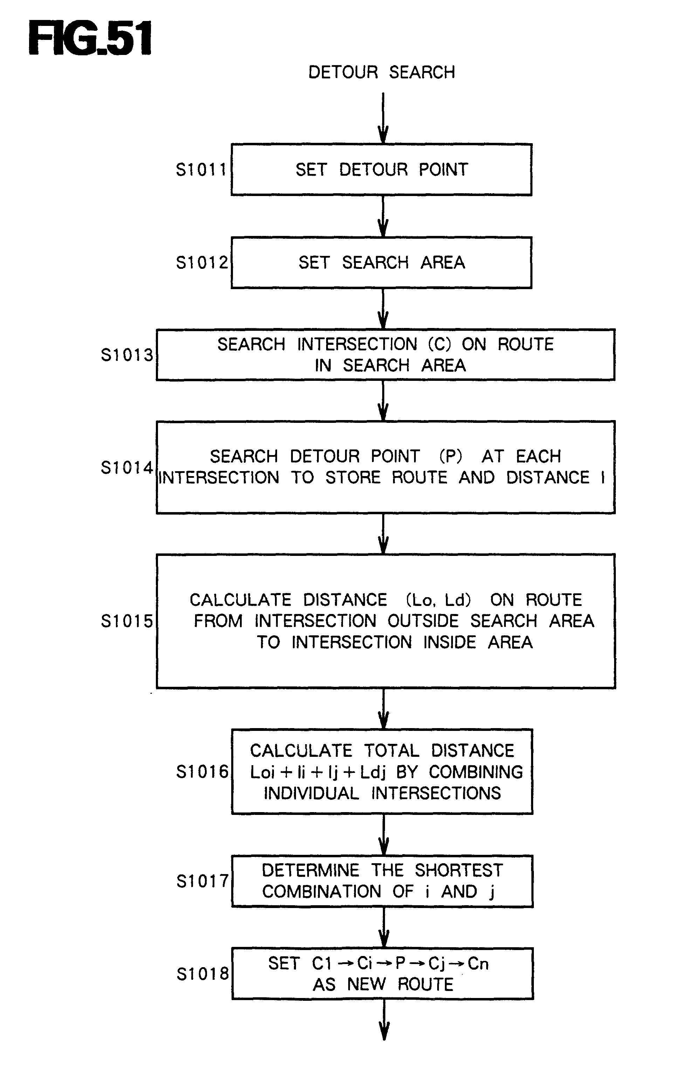

Here will be described a more specific construction of the individual portions of the navigation system having the detour searching function according to the present embodiment. Fig. 49 is a diagram showing a construction example of the individual portions of the navigation system ; Fig. 50 is a diagram for explaining the entire processing flow of a route guide system ; and Fig. 51 is a diagram for explaining a detour searching flow.

In Fig. 49, the input/output section 1010 has functions to input the goal and to instruct the operation section (central control section) 1050 of the navigation by the will of the user and to output the data of the processed data or the data of the data communication to the printer so that the guide information may be spoken and/ or displayed in the screen when the drivers requires. In order to realize these functions, the input section is equipped with a touch switch 1011 for inputting the goal in terms of a telephone No. or coordinates and for requesting the route guidance, a voice recognizer 1012, and a recording card reader 1013 for reading out the data recorded in the IC card or the magnetic card. Moreover, the output section is equipped with a display 1014 for displaying the input data in the screen and for displaying the route guidance automatically in the screen upon request of the driver, a printer 1015 for outputting and printing the data processed by the operation section (central control section) 1050, the data stored in the information storage section 1030 and the communication data transmitted from the information center, and a speaker 1016 for outputting the route guidance in a voice.

The display 1014 is constructed of a color CRT or a color liquid crystal display to display in colors all the screens necessary for the navigation such as the route setting screen, the section map screen or the intersection map screen based upon the map data and the guide data processed by the operation section 1050, and to display buttons for setting the route guidance in the screen, and for guiding the route and switching the screens. Especially the information of an intersection to be passed such as the name of the intersection to be passed is temporarily popped up in colors in the section map screen.

This display is disposed in the instrument panel in the vicinity of the driver's seat so that the driver is allowed to confirm the present point of his vehicle and to acquire the route ahead by observing the section map. Moreover, the display 1014 is equipped with the touch switch 1011 corresponding to the display of the function buttons so that the aforementioned operations may be operated on the basis of the input signals by touching the buttons. The input signal generating means thus constructed of the touch panel and the push button switches constitute the input section.

The voice recognizer 1012 constitutes the input signal generating means for producing the signals to be processed by the operation section (central control section) 1050 after it has recognized the coordinate information inputted in voice through a microphone 1012a by the user.

The present position detecting section 1020 is equipped with : a GPS receiver 1021 making use of the global navigation system (GPS) ; a beacon receiver 1022; a data transmitter/receiver 1023 for receiving the corrected GPS signals making use of a cellular phone or a FM multiplex signal ; an absolute direction sensor 1024 made of a geomagnetic sensor, for example ; a relative direction sensor 1025 made of a wheel sensor or a steering sensor, for example ; a distance sensor 1026 for detecting the covered distance from the r.p.m. of the wheels ; and an accelerator sensor 1027.

The information storage section 1030 is a data base stored with the data necessary for the route guidance, such as the map data, the intersection data, the node data, the road data, the photographic data, the goal data, the guide point data, the detailed goal data, the road name data, the branch point data, the address data, the display guide data, the voice guide data or the route data.

The data communication section 1040 is equipped with : a data transmitter/receiver 1041 for transmitting/receiving the data with an external information center stored with massive route guiding information to provide the information upon request of the user and for transmitting/receiving the data to input the point coordinates by using the information of a goal which is stored in advance in the information storage media (i.e., the digital data storage means) such as the electronic note or the IC card by the user; and a telephone transmitter 1042 for automatically accomplishing the telephone transmission to acquire the information of the periphery of a point by designating the point and the telephone transmission to communicate through the telephone with the goal after this goal has been set.

The operation section (central control section) 1050 is equipped with a CPU 1051 for executing the arithmetic operations ; a first ROM 1052 - 1 stored with the programs for the route search, the programs for the display control necessary for the route guidance and the voice output control necessary for the voice guidance, and the data necessary for the programs; a RAM 1053 for temporarily storing the guide information of the searched route and the data being processed ; a second ROM 1052 - 2 stored with the display information data necessary for the route guidance and the map display ; a picture memory 1054 stored with the picture data to be used for the screen display on the display ; a picture processor 1055 for fetching the picture data from the picture memory on the basis of the display control signal coming from the CPU 1051 to process the picture data graphically and output the processed data to the display ; a voice processor 1056 for synthesizing the voice, phrase, sentence and sound, which is read out of the information storage section 1030 on the basis of the voice output control signal coming from the CPU, to convert it into analog signals and output the analog signals to the speaker ; a communication interface 1057 for transferring the input/output data through communications; a sensor input interface 1058 for fetching the sensor signals of the present position detecting section ; and a clock 1059 for filling the date and time in the internal diagnostic information. Here, the driver can select either the screen display or the voice output for the route guidance.

Here will be described the processing flow of the navigation system which is provided with the detour searching function according to the present embodiment.

When the program of the route guiding system is started by the CPU 1051, the map of and around the present point is displayed at first by recognizing the present point by the present position detecting section 1020, as shown in Fig. 50, and the name and so on of the present point are displayed (at S1001 to S1003. Next, the peripheral map is extracted from the place name index and the national map to set the goal, and the route from the present point to the goal is searched (at S1004 and S1005). At Step S1005, the route from the present point to the goal may be designated on the displayed map or set by another method.

When the route is determined, the route guidance is repeated till the goal is reached, while tracing the present point by the present position detecting section 1020 (at Steps S1006 to S1009). In case an input is made for setting a detour before the goal is reached, the search area is set for re - search so that the route guidance is likewise repeated till the goal is reached (at Steps S1006 to S1010).

The route data obtained by the aforementioned route searching operation (of Step S1005) is composed of a list of the No. n of intersections, the individual intersection Nos. and the distance to a next intersection. On the basis of this route data, the intersections are indicated by circles, and the roads joining the intersections are indicated by lines thereby to exemplify the detour point P and the search area, as shown in Fig. 48. Letters Loi designate a distance between an intersection, which is located before the route enters the search area from the side of the starting point, and the next intersection (i.e., an entrance intersection) Ci, which is located in the search area, and letters LDj designate a distance between an intersection (i.e., an exit intersection), which is located before the route leaves the search area, and the next intersection which is located at the side of the goal and outside of the search area. Moreover, the distance of the route, which is searched from the entrance intersection Ci in the search area to the detour point P, is designated at Ii, and the distance of the route, which is searched from the detour point P to the exit intersection Cj, is designated at Ij.

The detour search (of Step S1010) of this case, in which the detour point is set, is executed by the flow shown in Fig. 51. Specifically, the detour point P is set at first, and the search area is set (at Steps S1011 and S1012) by designating the intersections and an arbitrary area on the route and by calculating the distances between the detour point and the intersections on the route. Next, the intersections on the route in the search area are searched, and a search is made up to the detour point P for each of the intersections so that the routes and their distances Ii and Ij are stored (at Steps S1013 and S1014). Moreover, the distances Loi and Ldj on the routes from the intersection outside of the search area to the intersection inside of the area are calculated (at Step S1015), and their sum of Loi + Ii + Ij + Ldj is calculated (at Step S1016) to determine such a combination of i and j ($i \leqq j$) as to give the shortest total distance (at Step S1017). Thus, the route C1 → Ci → P → Cj → Cn is set as the new one (at Step S1018).

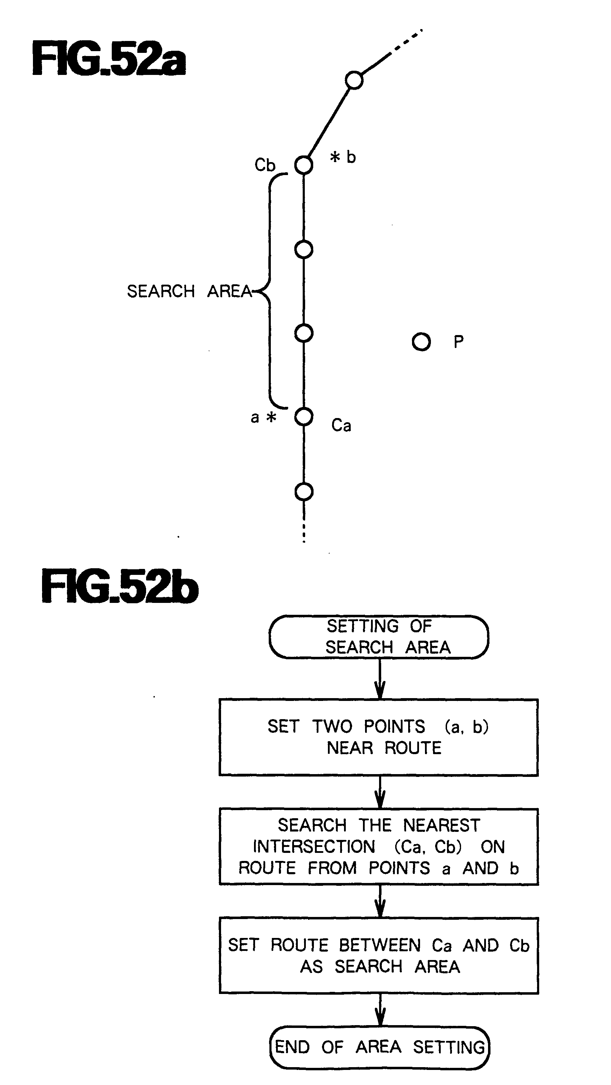

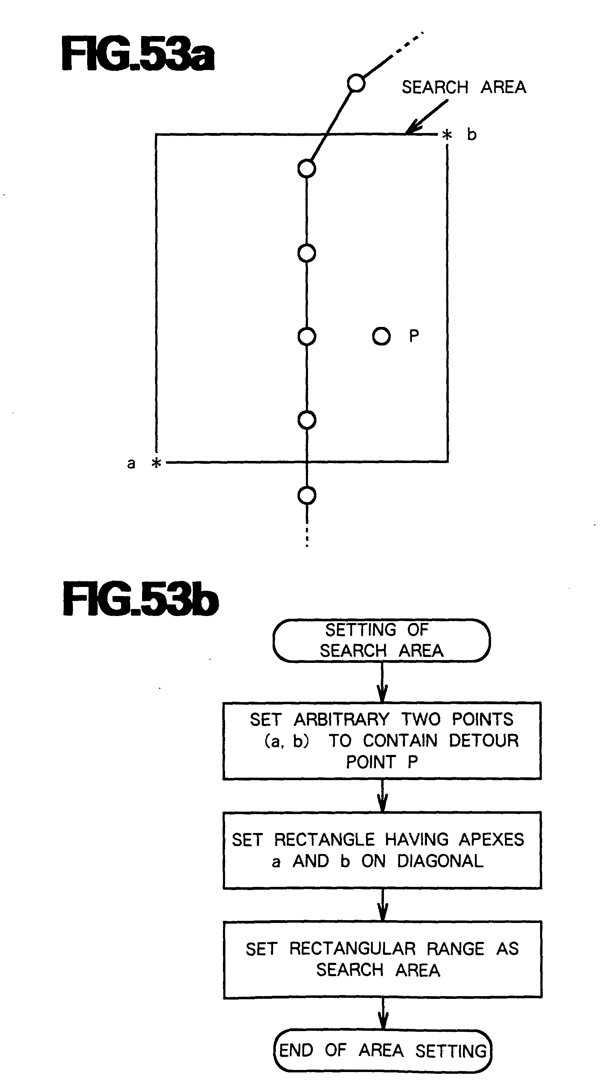

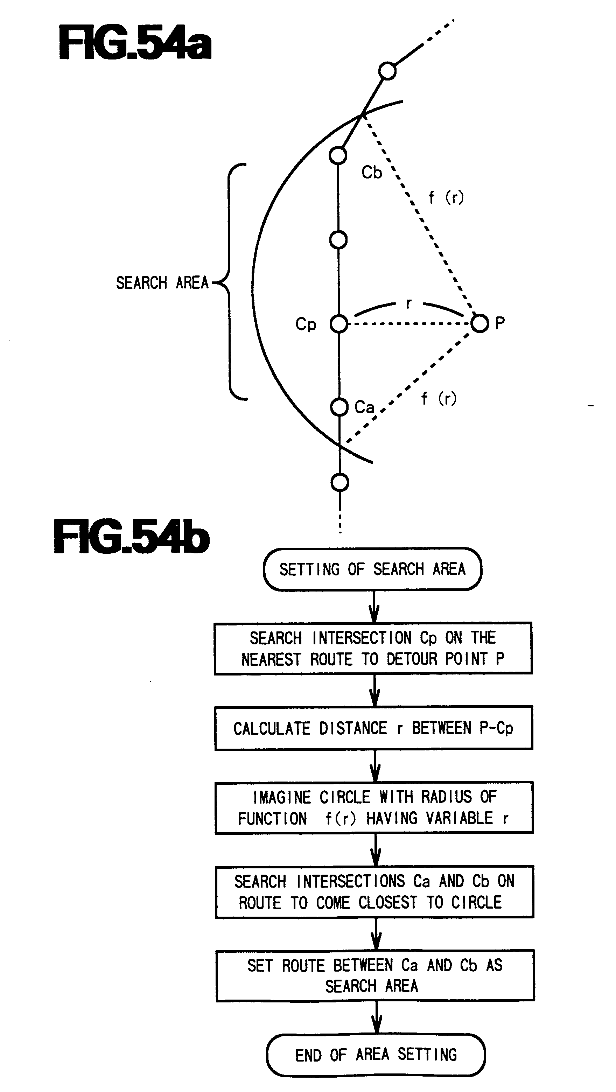

Here will be described a method of setting the search area. Fig. 52 presents diagrams for explaining an example for setting the search area by designating an intersection on the route ; Fig. 53 presents diagrams for explaining an example for setting the search area by designating an arbitrary area ; and Fig. 54 presents diagrams for explaining an example for setting the search area automatically.

In case an intersection on the route is to be designated as a method of setting the search area in the operation of Step S1012, two points a and b in the vicinity of the route are set, as shown in Fig. 52, to search intersections Ca and Cb on the route nearest from the two points a and b, to set the intermediate route as the search area. In case an arbitrary area is to be designated, on the other hand, arbitrary two points a and b are set to include the detour point P, as shown in Fig. 53, to set a rectangle having their diagonal apexes positioned at those two points a and b, to set the inside of the rectangle as the search area. In an automatic setting case of designating neither the intersections nor the areas, unlike the aforementioned cases, there is searched an intersec tion Cp on the route which is the nearest by a straight distance r to the detour point P, as shown in Fig. 54. Then, imagining a circle having a radius expressed by a function f (r) using the distance r between the point P and the point Cp as a variable, the intersections Ca and Cb on the route which is the nearest to the circuit around the detour point P are searched to set the intermediate route as the search area.

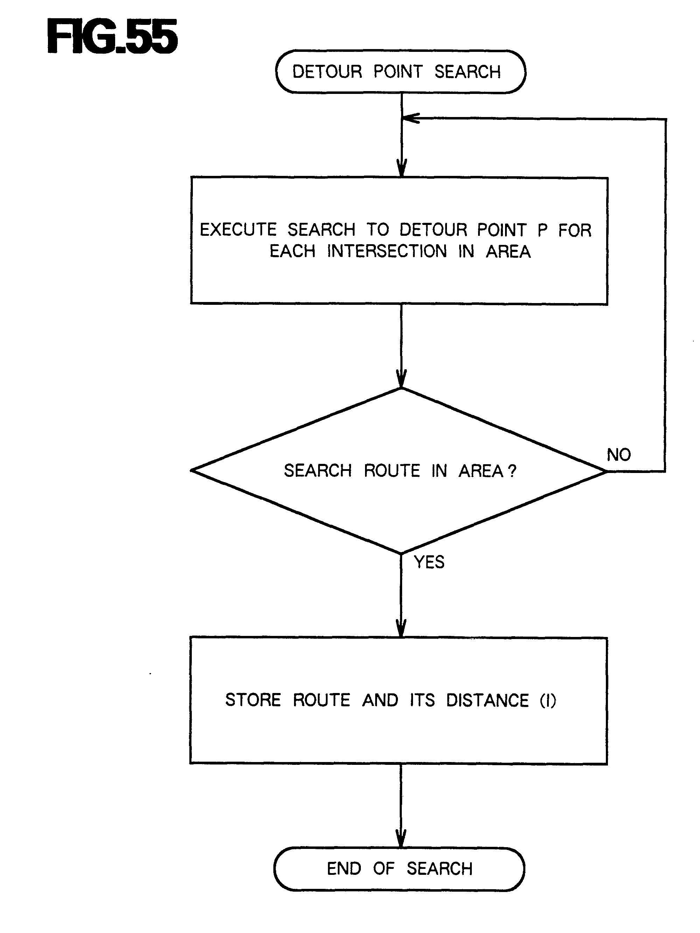

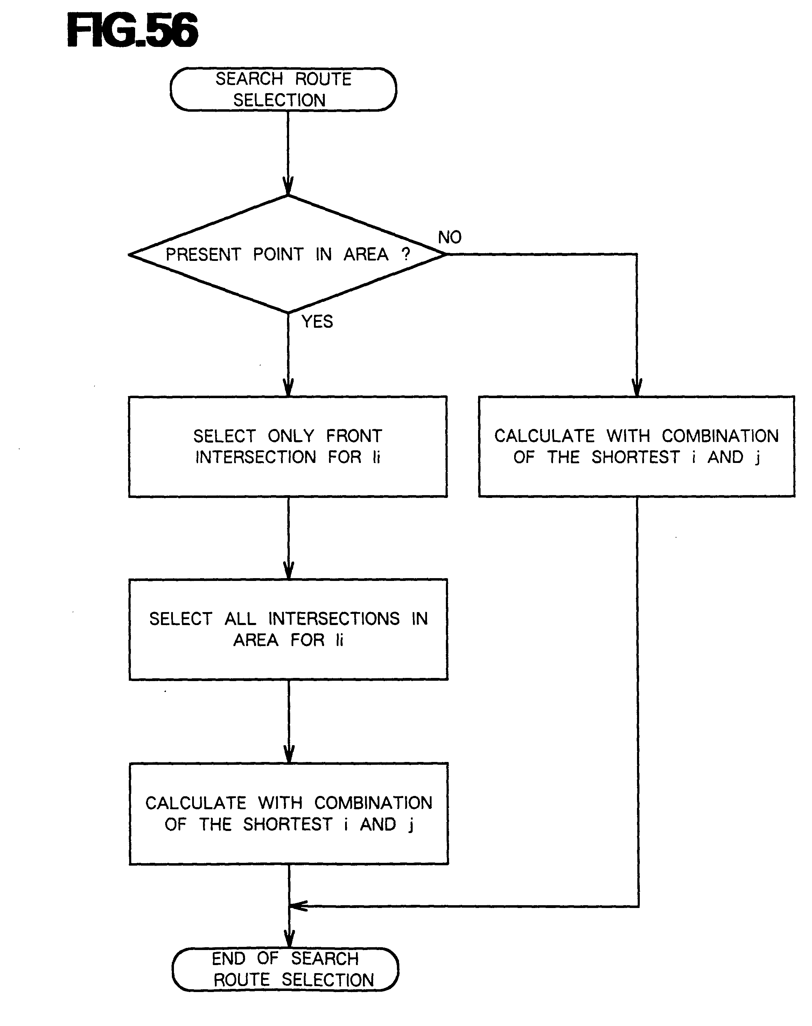

Fig. 55 is a diagram showing an example of the subroutine for searching a detour point, and Fig. 56 is a diagram showing an example of the subroutine for selecting a search route.

In the search of the detour point to be executed at Step S1014, the route to go out of the area need not be set in case the search area is two - dimensionally set, as has been described with reference to Fig. 53. As shown in Fig. 55, however, a search to the detour point P is performed for each intersection in the area while examining whether or not the search route is within the area, as shown in Fig. 55, and the route and its distance I are stored. In the selection of the search route to be executed at Step S1017, whether or not the present point is within the search area is examined, as shown in Fig. 56, in case the vehicle is running with the route guidance. If the present point is not in the search area, the combination of i and j for the shortest total distance, as has been described with reference to Fig. 51, is determined as it is. If the present point is in the search area, on the other hand, the combination of i and j for the shortest total distance may be determined by selecting only the intersections ahead for Ii and by selecting all the intersections in the search area for Ij.

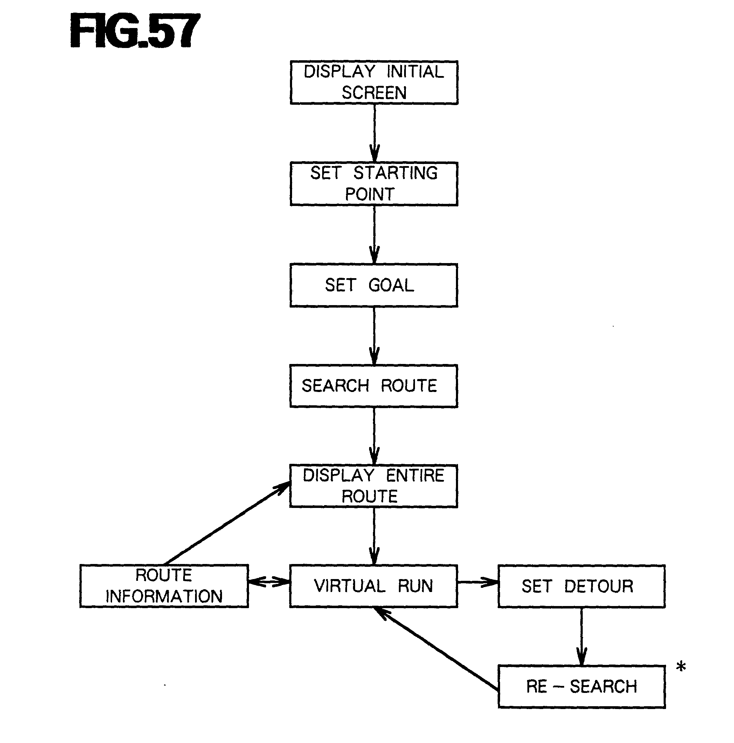

Fig. 57 is a diagram for explaining a processing flow including the detour search in the case of a virtual running system. In case the virtual running system is started, the starting point and the goal are set at first from the initial screen display to search the route between them. When the route is set, the entire route is displayed, and the virtual run is then started along the route. If the detour setting comes midway, the detour search is executed like before, and the virtual run is continued along the corrected new route.

The navigation system having the detour searching function according to the embodiment thus far described comprises : a route data stored with the information concerning the intersection array of a set route ; search area setting means for setting the search area from a detour point by designating said detour point; detour searching means for executing the route search passing through said detour point for returning to an intersection in a search area set by said search area setting means, for each of the intersections in said search area ; and route selecting means for selecting the route passing through the detour point on the basis of said search result, whereby the route search in the case of a detour can be accomplished within a short time period. In case, moreover, the present position is present in the search area, what is selected is the route to be joined to the intersection, in which the route toward the detour point is present ahead of said present position, so that the route can be easily changed even while running along the first set route or even in case a place to be called at comes to mind.

In case, moreover, the first set route fails to match the desire of the user, as in case a route to be followed is present in the district but is not contained, the route can be changed to the desired one by designating the point on the road as the detour. Even in case the user makes an ambiguous desire "to pass around here", the route can be changed to the desired one by designating the central portion of that area. As the method of confirming the set route, there is the virtual run mode, and the route can also be automatically changed in this case by setting the detour so that the information such as the covered distance, the elapsed time period and the toll can be updated and confirmed. As a result, the route can be partially changed while exploiting the once set route so that the route according to the intention of the user can be easily set for a short time period.

In the navigation system of the prior art, as disclosed in Japanese Patent Laid - Open No. 3899/1990, for example, a desired transit point or the like can be set as the condition for executing the search. However, if the transit point is later added to the searched route or if the route is partially changed, the route search is executed again from the start thereby to make the addition of the transit point or the partial change substantially impossible. While running on the searched route, it is likewise impossible to set a new detour or to change the route, so that the route from the present point to the goal has to be newly searched again. When the searched route fails to match the desire of the user, the transit point could be set again to search the route, but the route search also has to be done from the first. In any event, the route search is wholly redone from the first to take a long time. Still the worse, there arises a problem that the initial route may be absolutely changed depending upon the first route, the road situations and the detour point. The embodiment of the navigation system having the aforementioned detour searching function can solve the above - specified problem so that it can change the route by a partial search even in case a detour is designated for the once set route.

In the embodiment of the navigation having the aforementioned detour searching function, the search area is automatically set by imagining the circle which has its radius expressed as a function of the distance between the detour point and the nearest intersection on the route, but the search area may be set by searching the intersection on the route while using the distance from the nearest intersection as a criterion. Moreover, the aforementioned embodiment discloses the method for determining the shortest route as the method of searching the route passing through the detour point. However, the optimum road may be determined by using the Dijkstra method from not only the data such as the road and intersection information stored in the information storage section but also the various information such as the distance information, the average degree of business of the road and the number of lanes of the road.

Here will be described an embodiment of the navigation system for displaying the denser map for the point closer to the set point when the map is to be displayed.

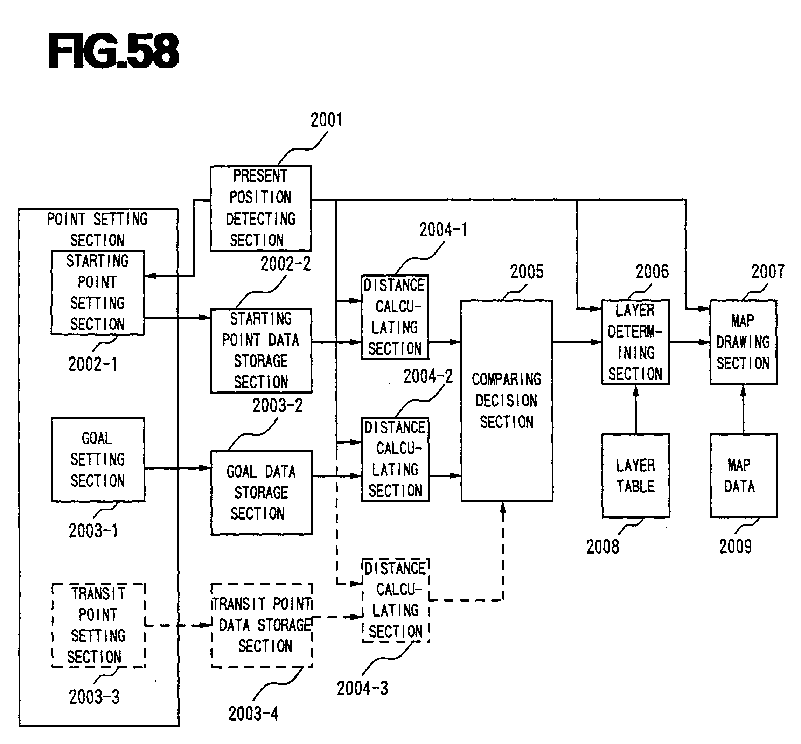

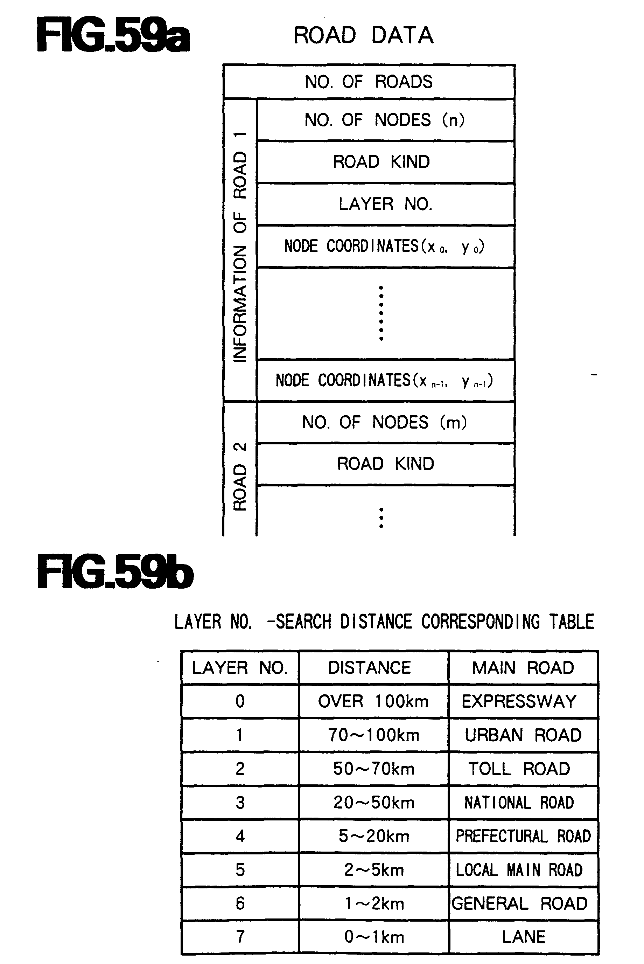

Fig. 58 is a diagram for explaining a navigation system according to the present embodiment, and Fig. 59 presents diagrams showing a construction example of a road data and a layer No.-search distance corresponding table.

In Fig. 58, a present position detecting section 2001 detects the present position by using a variety of sensors, as will be described in the following, to output at least the coordinates of the present position and the kind of the road having the present position, in accordance with the present proposal. A starting point setting section 2002 - 1 sets the present position, which is calculated by the present position setting section 2001, as the starting point and stores the set present position as the data containing coordinates in a starting point data storage section 2002 - 2. A goal setting section 2003 - 1 is arbitrarily set by the user through a later - described input section (or point setting section) and stores the set goal as the data containing coordinates in a goal data storage section 2003 - 2. A transit point setting section 2003 - 3 is also set by the user and stores the data containing the coordinates of the set point in a transit point data storage section 2003 - 4. Distance calculating sections 2004 - 1, 2004 - 2 and 2004 - 3 calculate the distances on the basis of the coordinates detected by the present position detecting section 2001 and the individual coordinates stored in the starting point data storage section 2002 - 2, the goal data storage section 2003 - 2 and the transit point data storage section 2003 - 4. A comparing decision section 2005 compares and decides the lengths of the individual distances and selects the shorter distance. A layer table 2008 is a layer No. - search distance corresponding table for registering the distance and the road kind for each layer No. and for deciding the layer from the distance and the road kind. A layer determining section 2006 determines the layer from the distance information of the comparing decision section 2005 with reference to the layer table 2008 and determines the layer corresponding to the kind information of the running road as the layer of the drawn road in case the determined layer dominates the layer corresponding to the kind information of the running road of the present position detecting section 2001. In short, the layer determining section 2006 determines the lower - rank one of the layer corresponding to the distance information of the comparing decision section 2005 and the layer corresponding to the kind information of the running road. A road data 2009 is stored as the road information with the node information, the road kind and the layer No. as the joining information. A map drawing section 2007 reads the road information from the road data 2009 and joins the nodes to draw and display the road such that the road at a rank equal to or higher than that of the layer determined by the layer determining section 2006 is displayed in an emphasized manner. Moreover, the map drawing section 2007 may change the reduced scale of the map to be drawn in accordance with the determined layer. In this way, the reduced scale according to the amount of road information can be selected with a view to retaining the visibility. Moreover, the name of an intersection may be displayed in the screen within the forward and backward range of several tens meters by giving the road data 2009 the intrinsic data such as the intersection name and by confirming the passage through the intersection by detecting the present point, and the name of the road being followed may be displayed as "NATIONAL ROAD NO. 19", for example.

An example of the construction of the road data having the layer structure to be used as the map drawing data in the aforementioned map drawing section 2007 is shown in Fig. 59 (a). This road data has, as the information of each road, the number of nodes forming the road, the road kind, the layer No. and the coordinates of each of the actual nodes. The layer No. is determined by the distance between the starting point and the present point and between the present point and the goal, and its corresponding table is the layer No. - search distance corresponding table, as shown in Fig. 59 (b). This layer No. - search distance corresponding table has such layer designations that the layer 0 has the longest distance more than 100 Km and that the layers at the lower ranks, e.g., the layers 1, 2, - - -, and so on have the shorter distances until the layer 7 takes the shortest distance less than 1 Km. The layer 0 is assigned to an expressway ; the layer 1 is assigned to an urban expressway ; the layer 2 is assigned to a toll road ; the layer 3 is assigned to a national road ; the layer 4 is assigned to a prefectural road ; the layer 5 is assigned to a local major road ; the layer 6 is assigned to a general road ; and the layer 7 is assigned to a general road including a lane. Thus, the layers are so assigned that the layers at the higher ranks express the roads necessary for running the longer distances. However, these layer Nos. are not determined exclusively by the road kinds but by considering the kinds of roads to be joined to that road and are stored in the information storage section 1030. In case the road to be joined from a national road to an interchange of an expressway is a general road, for example, it has to be displayed so that the driver may take the road information to the interchange so as to enter the expressway while running on the national road, and the road to be joined has to be given the same layer No. as that of the national road even if it is a general one. On the other hand, even a toll road is given the same layer No. as that of a general road if it is either passed only when it leads to a near goal or blinded, such as a toll road or a skyline to go around a pleasure resort. Thus, the layer No. is decided by the joining relation of the road because it is stored in advance in the map data. In this way, the method of deciding the layer No. of the road may be exemplified such that the route search is performed in advance by an arbitrary combination of the starting point and the goal so that the layer No. in the map data may be decided decided on the basis of the searched result.

And, the layer No. of the road to be displayed is decided according to the distances between the starting point and the goal and between the present point and the goal and by considering the layer No. of the road being followed. If, therefore, the distance between the present point and the goal exceeds 100 Km, the road of layer 0 is displayed in the emphasized manner. In case, however, the road of layer 3 is being followed at present, the roads having layer numbers of 3 or higher are displayed in the emphasized manner. Moreover, the more roads are sequentially added and displayed in the emphasized manner on the basis of the judgment that the more detailed roads are required as the goal is approached the closer, such that the road of layer 4 is added when the goal is within the range of 20 Km, such that the road of layer 5 is added within the range of 5 Km, such that the road of layer 6 is added within the range of 2 Km, and such that the road of layer 7 is added within the range of 1 Km.

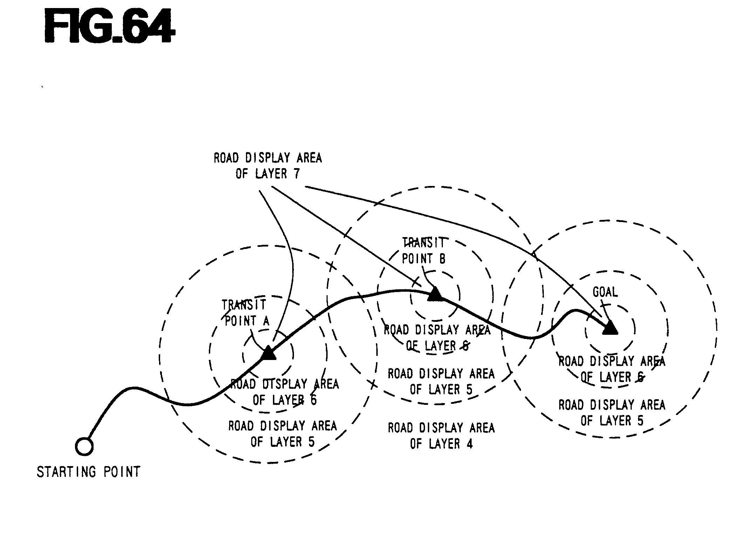

Although the display between the starting point and the goal has been described in the aforementioned embodiment, in case a plurality of transit points or goals are set, as shown in Fig. 64, the layer at the lower rank is decided as the transit point A is approached the closer from the starting point, and the layer at the higher rank is decided as the transit point B is approached the closer from the transit point A. Moreover, the layer at the lower rank is also decided as the transit point B is approached the closer, and the layer at the higher rank is decided as the transit point B is left the farther after having been passed. At an intermediate position between the transit points A and B, in which the layers set by the transit points A and B overlap, the layer of the shorter one of the distances between the present position of the vehicle and the points A and B is adopted. If the vehicle is positioned closer to the transit point B, the display is made according to the layer set at the transit point B. In the overlapping portion of the layers determined by the transit points A and B, on the other hand, the layer at the lower rank at the point A or B may be adopted independently of the distances between the present position and the points A and B.

By thus interchanging the layers according to the distances, the roads to be emphasized and displayed are decided to make it easy to select what road is adopted for the driver to go to the goal. Here, the reason why the layer No. of the road to be displayed on the screen adopts not only the present point and the goal or the distance between the present point and the goal but also the layer No. of the road being actually followed, as its parameters is the necessity for a detailed road having a layer No. at a lower rank so that the vehicle may return to a major road such as a national road when it goes out of the major road into such a lane as is not displayed in the emphasized manner on the screen.

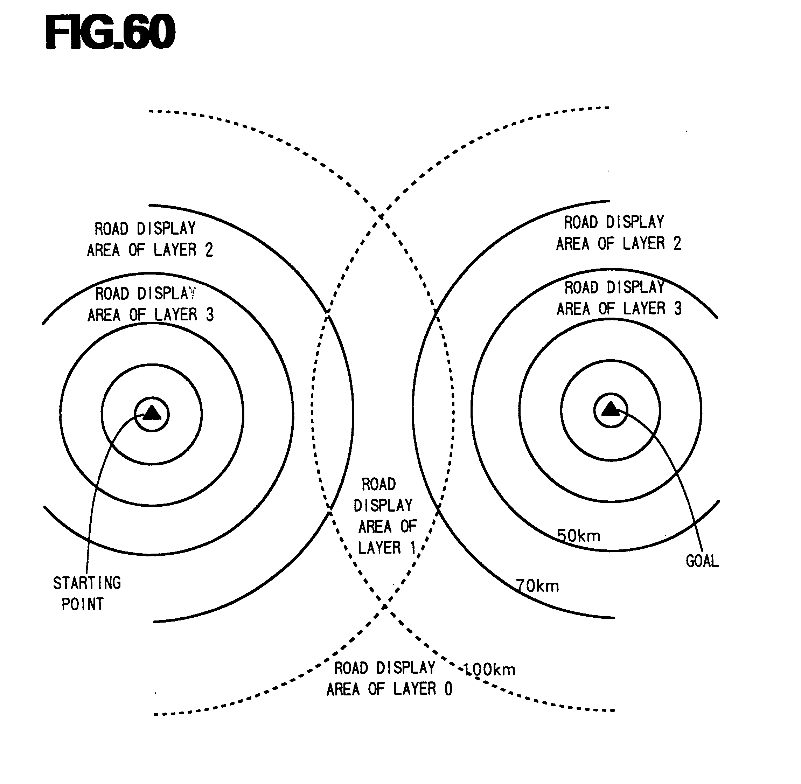

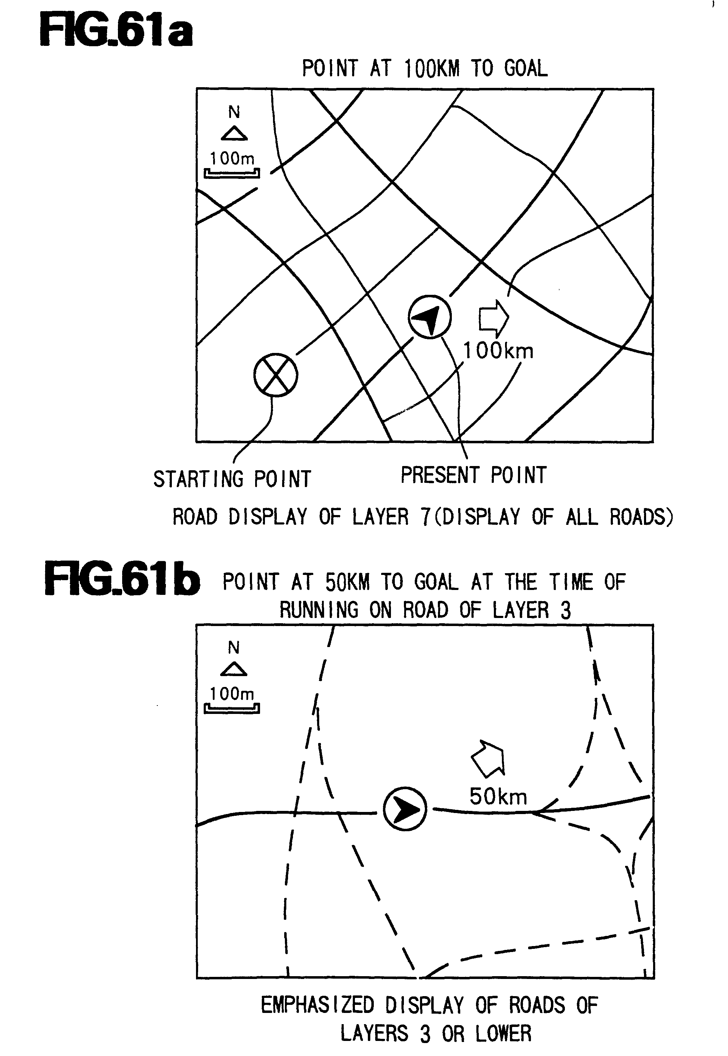

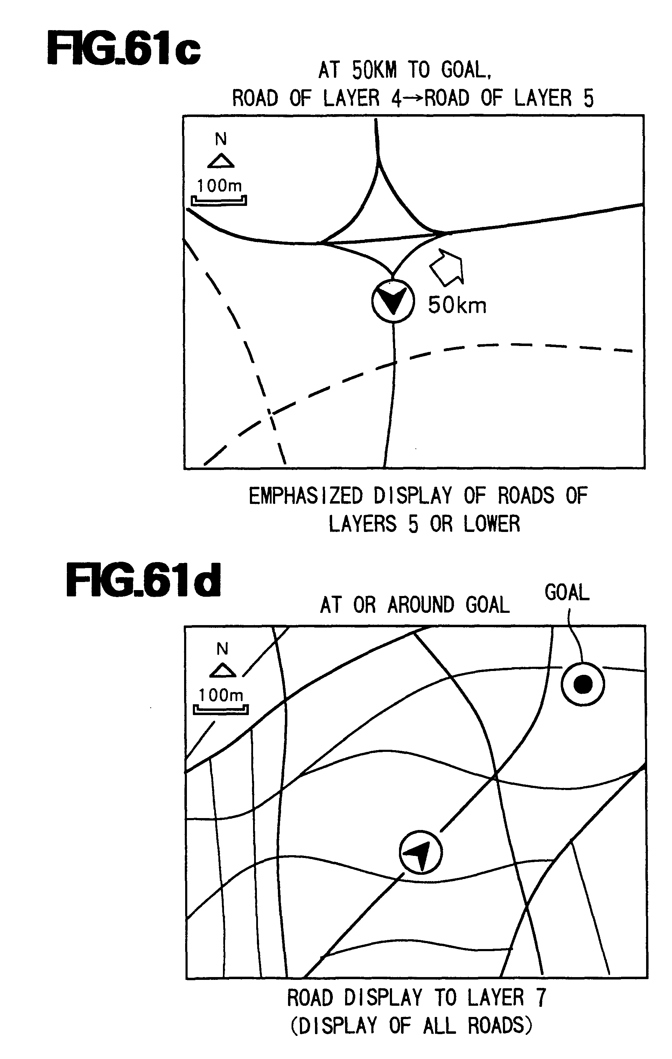

Fig. 60 is a diagram showing an example of the layer display area which is determined from the distance relation between a starting point and a goal, and Fig. 61 presents diagrams showing examples of the screen display to be changed according to the run from the starting point to the goal.

Now, in view of the running route from the starting point to the goal, the roads as narrow as the lane of layer 7 are emphasized at the starting point, but they take the higher ranks as the starting point is left the farther. Even if the road comes over 70 Km or further over 100 Km in the layer 1, as shown in Fig. 60, the road drops down to the layer 2 at the lower rank if the distance to the goal comes within 70 Km. An example of the display state (of all the roads) of the road of layer 7 in the vicinity of the starting point within 100 Km to the goal is shown in Fig. 61 (a). Moreover, an example of the emphasized display of the roads up to the layer 3 at a point of 50 Km to the goal is shown in Fig. 61 (b). An example of the state, in which the roads up to the layer 4 are emphasized and displayed because the road of layer 4 is missed, is shown in Fig. 61 (c). An example of the state, in which all the roads up to the layer 7 are displayed in the vicinity of the goal, is shown in Fig. 61 (d).

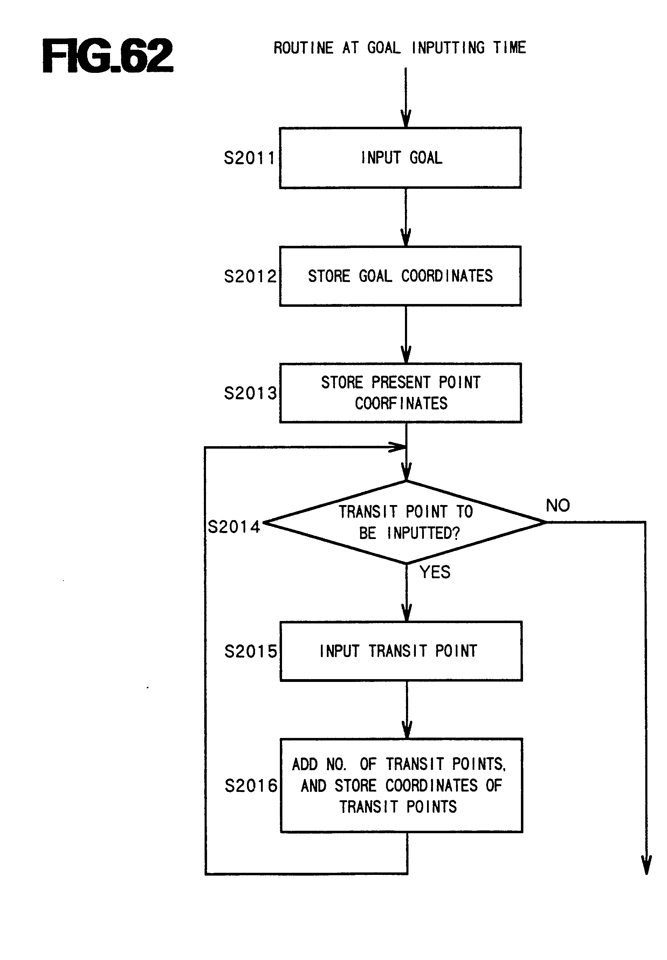

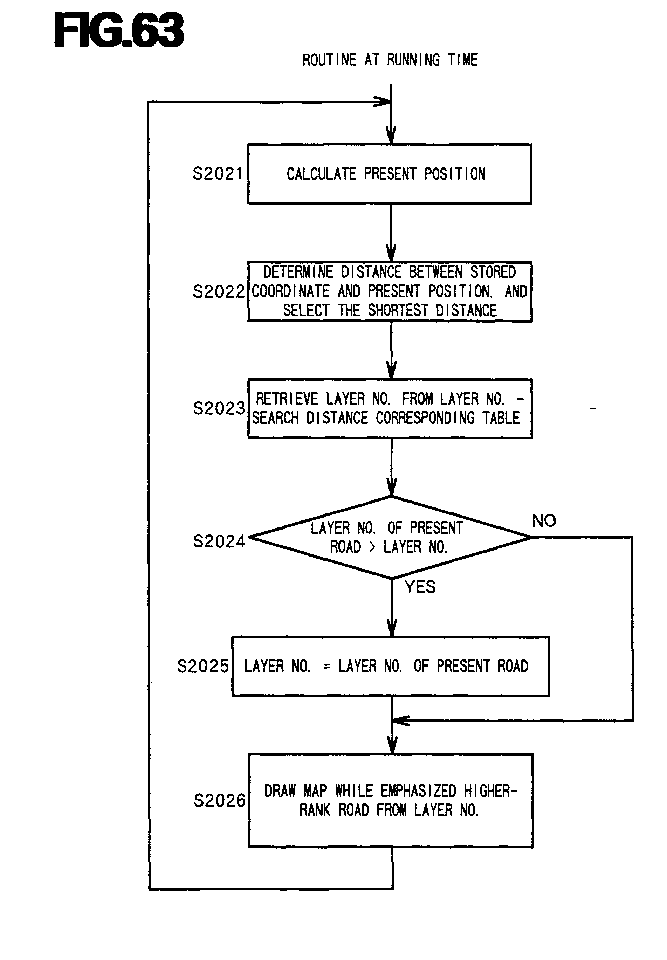

Fig. 62 is a diagram for explaining a goal inputting routine, and Fig. 63 is a diagram for explaining a processing routine at a running time.

Here will be described the entire construction and the processing flow of the navigation system according to the present embodiment.

In case the routine of the navigation system of the present embodiment is to be executed, at the goal inputting time in the CPU 51 of Fig. 49, when the goal is inputted at first, as shown in Fig. 62, the coor dinates of the goal and the coordinates of the present point are stored (at Steps S2011 to S2013). In case a transit point is to be inputted, moreover, it is inputted, and the numbers of transit points are added to store the transit point coordinates (at Steps S2014 to S2016).

At the running time, moreover, the present position is calculated, as shown in Fig. 63, the distances between the coordinates of the goal and the transit points stored and the present position are determined to select the shortest distance (at Steps S2021 and S2022). On the basis of this distance, the layer No. is determined from the layer No. - search distance corresponding table and is compared with the layer No. of the road of the present point (at Steps S2023 and S2024). In case the layer No. of the present road is higher, the map is drawn while emphasizing the roads having layer Nos. at higher ranks than that of the present road. In case the determined layer No. is at a higher rank, the map is drawn while emphasizing the roads at higher ranks than that of the layer No. (at Steps S2025 and S2026).

According to the foregoing embodiment of the navigation system for displaying the denser map as the set point is approached the closer, the map data are given in the layer structure so that the map displays are switched to be automatically emphasized by the map layers which are decided according to the distances from the starting point, the goal and the transit point inputted. As a result, even in case a plurality of points are set, a dense map can be displayed for the periphery of each of the set points whereas a coarse map can be displayed between the individual points, depending upon the distances. Thus, there can be attained an excellent advantage that the driver can acquire the necessary map information easily as in case the driver judges the course from the present point in view of the map display when the traffic is cut off or in a snarl.

Specifically, in the map display system as disclosed in Japanese Patent Laid - Open No. 130412/1990, for example, the degree of detail of the map in an area to be displayed in the screen is changed by recognizing the kind of the road, on which is displayed the present position of a mover, and by controlling the reading of the display elements of the map according to the kind of the recognized road. In case, however, a plurality of transit points other than the goal are set and located on the major trunk roads such as the national roads, the degree of detail of the map being displayed is coarse with reference to the trunk roads so that the reduced scales of the map have to be interchanged for selection when the information of the peripheries of the transit points is desired. In case, moreover, the technique as disclosed in the map display system of Japanese Patent Laid - Open No. 206710/1984 is applied to the system capable of inputting a plurality of points such as the transit points and the goal, the reduced scale and the road display level are decided according to the distance from the present point of the vehicle to a next transit point so that a wide map and a coarse road map are displayed just after the start from the transit point. As a result, there arise a disadvantage that little information is obtained in case the driver is going to decide his future course in view of the displayed maps.

The aforementioned embodiment of the navigation system for displaying the denser map as the set point is approached the closer not only can solve the above - specified problem but also can give the driver both the detailed map information around the set point with the simple construction by changing the map display level, even in case a plurality of points such as the starting point, the transit points and the goal are set, and only the necessary map information at a place apart from the set point.

Incidentally, in the foregoing embodiment, the roads at higher ranks than the decided layer are displayed in the emphasized manner, but only the roads at the higher ranks may be displayed but not the layers at the lower ranks. Alternatively, the hues and color densities of the roads displayed may be changed with the layers. Although, moreover, the layer is determined according to the shorter one of the distances between the starting point and the present point and between the present point and the goal, it may be determined according to the distance between the present point and the goal and the road on which is located the vehicle. In case the drivers becomes stray, the road being followed at present is recognized so that the roads at higher ranks than that of the layer of the present road are displayed or displayed in the emphasized manner. If, however, the proper name of an intersection can be searched and displayed in this case by referring to the place name from the road data or the intersection data, the present point can be confirmed from the name of the intersection on the map in view of the name of the symbol of the intersection being passed, so that the present point can be easily corrected.

Moreover, the navigation system according to the foregoing embodiment should not be especially limited if it is made so simple as to display the present position of the vehicle and the distance or direction to the goal or the transit points by setting the goal and the transit points or if it searches the route to the set goal and transit points and guides the driver along the searched route.

## Claims

1. A route information providing system comprising:

    a storage medium (2) in which map information is stored;
    point setting means (10) for setting at least two arbitrary points;
    route setting means (32) for setting a route between the two set points;
    present position detecting means (4) for detecting the actual present position
    of a vehicle as an actual present point;
    input means(1) for selecting a guidance mode;
    wherein said input means (1) includes navigation instructing means (14) for instructing a navigation mode;
    control means (3) for outputting guidance information related to a route along the set route , wherein said control means (3) outputs guidance information along the route
    set by said route setting means (32) on the basis of the actual present position detected by said present position detecting means (4) if said navigation mode is instructed;

**characterized by**

    virtual vehicle run position determining means (3) for determining a plurality of points on the set route as virtual present points;
    wherein said input means (1) includes virtual run instruction means (13) for instructing a virtual run mode; and
    wherein said control means (3) outputs guidance information along the route set by said route setting means (32) on the basis of the plurality of points determined by said virtual vehicle run position determining means if said virtual run mode is selected.

2. A route information providing system according to claim 1, wherein said control means (3) includes scroll control means (34) for scrolling guidance information by relatively moving a present position on a route along the set route, and said scroll control means is for scrolling guidance information on the basis of the detected actual present position if the navigation mode is instructed and said control means is for scrolling guidance information on the basis of the set virtual present position if the virtual run mode is instructed.

3. A route information providing system according to claim 2, wherein said guidance information is a map containing the actual present position or the virtual present position.

4. A route information providing system according to claim 3, wherein said input means (1) includes route information display instruction means (12) for instructing to display detailed route information set by said route setting means (32) and said control means (3) displays a screen containing the detailed route information if instructed to display the detailed route information by said route information display instruction means while scrolling a map by said scroll control means (34).

5. A route information providing system according to claim 4, wherein a further screen containing details of said route information includes road names or travel distances between specified major points on the route.

**6.** A route information providing system according to any of claims 2 to 5, wherein said input means (1) includes means for instructing to change a speed of scrolling guidance information and said scroll control means (34) controls the speed of scrolling guidance information for guiding along the route corresponding to the content of instruction inputted by said input means (1).

**7.** A route information providing system according to any of claims 3 to 6, wherein said scroll control means (34) controls a speed of scrolling at the virtual vehicle run position corresponding to the displayed map scale.

**8.** A route information providing system according to any of claims 2 to 7, wherein said scroll control means (34) controls a speed of scrolling corresponding to a type of road at which the virtual vehicle run position is located.

**9.** A route information providing system according to any of claims 3 to 8, comprising means for instructing to change a route set by said route setting means (32), wherein said route setting means changes the route if instructed to change said route while scrolling a map by said scroll control means (34).

**10.** A route information providing system according to any of claim 1 to 9, wherein the determined points on said route are points of predetermined distance intervals on the route.

**11.** A route information providing system according to any of claims 1 to 9, wherein the determined points on said route are intersections on the route.

**Patentansprüche**

**1.** System zur Bereitstellung von Routeninformationen mit:

einem Speichermedium (2), in dem Karteninformationen gespeichert sind;
einer Punkteinstelleinrichtung (10) zum Einstellen mindestens zweier beliebiger Punkte;
einer Routeneinstelleinrichtung (32) zum Einstellen einer Route zwischen den beiden eingestellten Punkten;
einer Detektionseinrichtung (4) für aktuelle Positionen zum Detektieren der wirklichen aktuellen Position eines Fahrzeugs als wirklicher aktueller Punkt;
einer Eingabeeinrichtung (1) zum Auswählen eines Leitmodus;
wobei die Eingabeeinrichtung (1) eine Navigationsanweisungseinrichtung (14) zum Anweisen eines Navigationsmodus aufweist;
einer Steuereinrichtung (3) zum Ausgeben von Leitinformationen in Bezug auf eine Route entlang der eingestellten Route;
wobei die Steuereinrichtung (3) Leitinformationen entlang der durch die Routeneinstelleinrichtung (32) eingestellten Route auf der Grundlage der durch die Detektionseinrichtung (4) für aktuelle Positionen detektierten wirklichen aktuellen Position ausgibt, wenn der Navigationsmodus angewiesen ist;
**gekennzeichnet durch**:

eine Bestimmungseinrichtung (3) für virtuelle Fahrzeugfahrtpositionen zum Bestimmen mehrerer Punkte auf der eingestellten Route als virtuelle aktuelle Punkte;
wobei die Eingabeeinrichtung (1) eine Anweisungseinrichtung (13) für virtuelle Fahrten zum Anweisen eines virtuellen Fahrtmodus aufweist; und
wobei die Steuereinrichtung (3) Leitinformationen entlang der **durch** die Routeneinstelleinrichtung (32) eingestellten Route auf der Grundlage der **durch** die Bestimmungseinrichtung für virtuelle Fahrzeugfahrtpositionen bestimmten mehreren Punkte ausgibt, wenn der virtuelle Fahrtmodus ausgewählt ist.

**2.** System zur Bereitstellung von Routeninformationen nach Anspruch 1, wobei die Steuereinrichtung (3) eine Durchlaufsteuereinrichtung (34) zum Durchlaufen von Leitinformationen durch relatives Bewegen einer aktuellen Position auf einer Route entlang der eingestellten Route aufweist, und die Durchlaufsteuereinrichtung zum Durchlaufen von Leitinformationen auf der Grundlage der detektierten wirklichen aktuellen Position dient, wenn der Navigationsmodus angewiesen ist, und die Steuereinrichtung zum Durchlaufen von Leitinformationen auf der Grundlage der eingestellten virtuellen aktuellen Position dient, wenn der virtuelle Fahrtmodus angewiesen ist.

**3.** System zur Bereitstellung von Routeninformationen nach Anspruch 2, wobei die Leitinformation eine Karte ist, die die wirkliche aktuelle Position oder die virtuelle aktuelle Position enthält.

**4.** System zur Bereitstellung von Routeninformationen nach Anspruch 3, wobei die Eingabeeinrichtung (1) eine Anzeigeanweisungseinrichtung (12) für Routeninformationen zum Anweisen der Anzeige detaillierter Routeninformationen aufweist, die durch die Routeneinstelleinrichtung (32) eingestellt sind, und die Steuereinrichtung (3) einen die detaillierten Routeninformationen enthaltenden Bildschirm anzeigt, wenn ihr die Anzeige der detaillierten Routeninformationen durch die Anzeigeanweisungseinrichtung für Routeninformationen angewiesen wird, während eine Karte durch die Durchlaufsteuereinrichtung (34) durchlaufen wird.

5. System zur Bereitstellung von Routeninformationen nach Anspruch 4, wobei ein weiterer Bildschirm, der Details der Routeninformationen enthält, Straßennamen oder Fahrentfernungen zwischen festgelegten Hauptpunkten auf der Route aufweist.

6. System zur Bereitstellung von Routeninformationen nach einem der Ansprüche 2 bis 5, wobei die Eingabeeinrichtung (1) eine Einrichtung zum Anweisen der Änderung einer Durchlaufgeschwindigkeit von Leitinformationen aufweist und die Durchlaufsteuereinrichtung (34) die Durchlaufgeschwindigkeit von Leitinformationen zum Leiten entlang der Route entsprechend dem durch die Eingabeeinrichtung (1) eingegebenen Anweisungsinhalt steuert.

7. System zur Bereitstellung von Routeninformationen nach einem der Ansprüche 3 bis 6, wobei die Durchlaufsteuereinrichtung (34) eine Durchlaufgeschwindigkeit an der virtuellen Fahrzeugfahrtposition entsprechend dem angezeigten Kartenmaßstab steuert.

8. System zur Bereitstellung von Routeninformationen nach einem der Ansprüche 2 bis 7, wobei die Durchlaufsteuereinrichtung (34) eine Durchlaufgeschwindigkeit entsprechend einer Art von Straße steuert, auf der sich die virtuelle Fahrzeugfahrtposition befindet.

9. System zur Bereitstellung von Routeninformationen nach einem der Ansprüche 3 bis 8 mit einer Einrichtung zum Anweisen der Änderung einer durch die Routeneinstelleinrichtung (32) eingestellten Route, wobei die Routeneinstelleinrichtung die Route bei Anweisung der Änderung der Route ändert, während eine Karte durch die Durchlaufsteuereinrichtung (34) durchlaufen wird.

10. System zur Bereitstellung von Routeninformationen nach einem der Ansprüche 1 bis 9, wobei die bestimmten Punkte auf der Route Punkte mit vorbestimmten Entfernungsintervallen auf der Route sind.

11. System zur Bereitstellung von Routeninformationen nach einem der Ansprüche 1 bis 9, wobei die bestimmten Punkte auf der Route Kreuzungen auf der Route sind.

**Revendications**

1. Système d'information d'itinéraire comprenant:

   un moyen de stockage (2) dans lequel sont stockées des informations de carte,
   un moyen (10) de sélection de point pour sélectionner au moins deux points quelconques;
   un moyen (32) de sélection d'itinéraire pour sélectionner un itinéraire entre les deux points sélectionnés;
   un moyen (4) de détection de la position présente, pour détecter la position présente réelle d'un véhicule en tant que point présent réel;
   un moyen d'entrée (1) pour choisir un mode de guidage;
   dans lequel ledit moyen d'entrée (1) comprend un moyen (14) d'activation de navigation pour activer un mode de navigation;
   un moyen de commande (3) pour délivrer des informations de guidage concernant un itinéraire le long de l'itinéraire sélectionné;
   dans lequel le moyen de commande (3) délivre des informations de guidage le long de l'itinéraire sélectionné à l'aide du moyen (32) de sélection d'itinéraire sur la base de la position présente réelle détectée par le moyen (4) de détection de la position présente, lorsque le mode de navigation est activé;

   **caractérisé par**

   un moyen (3) de détermination de la position de déplacement virtuelle du véhicule pour déterminer plusieurs points le long de l'itinéraire établi, en tant que points présents virtuels;
   dans lequel ledit moyen d'entrée (1) comprend un moyen (13) d'activation de déplacement virtuel pour activer un mode de déplacement virtuel; et
   dans lequel ledit moyen de commande (3) délivre des informations de guidage le long de l'itinéraire sélectionné à l'aide dudit moyen (32) de sélection d'itinéraire, sur la base de plusieurs points déterminés par ledit moyen (3) de détermination de la position de déplacement virtuelle du véhicule, lorsque le mode de déplacement virtuel a été choisi.

2. Système d'information d'itinéraire selon la revendication 1, dans lequel le moyen de commande (3) comprend un moyen de commande de défilement (34) pour faire défiler les informations de guidage par un déplacement relatif d'une position présente sur un itinéraire le long de l'itinéraire sélectionné, dans lequel ledit moyen de commande de défilement sert à faire défiler les informations de guidage sur la base de la position présente réelle détectée,lorsque le mode de navigation est activé et dans lequel ledit moyen de commande sert à faire défiler les informations de guidage sur la base de la position présente virtuelle sélectionnée lorsque le mode de déplacement virtuel est activé.

3. Système d'information d'itinéraire selon la revendication 2, dans lequel ladite information de guidage est une carte contenant la position présente réelle ou la position présente virtuelle.

4. Système d'information d'itinéraire selon la revendication 3, dans lequel ledit moyen d'entrée (1) comprend un moyen (12) d'activation d'affichage d'itinéraire pour activer l'affichage des informations détaillées d'itinéraire sélectionnées par lesdits moyens de sélection d'itinéraire (32) et ledit moyen de commande (3) affiche un écran contenant les informations d'itinéraire détaillées, lorsqu'une commande d'affichage des informations détaillées d'itinéraire lui est transmise par ledit moyen d'activation d'affichage d'itinéraire au cours du défilement d'une carte à l'aide du moyen de commande de défilement (34).

5. Système d'information d'itinéraire selon la revendication 4, dans lequel un écran supplémentaire contenant des détails desdites informations d'itinéraire contient les noms de rues ou les distances à parcourir entre des points principaux fixés de l'itinéraire.

6. Système d'information d'itinéraire selon une des revendications 2 à 5, dans lequel ledit moyen d'entrée (1) comprend un moyen pour activer un changement de vitesse de défilement des informations de guidage et le moyen (34) de commande de défilement commande la vitesse de défilement des informations de guidage pour le guidage le long du trajet correspondant au contenu d'instructions entré à l'aide du moyen d'entrée (1).

7. Système d'information d'itinéraire selon une quelconque des revendications 3 à 6, dans lequel le moyen (34) de commande défilement commande une vitesse de défilement à la position de déplacement virtuelle du véhicule correspondant à l'échelle de carte affichée.

8. Système d'information d'itinéraire selon une quelconque des revendications 2 à 7, dans lequel le moyen (34) de commande défilement commande une vitesse de défilement correspondant à un type de route sur lequel la position de déplacement virtuelle du véhicule est située.

9. Système d'information d'itinéraire selon une quelconque des revendications 3 à 8, comprenant des moyens pour activer le changement de l'itinéraire sélectionné par le moyen (32) de sélection d'itinéraire, dans lequel le moyen de sélection d'itinéraire change l'itinéraire, lorsqu'il en reçoit l'ordre au cours du balayage d'une carte à l'aide du moyen (34) de commande défilement.

10. Système d'information d'itinéraire selon une quelconque des revendications 1 à 9, dans lequel les points déterminés sur l'itinéraire sont des points situés à des intervalles de distance prédéterminés sur l'itinéraire.

11. Système d'information d'itinéraire selon une quelconque des revendications 1 à 9, dans lequel les points déterminés sur l'itinéraire sont des intersections sur l'itinéraire.

# FIG.1

**CENTRAL CONTROL SECTION** — 3

- 31 POINT RECOGNITION
- 32 ROUTE SETTING
- 33 DRAWING/DISPLAY CONTROL
- 34 SCROLL CONTROL
- 35 STORAGE

**STORAGE SECTION** — 2

**PRESENT POSITION DETECTING SECTION** — 4

**INPUT/OUTPUT SECTION** — 1

- 15 DISPLAY OUTPUT
- 16 PRINTING OUTPUT
- 17 VOICE OUTPUT
- 10 POINT SETTING
- 11 SCROLL INSTRUCTION
- 12 ROUTE INFORMATION DISPLAY INSTRUCTION
- 13 VIRTUAL RUN INSTRUCTION
- 14 NAVIGATION INSTRUCTION

# FIG.2

GRAPHIC CONTROL BUS

MAIN CPU — 40

DRAM — 43

SRAM — 42

PROGRAM ROM — 41

CLOCK FUNCTION — 51

SYSTEM BUS

SCREEN CONTROL FUNCTION — 45

VRAM — 44

MARK & CHINESE PATTERN ROM — 52

IMAGE SIGNAL CONVERTING FUNCTION — 46

AUDIO SIGNAL CONVERTING FUNCTION — 47

CONTROLLER I/O SIGNAL CONVERTING FUNCTION — 48

MEMORY DRIVE — 50

GPS RECEIVER COMMUNICATION FUNCTION — 49

DISPLAY — 15

CONTROLLER — 60

CD − ROM

IC CARD

MD

DATA MEDIUM

GPS ANTENNA

GPS RECEIVER

EP 0 660 289 B1

# FIG.3

SCREEN A

SCREEN B

SCREEN C

STARTUP SCREEN → INITIALIZE → SEARCH → DISPLAY OF ENTIRE ROUTE ⇄ VIRTUAL RUN → COURSE DESIGN

RE – SEARCH

ROUTE INFORMATION

SCREEN D

EP 0 660 289 B1

# FIG.4a

MAP DISPLAY SCREEN OF ENTIRE AREA   -
CONTAINED IN DATA BASE

| MENU | KEY |

# FIG.4b

MAIN MENU

| SEARCH MAP | ▷ |
| REGISTER POINT | ▷ |
| STARTING TIME | ▷ |
| CHANGE SEARCH CONDITION | ▷ |
| FILE | ▷ |
| FROM THE BEGINNING | ▷ |
| SET DATE/TIME | ▷ |
| CHANGE MODE | ▷ |

MAIN MENU DISPLAY SCREEN

SELECT 'FILE'

# FIG.4c

N

| FILE | |
|---|---|
| CALL | ▷ |
| REGISTER | ▷ |
| DELETE | ▷ |

| FILE | ▷ |
|---|---|
| FROM THE BEGINNING | ▷ |
| SET DATE/TIME | ▷ |
| CHANGE MODE | ▷ |

FINAL MENU DISPLAY SCREEN

# FIG.4d

SELECT 'CALL'

FILE CALLING

| No. | DATE OF REGISTRATION | ROUTE | |
|---|---|---|---|
| 1 | AUG. 31 | IN & AROUND FUJII-CHO, ANJO-CITY ↲ IN & AROUND WAKAYAMA-CITY | ▯ |
| 2 | JUL. 29 | IN & AROUND FUJII-CHO, ANJO-CITY ↲ IN & AROUND MATSUMOTO-CITY | ▯ |
| 3 | JUL. 29 | ●●●●● ↲ ●●●●● | ▯ |

FILE CALLING LIST DISPLAY SCREEN

29

# FIG.5

# FIG.6

# FIG.7

ROUTE INFORMATION SCREEN

EP 0 660 289 B1

# FIG.8

MAIN MENU

| SEARCH MAP | ▷ |
| REGISTER POINT | ▷ |
| STARTING TIME | ▷ |
| CHANGE SEARCH CONDITION | ▷ |
| FILE | ▷ |
| FROM THE BEGINNING | ▷ |
| SET DATE/TIME | ▷ |
| CHANGE MODE | ▷ |

GOAL 250KM

SPEED 0KM

START 100KM

MAIN MENU DISPLAY SCREEN

# FIG.9

400K

SET POINT

| START | GOAL | TRANSIT POINT | REGISTER | DETOUR | RETURN |

POINT MENU DISPLAY SCREEN

# FIG.10

SEARCH CONDITION MENU DISPLAY SCREEN

# FIG.11

# FIG.12

# FIG.13

```
                              ┌─────────────────────┐
                              │   SYSTEM STARTUP     │
                              └─────────────────────┘
                                         │                    ──── S113
                                         ▼
            YES          ╱─────────────────────────╲      N O
         ◄───────────── ◀    GPS RECEIVER           ▶ ─────────── S112
            S100         ╲    CONNECTED?            ╱
                          ╲───────────────────────╱
                                    │
                                    ▼                         ──── S112
         ┌──────────────────────────────────────┐
         │ DISPLAY NAVIGATION MODE STARTUP SCREEN │
         │ (MAP SCREEN WITH RESPECT TO PRESENT    │  S101
         │ POINT)                                 │
         └──────────────────────────────────────┘
                         │
                         ▼
         S102   ╱───────────────────╲       YES
              ◀    MODE SWITCHED?     ▶ ──────────────────┐
                ╲───────────────────╱                     │
                         │ NO                              │
                         ▼                                 │
         S103   ╱───────────────────╲       YES            │
              ◀    FILE CALLED?       ▶ ──────────┐        │
                ╲───────────────────╱             │        │
                         │ NO                      │        │
         NO              ▼                         │        │
       ◄──────  ╱───────────────────────╲         │        │
         S104   ◀  GOAL SET BY KEYSTROKE? ▶        │        │
                ╲───────────────────────╱         │        │
         S105            │ YES                     │        S108
              ┌──────────────────────────┐   ┌─────────────────────────┐
              │  GOAL SETTING BY KEYSTROKE │   │  FILE CALL BY KEYSTROKE  │
              └──────────────────────────┘   └─────────────────────────┘
         S106            │                         │        S109
              ┌──────────────────────────┐   ┌─────────────────────────┐
              │       SEARCH ROUTE        │   │ DISPLAY ROUTE ON MAP SCREEN │
              └──────────────────────────┘   └─────────────────────────┘
         S107            │
              ┌──────────────────────────┐
              │ DISPLAY ROUTE ON MAP SCREEN │
              └──────────────────────────┘
                         │                         │        S110
         ┌──────────────────────────────────────────────────┐
         │              GUIDANCE START                        │
         └──────────────────────────────────────────────────┘
                         │                                   S111
         ┌──────────────────────────────────────────────────┐
         │              END GUIDANCE                          │
         └──────────────────────────────────────────────────┘
```

# FIG.14

S100 ──────────────────────

S102 ──────────────────────

```
┌─────────────────────────────────────────────┐
│ DISPLAY STARTUP SCREEN OF VIRTUAL RUN MODE    │
│ FIRST: MAP OF ALL AREAS STORED IN DATA BASE   │ S112
│ SECOND OR LATER: SCREEN OF PREVIOUS END       │
└─────────────────────────────────────────────┘
```

S113
S100 ──────── ⟨ MODE SWITCHED? ⟩
YES
│ NO

S114 ⟨ FILE CALLED? ⟩
YES
│ NO

S115 ⟨ POINT SET BY KEYSTROKE? ⟩ NO
│ YES

S119 ┌──────────────────────────┐
│ FILE CALL BY KEYSTROKE   │

S116 ┌──────────────────────────┐
│ POINT SETTING BY KEYSTROKE │

S120 ┌──────────────────────────┐
│ DISPLAY ROUTE ON MAP SCREEN │

S117 ┌──────────────────────────┐
│ SEARCH ROUTE             │

S118 ┌──────────────────────────┐
│ DISPLAY ROUTE ON MAP SCREEN │

S121 ┌──────────────────────────────────────────────┐
│ COURSE SETTING                                 │
└──────────────────────────────────────────────┘

S122 ⟨ ROUTE TO BE STORED IN MEMORY? ⟩ YES
NO

S123 ┌──────────────────────────┐
│ STORE ROUTE IN MEMORY    │

36

# FIG.15a

```
┌─────────────────────────────────────────────┐
│  SETTING OF GOAL OR POINT BY KEYSTROKE        │
└─────────────────────────────────────────────┘
```

| JOY STICK MANIPULATION | | MAIN MENU KEYSTROKE |
|---|---|---|

S124 — SCROLL SCREEN BY JOY STICK MANIPULATION

S130 — DISPLAY MAIN MENU

S125 — DETERMINE POINT BY SET KEY

S131 — SELECT "MAP SEARCH"

S126 — DISPLAY POINT SET MENU

S132 — SET SEARCH CONDITION OR SELECT POINT NAME

S127 — DETERMINE SELECTED ITEM BY SET KEY

S133 — DETERMINE SEARCH CONDITION BY SET KEY

POINT SETTING NECESSARY FOR SEARCH WHOLLY ENDED?   S128
NO
YES

S134 — SWITCH TO SCROLL SCREEN BY JOY STICK MANIPULATION

REPETITION OF STEP 105

DISPLAY SEARCH CONDITION SETTING MENU AND SET CONDITION   S129

# FIG.15b

FILE CALLING BY KEYSTROKE

OPERATE MAIN MENU KEY

S135 | DISPLAY MAIN MENU

S136 | SELECT "FILE"

S137 | SELECT CALL

S138 | DISPLAY FILE CALLING LIST

S139 | SELECT FILE NO. TO BE EXECUTED FROM LIST

S140 | READ FILE FROM MEMOTY BY SET KEY

# FIG.16

# FIG.17a

N

| MAIN MENU | |
|---|---|
| SEARCH MAP | ▷ |
| REGISTER POINT | ▷ |
| STARTING TIME | ▷ |
| CHANGE SEARCH CONDITION | ▷ |
| FILE | ▷ |
| FROM THE BIGINNING | ▷ |
| SET DATE/TIME | ▷ |
| CHANGE MODE | ▷ |

AW

# FIG.17b

N

| FILE | |
|---|---|
| CALL | ▷ |
| REGISTER | ▷ |
| DELETE | ▷ |

| FILE | ▷ |
|---|---|
| FROM THE BEGINNING | ▷ |
| SET DATE/TIME | ▷ |
| CHANGE MODE | ▷ |

AW

40

# FIG.18

| No. | DATE OF REGISTRATION | ROUTE |
|-----|----------------------|-------|
| FILE CALLING | | |
| 1 | AUG. 31 | IN & AROUND FUJII-CHO ANJO -CITY ≀ IN & AROUND WAKAYAMA-CITY |
| 2 | JUL. 29 | IN & AROUND FUJII-CHO ANJO -CITY ≀ IN & AROUND MATSUMOTO-CITY |
| 3 | JUL. 29 | ●●●●● ≀ ●●●●● |

40

# FIG.19

```
┌─────────────────────────────┐
│        STARTUP SYSTEM        │
└─────────────────────────────┘
                │
                ▼
S200   ┌─────────────────────────────┐
       │       SET STARTING TIME      │
       └─────────────────────────────┘
                │
                ▼
S201   ┌─────────────────────────────┐
       │    SET STARTING POINT AND GOAL │
       └─────────────────────────────┘
                │
                ▼
S202   ┌─────────────────────────────┐
       │         SEARCH ROUTE         │
       └─────────────────────────────┘
                │
                ▼
S203 ┌───────────────────────────────────┐
     │  READ DISTANCE DATA FOR EACH ROAD NAME │
     └───────────────────────────────────┘
                │
                ▼
S204   ┌─────────────────────────────┐
       │        READ SPEED DATA       │
       └─────────────────────────────┘
                │
                ▼
S205   ┌─────────────────────────────┐
       │   CALCULATE TIME PERIOD REQUIRED │
       └─────────────────────────────┘
                │
                ▼
S206   ┌─────────────────────────────┐                    S221
       │        READ TOLL DATA        │
       └─────────────────────────────┘
                │
S207            ▼
   ╭──────────────────────────────────────────────────────╮
   │ SEARCHED RESULT DISPLAY:ENTIRE ROUTE DISPLAY SCREEN   │
   │ (DISTANCE·TIME PERIOD REQUIRED·TOLL CHARGED)          │
   ╰──────────────────────────────────────────────────────╯
                │
                ▼
S209 ◄──────────◇──────────────────────────◇
        YES   WHAT KEY STOKED?         NO
                │
               S208
```

# FIG.20

S209

S209 — VIRTUAL RUN MODE
(MAP SCREEN AROUND STARTING POINT OR FIRST PRESENT POINT)

S210 — DISPLAY PRESENT POINT MARK IN VIRTUAL
PRESENT POINT

S211 | LOCATE VIRTUAL PRESENT POINT ON ROAD

S212 | READ SPEED DATA SEARCHED

S217

S213 | READ SPEED FACTOR IN PRESENT REDUCED SCALE

S224

S214 — FIX VIRTUAL PRESENT POINT ON SCREEN, AND SCROLL MAP ACCORDING
TO SPEED DATA ALONG SEARCHED ROUTE
(CALCULATE AND DISPLAY TIME PERIOD ELAPSED, DISTANCE COVERED AND
REMAINING DISTANCE)

S215 — NAME OF FOLLOWED ROAD CHANGED?

YES

NO

S216

# FIG.21

S215

SCALE OF MAP CHANGED? — S216

YES

S217

DISPLAY CHANGE IN SCALE

NO

SCROLL SPEED CONTROLLED?

YES

S218

NO

S213

S213

SCROLL SPEED CONTROL

S214

STEP-SCROLLED? — S220

YES

NO

STEP-SCROLL

S222

S221 — "ENTIRE ROUTE SCREEN" SELECTED FROM MENU? → S207

YES

NO

S223

# FIG.22

S221

S223 — "ROUTE INFORMATION SCREEN" SELECTED FROM MENU? — YES

NO

S225

DISPLAY OF ROUTE INFORMATION SCREEN
(DISTANCE·TIME PERIOD REQUIRED·TOLL CHARGED)
+
(DISTANCE OF SECTION·TIME PERIOD ELAPSED·TOLL OF SECTION)

S224 — ROUTE TO BE STORED IN MEMORY?

NO → S214

YES

S226 — "ENTIRE ROUTE SCREEN" SELECTED FROM MEMORY? — YES → S207

NO

S227 — "VIRTUAL RUN SCREEN" SELECTED FROM MENU? — YES → S214

NO

S228 — ROUTE TO BE STORED IN MEMORY?

NO

YES

STORE IN MEMORY

# FIG.23

```
        ┌─────────────────────────────────┐
        │       STARTUP OF SYSTEM         │
        └─────────────────────────────────┘
                        │
                        ▼
S300    ┌─────────────────────────────────┐
        │    SET STARTING POINT AND GOAL  │
        └─────────────────────────────────┘
                        │
                        ▼
S301    ┌─────────────────────────────────┐
        │         SEARCH ROUTE            │
        └─────────────────────────────────┘
                        │
                        ▼
S302    (      DISPLAY SEARCHED RESULT     )
                        │
                        ▼
S303         < ANY KEY STROKED? >───── NO
                        │
                       YES
                        │
                        ▼
S304    ┌─────────────────────────────────────────────────┐
        │ DISPLAY MAP TO PROVIDE COINCIDENCE BETWEEN      │
        │ PREDETERMINED COORDINATE A ON SCREEN AND COORDINATE │
        │ OF NODE 0 (STARTING POINT)                      │
        └─────────────────────────────────────────────────┘
                        │
                        ▼                              S305
        ┌─────────────────────┐      ┌──────────────────────────┐
        │      SCROLLING      │─────▶│ HOLD ARBITRARY COORDINATE │
        └─────────────────────┘      │ OF ROUTE AT PREDETERMINED │
                        │            │ COORDINATE A OF SCREEN    │
                        ▼            └──────────────────────────┘
        ┌─────────────────────┐
        │    STOP OF SCROLL   │
        └─────────────────────┘
```

# FIG.24

```
                    ┌─────────────────────────┐
                    │  SINGLE-ACTION AUTOMATIC │
                    │         SCROLLING        │
                    └─────────────────────────┘
                                │
                                ▼
        S306            ╱◇╲
              ╱────────────────────────────╲
             ◇   SCROLL STARTING KEY STROKED?   ◇──────────────────┐
              ╲────────────────────────────╱              NO       │
                        │                                          │
                        │ YES                                      ▼
```

S306    SCROLL STARTING KEY STROKED?   NO      YES

S311   BACKWARD STROKE STARTING KEY STROKED?   NO    TO MANUAL SCROLLING    YES

S307   SEARCH THE NODE ON SEARCH ROUTE HAVING PASSED A PREDETERMINED LENGTH TOWARD GOAL AND COORDINATE OBTAINED BY INTERPOLATING NODES, FROM MAP COORDINATE COINCIDING AT PRESENT WITH COORDINATE A ON SCREEN

S308   DISPLAY MAP TO PROVIDE COINCIDENCE BETWEEN SEARCHED COORDINATE AND COORDINATE A ON SCREEN

S312   SEARCH THE NODE ON SEARCH ROUTE HAVING PASSED A PREDETERMINED LENGTH TOWARD STARTING POINT AND COORDINATE OBTAINED BY INTERPOLATING NODES, FROM MAP COORDINATE COINCIDING AT PRESENT WITH COORDINATE A ON SCREEN

S313   DISPLAY MAP TO PROVIDE COINCIDENCE BETWEEN SEARCHED COORDINATE AND COORDINATE A ON SCREEN

S309   BACKWARD SCROLL STARTING KEY STROKED?   YES    NO

S314   SCROLL STARTING KEY STROKED?   YES    NO

S310   STOP KEY STROKED?   NO    YES

S315   STOP KEY STROKED?   NO    YES

```
            ┌ ─ ─ ─ ─ ─ ─ ─ ─ ─ ┐
            │     STOP SCROLL     │
            └ ─ ─ ─ ─ ─ ─ ─ ─ ─ ┘
```

# FIG.25

```
┌──────────────────────────────┐
│      MANUAL SCROLLING         │
└──────────────────────────────┘
                │
                ▼
S316      ◇ JOY STICK MANIPULATED ◇──── NO ────────────┐
          ◇    TOWARD GOAL?        ◇                    │
                │                                       ▼
               YES                         S320  ◇ JOY STICK MANIPULATED ◇── NO ──> S305
                │                          S305  ◇ TOWARD STARTING POINT? ◇
                ▼                                       │
  ┌──────────────────────────────┐                    YES
  │ SEARCH THE NODE ON SEARCH ROUTE HAVING │            │
  │ PASSED A PREDETERMINED LENGTH TOWARD   │            ▼
S317│ GOAL AND COORDINATE OBTAINED BY      │   ┌──────────────────────────────┐
  │ INTERPOLATING NODES, FROM MAP          │   │ SEARCH THE NODE ON SEARCH ROUTE HAVING │
  │ COORDINATE COINCIDING AT PRESENT WITH  │   │ PASSED A PREDETERMINED LENGTH TOWARD   │
  │ COORDINATE A ON SCREEN                 │   │ GOAL AND COORDINATE OBTAINED BY        │
  └──────────────────────────────┘   │ INTERPOLATING NODES, FROM MAP    S321 │
                │                          │ COORDINATE COINCIDING AT PRESENT WITH  │
                ▼                          │ COORDINATE A ON SCREEN                 │
  ┌──────────────────────────────┐   └──────────────────────────────┘
  │ DISPLAY MAP TO PROVIDE        │                    │
S318│ COINCIDENCE BETWEEN SEARCHED │                    ▼
  │ COORDINATE AND COORDINATE A   │   ┌──────────────────────────────┐
  │ ON SCREEN                     │   │ DISPLAY MAP TO PROVIDE        │
  └──────────────────────────────┘   │ COINCIDENCE BETWEEN SEARCHED  S322 │
                │                          │ COORDINATE AND COORDINATE A   │
                ▼                          │ ON SCREEN                     │
S319   ◇ MANIPULATION OF JOY ◇── NO ──┐   └──────────────────────────────┘
       ◇ STICK INTERRUPTED?   ◇       │                │
                │                     │                ▼
               YES                    │   S323  ◇ MANIPULATION OF JOY ◇── NO ──┐
                │                     │         ◇ STICK INTERRUPTED?   ◇       │
                ▼                     │                │                       │
  ┌ ─ ─ ─ ─ ─ ─ ─ ─ ─ ─ ┐           │               YES                      │
  │    STOP SCROLL       │◄──────────┴────────────────┘                       │
  └ ─ ─ ─ ─ ─ ─ ─ ─ ─ ─ ┘                                                     │
```

# FIG.26

DISPLAY AREA OF MAP

( DOTTED LINES ARE OBTAINED )
( BY INTERPOLATING NODES )

ROUTE OBTAINED BY SEARCH

GOAL

NODE n

NODE n-1

NODE n-2

NODE 2

NODE 3

COORDINATE A

STARTING POINT

NODE 1

NODE 0

# FIG.27

S304

DISPLAY MAP TO PROVIDE COINCIDENCE BETWEEN PREDETERMINED COORDINATE A ON SCREEN AND COORDINATE OF NODE 0 (STARTING POINT)

S304A

DISPLAY VIRTUAL PRESENT POINT INDICATING VIRTUALLY RUNNING VEHICLE, AT COORDINATE A ON SCREEN

AUTOMATIC SCROLL SELECTED?

YES

NO

S305

# FIG.28

# FIG.29

| MAGNIFICATION | ×1 | ×1.5 | ×2 | ×3 | ×4 | ×5 | ×8 | ×16 | ×32 | ×64 | ×128 | ×256 |
|---|---|---|---|---|---|---|---|---|---|---|---|---|
| ACTUAL RUN FOR 1 HOUR | 100km | 150km | 200km | 300km | 400km | 500km | 800km | 1600km | 3200km | 6400km | 12800 km | 25600 km |
| ACTUAL RUN AT 100Km/H | 60 MIN. | 40 MIN. | 30 MIN. | 20 MIN. | 15 MIN. | 12 MIN. | 8 MIN. | 4 MIN. | 2 MIN. | 1 MIN. | 0.5 MIN. | 0.25 MIN. |
| Map of 1/10,000 | Low | Mid | High | | | | | | | | | |
| Map of 1/20,000 | | Low | Mid | High | | | | | | | | |
| Map of 1/40,000 | | | Low | Mid | High | | | | | | | |
| Map of 1/80,000 | | | | Low | Mid | High | | | | | | |
| Map of 1/160,000 | | | | | Low | Mid | High | | | | | |
| Map of 1/320,000 | | | | | | Low | Mid | High | | | | |
| Map of 1/640,000 | | | | | | | Low | Mid | High | | | |
| Map of 1/1,280,000 | | | | | | | | Low | Mid | High | | |
| Map of 1/2,560,000 | | | | | | | | | Low | Mid | High | |
| Map of 1/5,120,000 | | | | | | | | | | Low | Mid | High |

## FIG.30

ROAD NO. ① ② ③ ⑩

ROAD KIND I I II III

## FIG.31

| NODE No. | ROAD No. | ROAD KIND | SET VALUE OF VEHICLE SPEED |
|---|---|---|---|
| 0-1 | ① | I | $x_1$ |
| 1-2 | ② | I | $x_2$ |
| 2-3 | ③ | II | $y_1$ |
| • • • • | • • • • | • • • • | • • • • |
| (n-1)-n | ⑩ | III | $z_1$ |

## FIG.32

| NODE No. | ROAD No. | ROAD KIND |
|---|---|---|
| 0-1 | ① | I |
| 1-2 | ② | I |
| 2-3 | ③ | II |
| • • • • | • • • • | • • • • |
| (n-1)-n | ⑩ | III |

| ROAD KIND | SET VALUE OF VEHICLE SPEED |
|---|---|
| I | $v_I$ |
| II | $v_{II}$ |
| III | $v_{III}$ |
| IV | $v_{IV}$ |
| • • • | • • • |

# FIG.33

```
┌─────────────────────────────┐
│        SEARCH ROUTE         │  S400
└─────────────────────────────┘
              │
              ▼
┌─────────────────────────────────────────────┐
│ CALCULATE REFERENCE SPEED FOR EACH ROAD KIND │  S401
└─────────────────────────────────────────────┘
              │
              ▼
┌─────────────────────────────┐
│     DISPLAY VIRTUAL RUN ON  │  S402
│           SCREEN            │
└─────────────────────────────┘
              │
              ▼
┌─────────────────────────────────────────────┐
│ DECIDE KIND OF ROAD HAVING VIRTUAL PRESENT POINT │  S403
└─────────────────────────────────────────────┘
              │
              ▼
┌─────────────────────────────────────────────┐
│ DETECT SPEED VALUE x FOR REFERENCE TO ROAD KIND │  S404
└─────────────────────────────────────────────┘
              │
              ▼
┌─────────────────────────────┐
│        DETECT SPEED         │  S405
│   MAGNIFICATION VALUE r     │
└─────────────────────────────┘
              │
              ▼
┌─────────────────────────────────────────────┐
│      SCROLL MAP AT SPEED VALUE x X r         │  S406
└─────────────────────────────────────────────┘
              │
              ▼
         ROAD KIND CHANGED?   S407
         NO ──→ ... 
         YES
              │
              ▼
S408  SPEED MODE OPERATED TO + SIDE?        S409  SPEED MODE OPERATED TO - SIDE?
      NO ──→                                      NO ──→
      YES                                         YES
       │                                           │
       ▼                                           ▼
S410 ┌─────────────────────────┐          S411 ┌─────────────────────────┐
     │ TRANSIT SPEED NODE TO + SIDE │            │ TRANSIT SPEED NODE TO - SIDE │
     │       BY ONE STEP           │            │       BY ONE STEP           │
     └─────────────────────────┘                └─────────────────────────┘
```

# FIG.34

```
┌──────────────────────────────┐
│  START OF STEP-SCROLLED       │
└──────────────────────────────┘
              │
              ▼
S420    ◇ FORWARD STEP-SCROLLED? ◇──── YES ──────┐
              │                                    ▼
             NO          ┌──────────────────────────────────────┐
                         │ SEARCH POINT ON ROUTE, AS ADVANCED BY │ S422
                         │ PREDETERMINED DISTANCE FROM VIRTUAL   │
                         │ PRESENT POINT                         │
                         └──────────────────────────────────────┘
                                        │
                                        ▼
                         ┌──────────────────────────────────────┐
                         │    DISPLAY MAP OF SEARCHED POINT      │ S423
                         └──────────────────────────────────────┘
              │◄─────────────────────────────────────┘
              ▼
S421    ◇ BACKWARD STEP-SCROLLED? ◇──── YES ──────┐
              │                                     ▼
             NO          ┌──────────────────────────────────────┐
                         │ SEARCH POINT ON ROUTE, AS RETURNED BY │ S424
                         │ PREDETERMINED DISTANCE FROM VIRTUAL   │
                         │ PRESENT POINT                         │
                         └──────────────────────────────────────┘
                                        │
                                        ▼
                         ┌──────────────────────────────────────┐
                         │    DISPLAY MAP OF SEARCHED POINT      │ S425
                         └──────────────────────────────────────┘
              │◄─────────────────────────────────────┘
              ▼
┌──────────────────────────────┐
│    END OF STEP-SCROLLING      │
└──────────────────────────────┘
```

# FIG.35

**VIRTUAL RUN**

| | |
|---|---|
| SET DETOUR | ▷ |
| DISPLAY MARK | ▷ |
| SET STEP | ▷ |
| DISPLAY ENTIRE ROUTE | ☐ |
| ROUTE INFORMATION | ☐ |

**STEP SETTING**

| | |
|---|---|
| REFER TO INTERSECTION | ▷ |
| REFER TO IC, SA and PA | ▷ |
| REFER TO PREDETERMINED TIME PERIOD | ☐ |
| REFER TO PREDETERMINED DISTANCE | ☐ |

**REFER TO PREDETERMINED TIME PERIOD**

| 0 | 0 | : | 0 | 0 |
|---|---|---|---|---|

**REFER TO PREDETERMINED DISTANCE**

EVERY

| 0 | 0 | 0 | Km |
|---|---|---|---|

EP 0 660 289 B1

# FIG.36

# FIG.37

```
┌─────────────────────────────────────────────────┐
│    RUN AT SPEED MAGNIFICATION X SET AT PRESENT    │
└─────────────────────────────────────────────────┘
                        │
                        ▼
S450         ◇ SUB-MENU KEY STROKED? ◇ ─────► S460
                      │              NO
                     YES
```

S467

| S451 | DISPLAY SUB-MENU |
|---|---|

| S452 | SELECT "SET STEP" |
|---|---|

| S453 | SELECT REFERENCE OF STEP |
|---|---|

| S454 | DELETE SUB-MENU SIMULTANEOUSLY WITH END OF SETTING |
|---|---|

S461

| S455 | DISCRIMINATE WHAT SCROLL REFERS TO |
|---|---|

ex. "INTERSECTION"

| S456 | IN SEARCHED ROUTE, SEARCH FIRST NODE (NODE a) WITH INTERSECTION AND TOWARD GOAL FROM VIRTUAL PRESENT POINT |
|---|---|

| S457 | DISPLAY MAP FOR PREDETERMINED TIME PERIOD TO MAKE NODE a COINCIDE WITH COORDINATE A ON SCREEN |
|---|---|

```
S461 ◄─── ◇ SPEED CHANGE KEY STROKED? ◇ ─── S458
        YES                            │
                                       │ NO
                                       ▼
              ◇ SUB-MENU KEY STROKED? ◇
          YES                          NO
                      S459
```

# FIG.38

S450

S460 — SPEED CHANGE KEY STROKED? —NO→ RUN AT SPEED MAGNIFICATION X SET AT PRESENT

S458
S466 —→ YES

S455 ←—YES— FORWARD "STEP" SELECTED? — S461

NO

S462 — BACKWARD "STEP" SELECTED? —YES→ DISCRIMINATE WHAT SCROLL REFERS TO    S463

NO    ex"INTERSECTION"

S468 — SPEED MAGNIFICATION CHANGED? —    IN SEARCHED ROUTE, SEARCH FIRST NODE(NODE a) WITH INTERSECTION AND TOWARD GOAL FROM VIRTUAL PRESENT POINT    S464

(SPEED MAGNIFICATION IS SET Y)    YES

S469    X=Y    DISPLAY MAP TO MAKE NODE a COINCIDE WITH COORDINATE A ON SCREEN    S465

RUN AT SPEED MAGNIFICATION X SET AT PRESENT

S461 ←—YES— SPEED CHANGE KEY STROKED? — S466

NO

S451 ←—YES— SUB-MENU KEY STROKED? —NO→

S467

# FIG.39

S500 — READ DATA FOR EACH ROAD KIND OF NODE 0

S501 — TO MEXT NODE

S502 — ROAD KIND CHANGED?

YES

NO

SPEED DECISION

S503 — CALCULATE INTER-NODE DISTANCE

S505 — CALCULATE TIME PERIOD REQUIRED FOR SECTION: REQUIRED TIME PERIOD=DISTANCE/SPEED

S504 — ACCUMULATE INTER-NODE DISTANCES

STORE ACCUMULATED DISTANCE, REQUIRED TIME PERIOD AND SPEED DATA FOR EACH ROAD KIND — S506

CLEAR ACCUMULATED VALUE OF INTER-NODE DISTANCES — S507

S508 — ENDED TO THE LAST OF ROUTE?

NO

YES

CALCULATE ACCUMULATED VALUE OF TIME PERIODS REQUIRED FOR ENTIRE ROUTE — S509

CALCULATE ARRIVAL TIME — S510

DISPLAY REQUIRED TIME PERIOD — S511

DISPLAY ARRIVAL TIME — S512

END

# FIG.40

```
        ( SPEED DECISION )
                |
                v
S520    < EXPRESSWAY? >──── NO ──────┐
                |                     |
               YES                    v
                |          S523  < NATIONAL ROAD? >─────────────┐
                |                     |                          |
                |                     |                          |
                v                     v                          v
S521  ┌──────────────────┐  S524 ┌──────────────────┐  S527 ┌──────────────────┐
      │ DISCRIMINATE NAME │      │ READ NUMBER OF    │      │ READ NUMBER OF    │
      │ OF EXPRESSWAY     │      │ SIGNAL INTER-     │      │ SIGNAL INTER-     │
      └──────────────────┘      │ SECTIONS IN SECTION│     │ SECTIONS IN SECTION│
                |               └──────────────────┘      └──────────────────┘
                v                        |                          |
S522  ┌──────────────────┐              v                          v
      │ READ INDIVIDUAL   │  S525 ┌──────────────────┐  S528 ┌──────────────────┐
      │ SPEED DATA OF     │      │ CALCULATE NUMBER  │      │ CALCULATE NUMBER  │
      │ EXPRESSWAY        │      │ Xa OF SIGNAL      │      │ Xb OF SIGNAL      │
      └──────────────────┘      │ INTERSECTIONS FOR │      │ INTERSECTIONS FOR │
                |               │ UNIT TIME         │      │ UNIT TIME         │
                |               └──────────────────┘      └──────────────────┘
                |                        |                          |
                |                        v                          v
                |       S526 ┌──────────────────┐  S529 ┌──────────────────┐
                |           │ CALCULATE SPEED BY│      │ CALCULATE SPEED BY│
                |           │ SUBSTITUTION INTO │      │ SUBSTITUTION INTO │
                |           │ OPERATING         │      │ OPERATING         │
                |           │ FUNCTION (A)      │      │ FUNCTION (B)      │
                |           └──────────────────┘      └──────────────────┘
                |                        |                          |
                └────────────────────────┴──────────────────────────┘
                |
                v
            ( END )
```

# FIG.41a

f (Xa)　　　FUNCTION　(A) : f (Xa) $= AXa + B$

y-axis: AVERAGE SPEED (KM/H)
x-axis: NO. OF SIGNAL INTERSECTIONS PER UNIT DISTANCE (No./Km), Xa

# FIG.41b

f (Xb)　　　FUNCTION　(B) : f (Xb) $= CXb + D$

y-axis: AVERAGE SPEED (KM/H)
x-axis: NO. OF SIGNAL INTERSECTIONS PER UNIT DISTANCE (No./Km), Xb

# FIG.42

| ROAD KIND | LEGAL MAX. SPEED (Km/h) OF ROAD | AVERAGE SPEED (Km/h) |
|---|---|---|
| ROAD KIND | 100 | 85 |
| | 80 | 70 |
| | 60 | 50 |
| NATIONAL ROAD | 60 | 40 |
| | 50 | 35 |
| | 40 | 30 |
| OTHER GENERAL ROADS | 50 | 30 |
| | 40 | 20 |
| | 30 | 15 |

# FIG.43

S600 — TOTAL REQUIRED TIME PERIOD ESTIMATED FROM ROUTINE OF FIG. 39: t r

S601 — SPEED PER HOUR OF ROAD CORRESPONDING TO EACH NODE OBTAINED FROM ROUTINE OF FIG. 40: V n

S602 — ACCUMULATED REQUIRED TIME PERIOD: t=0

S603 — LOCATION OF VIRTUAL PRESENT POINT: L

S604 — L=n, n=0

S605 — DISPLAY CONTENT OF t

S606 — DISPLAY CONTENT OF t r-t

S607 — VURTUAL RUN

S608 — NODE n+1 REACHED BY VIRTUAL PRESENT POINT? — No / Yes

S609 — $t = t + \dfrac{\text{DISTANCE BETWEEN NODES } n \text{ AND } n+1}{V n}$

S610 — n=n+1

# FIG.44

S700 — TOTAL REQUIRED TIME PERIOD ESTIMATED FROM ROUTINE OF FIG. 39: $t_r$

S701 — SPEED PER HOUR OF ROAD CORRESPONDING TO EACH NODE OBTAINED FROM ROUTINE OF FIG. 40: $V_n$

S702 — INPUT SCHEDULED STARTING TIME $t_{sr}$

S703 — ACCUMULATED REQUIRED TIME PERIOD: $t=0$

S704 — LOCATION OF VIRTUAL PRESENT POINT : L

S705 — L = NODE n, AND n = 0

S706 — $t = t_{sr} + t$

S707 — DISPLAY CONTENT OF $t$

S708 — VIRTUAL RUN

S709 — NODE n+1 REACHED BY VIRTUAL PRESENT POINT ? — No / Yes

S710 — $t = t + \dfrac{\text{DISTANCE BETWEEN NODES n AND n+1}}{V_n}$

S711 — $n = n + 1$

# FIG.45

| | |
|---|---|
| S800 | TOTAL DISTANCE FROM STARTING POINT TO GOAL: K r |
| S801 | ACCUMULATED DISTANCE: K=0 |
| S802 | LOCATION OF VIRTUAL PRESENT POINT : L |
| S803 | L = NODES n, AND n=0 |
| S804 | DISPLAY CONTENT OF K |
| S805 | DISPALY CONTENT OF K r−K |
| S806 | VIRTUAL RUN |
| S807 | NODE n+1 REACHED BY VIRTUAL PRESENT POINT ?  — No |
| | Yes |
| S808 | K=K+(DISTANCE BETWEEN NODES n AND n+1) |
| S809 | n=n+1 |

# FIG.46

1010

1050

1030

INPUT/
OUTPUT
SECTION

| ROUTE SETTING MEANS | 1001 |
| ROUTE GUIDING MEANS | 1002 |
| SEARCH AREA SETTING MEANS | 1003 |
| DETOUR SEARCHING MEANS | 1004 |
| ROUTE SELECTING MEANS | 1005 |

OPERATION SECTION

PRESENT
POSITION
DETECTING
SECTION

1020

| NAVIGATION DATA | 1006 |
| ROUTE DATA | 1007 |
| DISPALY GUIDE DATA | 1008 |

INFORMATION STORAGE SECTION

# FIG.47

| NO. OF INTERSECTIONS (n) |
| INTERSECTION NO. C1 |
| DISTANCE TO NEXT INTERSECTION |
| INTERSECTION NO. C2 |
| ⋮ |
| INTERSECTION NO. Cn |

# FIG.48

# FIG.49

**CENTRAL CONTROL SECTION** 1050

1052-1 · CPU 1051 · 1058

FIRST ROM · SENSOR INPUT INTERFACE

1053 · 1057

RAM · COMMUNICATION INTERFACE

1052-2 · 1055

SECOND ROM · PICTURE PROCESSOR

1054

CLOCK · PICTURE MEMORY

1059

VOICE PROCESSOR · 1056

**PRESENT POSITION DETECTING SECTION** 1020

ABSOLUTE DIRECTION SENSOR 1024

RELATIVE DIRECTION SENSOR 1025

DISTANCE SENSOR 1026 · 1027 · 1021 · 1022 · 1023

ACCELERATION SENSOR

GPS RECEIVER 1021 · BEACON RECEIVER 1022 · DATA TRANSMITTER-RECEIVER 1023

**DATA COMMUNICATION SECTION** 1040

1041 · 1042

DATA TRANSMITTER-RECEIVER 1041 · TELEPHONE TRANSMITTER 1042

**INPUT/OUTPUT SECTION** 1010

TOUCH SWITCH · VOICE RECOGNITION MEANS · MICROPHONE · PRINTER · CARD READER

DISPLAY 1014 · 1011 · 1012 · 1012a · 1015 · 1013

SPEAKER 1016

INFORMATION STORAGE SECTION 1030

EP 0 660 289 B1

# FIG.50

S1001 | RECOGNIZE PRESENT POINT

S1002 | DISPLAY MAP OF AND AROUND PRESENT POINT

S1003 | DISPLAY PRESENT POINT

S1004 | SET GOAL

S1005 | SEARCH ROUTE

S1006 | TRACK PRESENT POINT

S1007 | SEARCH ROUTE

GOAL REACHED? S1008

YES

END GUIDANCE

NO

S1009 DETOUR SET?

NO

YES

S1010 | RE-SEARCH

# FIG.51

DETOUR SEARCH

S1011 | SET DETOUR POINT

S1012 | SET SEARCH AREA

S1013 | SEARCH INTERSECTION (C) ON ROUTE IN SEARCH AREA

S1014 | SEARCH DETOUR POINT (P) AT EACH INTERSECTION TO STORE ROUTE AND DISTANCE l

S1015 | CALCULATE DISTANCE (Lo, Ld) ON ROUTE FROM INTERSECTION OUTSIDE SEARCH AREA TO INTERSECTION INSIDE AREA

S1016 | CALCULATE TOTAL DISTANCE $Loi + li + lj + Ldj$ BY COMBINING INDIVIDUAL INTERSECTIONS

S1017 | DETERMINE THE SHORTEST COMBINATION OF i AND j

S1018 | SET $C1 \rightarrow Ci \rightarrow P \rightarrow Cj \rightarrow Cn$ AS NEW ROUTE

# FIG.52a

Cb

* b

SEARCH AREA

O   P

a *   Ca

# FIG.52b

SETTING OF
SEARCH AREA

↓

SET TWO POINTS (a, b)
NEAR ROUTE

↓

SEARCH THE NEAREST
INTERSECTION (Ca, Cb) ON
ROUTE FROM POINTS a AND b

↓

SET ROUTE BETWEEN Ca AND Cb
AS SEARCH AREA

↓

END OF AREA SETTING

# FIG.53a

SEARCH AREA

* b

○ P

a *

# FIG.53b

SETTING OF
SEARCH AREA

↓

SET ARBITRARY TWO POINTS
(a, b) TO CONTAIN DETOUR
POINT P

↓

SET RECTANGLE HAVING APEXES
a AND b ON DIAGONAL

↓

SET RECTANGULAR RANGE AS
SEARCH AREA

↓

END OF AREA SETTING

# FIG.54a

SEARCH AREA

Cb

f (r)

Cp —— r —— P

Ca f (r)

# FIG.54b

SETTING OF SEARCH AREA

SEARCH INTERSECTION Cp ON THE
NEAREST ROUTE TO DETOUR POINT P

CALCULATE DISTANCE r BETWEEN P-Cp

IMAGINE CIRCLE WITH RADIUS OF
FUNCTION f(r) HAVING VARIABLE r

SEARCH INTERSECTIONS Ca AND Cb ON
ROUTE TO COME CLOSEST TO CIRCLE

SET ROUTE BETWEEN Ca AND Cb AS
SEARCH AREA

END OF AREA SETTING

# FIG.55

```
┌─────────────────────────────┐
│    DETOUR POINT SEARCH      │
└─────────────────────────────┘
              │
              ▼
┌─────────────────────────────────────┐
│  EXECUTE SEARCH TO DETOUR POINT P FOR│
│      EACH INTERSECTION IN AREA       │
└─────────────────────────────────────┘
              │
              ▼
         SEARCH ROUTE IN AREA ?   ── NO ──┐
              │ YES                        │
              ▼                            │
┌─────────────────────────────────────┐   │
│   STORE ROUTE AND ITS DISTANCE (I)  │   │
└─────────────────────────────────────┘   │
              │
              ▼
┌─────────────────────────────┐
│       END OF SEARCH         │
└─────────────────────────────┘
```

# FIG.56

SEARCH ROUTE
SELECTION

PRESENT POINT IN AREA ?

NO

YES

SELECT ONLY FRONT
INTERSECTION FOR li

CALCULATE WITH COMBINATION
OF THE SHORTEST i AND j

SELECT ALL INTERSECTIONS IN
AREA FOR li

CALCULATE WITH COMBINATION
OF THE SHORTEST i AND j

END OF SEARCH
ROUTE SELECTION

# FIG.57

```
        ┌─────────────────┐
        │ DISPLAY  INITIAL│
        │     SCREEN      │
        └────────┬────────┘
                 │
                 ▼
        ┌─────────────────┐
        │  SET  STARTING  │
        │     POINT       │
        └────────┬────────┘
                 │
                 ▼
        ┌─────────────────┐
        │    SET  GOAL    │
        └────────┬────────┘
                 │
                 ▼
        ┌─────────────────┐
        │  SEARCH  ROUTE  │
        └────────┬────────┘
                 │
                 ▼
        ┌─────────────────┐
        │ DISPLAY  ENTIRE │
        │     ROUTE       │
        └────────┬────────┘
                 │
                 ▼
┌───────────┐  ┌──────────────┐  ┌─────────────┐
│   ROUTE   │◄►│  VIRTUAL RUN │─►│ SET  DETOUR │
│INFORMATION│  └──────────────┘  └──────┬──────┘
└───────────┘                           │
                                        ▼
                          ┌─────────────────┐  *
                          │   RE - SEARCH   │
                          └─────────────────┘
```

# FIG.58

# FIG.59a

ROAD DATA

| NO. OF ROADS | |
|---|---|
| INFORMATION OF ROAD 1 | NO. OF NODES (n) |
| | ROAD KIND |
| | LAYER NO. |
| | NODE COORDINATES($x_0$, $y_0$) |
| | ⋮ |
| | NODE COORDINATES($x_{n-1}$, $y_{n-1}$) |
| ROAD 2 | NO. OF NODES (m) |
| | ROAD KIND |
| | ⋮ |

# FIG.59b

LAYER NO. -SEARCH DISTANCE CORRESPONDING TABLE

| LAYER NO. | DISTANCE | MAIN ROAD |
|---|---|---|
| 0 | OVER 100km | EXPRESSWAY |
| 1 | 70~100km | URBAN ROAD |
| 2 | 50~70km | TOLL ROAD |
| 3 | 20~50km | NATIONAL ROAD |
| 4 | 5~20km | PREFECTURAL ROAD |
| 5 | 2~5km | LOCAL MAIN ROAD |
| 6 | 1~2km | GENERAL ROAD |
| 7 | 0~1km | LANE |

# FIG.60

# FIG.61a

POINT AT 100KM TO GOAL

STARTING POINT          PRESENT POINT

ROAD DISPLAY OF LAYER 7(DISPLAY OF ALL ROADS)

# FIG.61b POINT AT 50KM TO GOAL AT THE TIME OF
RUNNING ON ROAD OF LAYER 3

EMPHASIZED DISPLAY OF ROADS OF
LAYERS 3 OR LOWER

# FIG.61c

AT 50KM TO GOAL,
ROAD OF LAYER 4→ROAD OF LAYER 5

N

100m

50km

EMPHASIZED DISPLAY OF ROADS OF
LAYERS 5 OR LOWER

# FIG.61d

AT OR AROUND GOAL    GOAL

N

100m

ROAD DISPLAY TO LAYER 7
(DISPLAY OF ALL ROADS)

## FIG.62

ROUTINE AT GOAL INPUTTING TIME

S2011 | INPUT GOAL

S2012 | STORE GOAL COORDINATES

S2013 | STORE PRESENT POINT COORFINATES

S2014 | TRANSIT POINT TO BE INPUTTED? — NO

YES

S2015 | INPUT TRANSIT POINT

S2016 | ADD NO. OF TRANSIT POINTS, AND STORE COORDINATES OF TRANSIT POINTS

# FIG.63

ROUTINE AT RUNNING TIME

S2021 | CALCULATE PRESENT POSITION

S2022 | DETERMINE DISTANCE BETWEEN STORED COORDINATE AND PRESENT POSITION, AND SELECT THE SHORTEST DISTANCE

S2023 | RETRIEVE LAYER NO. FROM LAYER NO. - SEARCH DISTANCE CORRESPONDING TABLE

S2024 | LAYER NO. OF PRESENT ROAD > LAYER NO. — NO

YES

S2025 | LAYER NO. = LAYER NO. OF PRESENT ROAD

S2026 | DRAW MAP WHILE EMPHASIZED HIGHER-RANK ROAD FROM LAYER NO.

# FIG.64

ROAD DISPLAY AREA
OF LAYER 7

TRANSIT
POINT B

TRANSIT
POINT A

GOAL

ROAD DISPLAY AREA
OF LAYER 6

ROAD DISPLAY AREA
OF LAYER 6

ROAD DISPLAY AREA
OF LAYER 6

ROAD DISPLAY AREA
OF LAYER 6

ROAD DISPLAY AREA
OF LAYER 5

ROAD DISPLAY AREA
OF LAYER 5

ROAD DISPLAY AREA
OF LAYER 5

ROAD DISPLAY AREA
OF LAYER 5

ROAD DISPLAY AREA
OF LAYER 4

STARTING POINT